(19) Europäisches Patentamt
European Patent Office
Office européen des brevets

(11) **EP 4 056 895 A1**

(12) **EUROPÄISCHE PATENTANMELDUNG**

(43) Veröffentlichungstag:
**14.09.2022 Patentblatt 2022/37**

(21) Anmeldenummer: **21161799.8**

(22) Anmeldetag: **10.03.2021**

(51) Internationale Patentklassifikation (IPC):
*F23B 60/02* (2006.01)    *F23B 80/02* (2006.01)
*F23H 13/06* (2021.01)    *F23G 5/24* (2006.01)
*F23J 1/02* (2006.01)    *F23J 15/06* (2006.01)
*F24B 1/02* (2006.01)    *F24H 8/00* (2022.01)
*F24H 9/20* (2022.01)

(52) Gemeinsame Patentklassifikation (CPC):
**F23B 7/007; B01D 53/002; F23B 60/02;
F23B 80/02; F23G 5/24; F23H 13/06; F23J 1/02;
F23J 15/06; F24B 1/026; F24B 1/028; F24H 8/006;
F24H 9/2057**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **SL-Technik GmbH**
**5120 St. Pantaleon (AT)**

(72) Erfinder: **SOMMERAUER, Thilo**
**5120 St. Pantaleon (AT)**

(74) Vertreter: **Kuhnen & Wacker**
**Patent- und Rechtsanwaltsbüro PartG mbB**
**Prinz-Ludwig-Straße 40A**
**85354 Freising (DE)**

(54) **BIOMASSE-HEIZANLAGE ZUR BRENNSTOFFFLEXIBLEN VERFEUERUNG VON BIOGENEN BRENNSTOFFEN UND VERFAHREN ZU DEREN BETRIEB**

(57) Biomasse-Heizanlage zur brennstoffflexiblen Verfeuerung von biogenen Brennstoffen, beispielsweise Pellets und/oder Hackgut, aufweisend: einen Kessel mit einer Brenneinrichtung; einen Wärmetauscher mit einem Eintritt und einem Austritt; wobei die Brenneinrichtung eine Brennkammer mit einer Primärverbrennungszone und mit einer stromabwärts dazu vorgesehenen Sekundärverbrennungszone aufweist; wobei die Sekundärverbrennungszone der Brennkammer strömungstechnisch mit dem Eintritt des Wärmetauschers verbunden ist; eine Rezirkulationseinrichtung zum Rezirkulieren eines Teils des bei der Verfeuerung des Brennstoffs in der Brenneinrichtung erzeugten Rauchgases; wobei die Biomasse-Heizanlage derart eingerichtet ist, dass die Rezirkulationseinrichtung die Rezirkulation des Rauchgases entsprechend des Brennstoffs einstellt.

Fig. 18

**Beschreibung**

TECHNISCHES GEBIET

Die Erfindung betrifft eine Biomasse-Heizanlage zur brennstoffflexiblen Verfeuerung von biogenen Brennstoffen.

Insbesondere betrifft die Erfindung eine diverse Schieberventile für eine Biomasse-Heizanlage, sowie eine Brennstofferkennung und eine optimierte Regelung der Biomasse-Heizanlage.

STAND DER TECHNIK

Biomasse-Heizanlagen, insbesondere Biomasse-Kessel, in einem Leistungsbereich von 20 bis 500 kW sind bekannt. Biomasse kann als ein günstiger, heimischer, krisensicherer und umweltfreundlicher Brennstoff angesehen werden. Als verfeuerbare Biomasse beziehungsweise als biogene Festbrennstoffe gibt es beispielsweise Hackgut oder Pellets.

Die Pellets bestehen meistens aus Holzspänen, Sägespänen, Biomasse oder anderen Materialien, die in kleine Scheiben oder Zylinder mit einem Durchmesser von ca. 3 bis 15 mm und einer Länge von 5 bis 30 mm verdichtet worden sind. Hackgut (auch als Holzschnitzel, Holzhackschnitzel oder Hackschnitzel bezeichnet) ist mit schneidenden Werkzeugen zerkleinertes Holz.

Biomasse-Heizanlagen für Brennstoffe in Form von Pellets und Hackgut weisen im Wesentlichen einen Kessel mit einer Brennkammer (der Verbrennungsraum) und mit einer daran anschließenden Wärmetauschvorrichtung auf. Aufgrund der in vielen Ländern verschärfter gesetzlicher Vorschriften weisen einige Biomasse-Heizanlagen auch einen Feinstaubfilter auf. Regelmäßig ist weiteres verschiedenes Zubehör vorhanden, wie beispielsweise Brennstoff-Fördereinrichtungen, Regelungseinrichtungen, Sonden, Sicherheitsthermostate, Druckschalter, eine Rauchgas- bzw. Abgasrückführung, eine Kesselabreinigung und ein separater Brennstoffbehälter.

Bei der Brennkammer sind regelmäßig eine Einrichtung zur Zuführung von Brennstoff, eine Einrichtung für die Zufuhr der Luft und eine Zündvorrichtung für den Brennstoff vorgesehen. Die Einrichtung zur Zufuhr der Luft weist wiederum normalerweise ein Gebläse mit niedrigem Druck auf, um die thermodynamischen Faktoren bei der Verbrennung in der Brennkammer vorteilhaft zu beeinflussen. Eine Einrichtung zur Zuführung von Brennstoff kann beispielsweise mit einem seitlichen Einschub vorgesehen sein (sog. Quereinschubfeuerung). Dabei wird der Brennstoff von der Seite über eine Schnecke oder einen Kolben in die Brennkammer eingeschoben.

In der Brennkammer einer Festbettfeuerung ist weiter üblicherweise ein Feuerungsrost vorgesehen, auf welchem kontinuierlich der Brennstoff im Wesentlichen zugeführt und verbrannt wird. Dieser Feuerungsrost lagert den Brennstoff für die Verbrennung und weist Öffnungen, beispielsweise Schlitze, auf, die den Durchgang eines Teils der Verbrennungsluft als Primärluft zu dem Brennstoff erlauben. Weiter kann der Rost starr oder beweglich ausgeführt sein. Zudem gibt es Rostfeuerungen, bei denen die Verbrennungsluft nicht durch den Rost, sondern nur seitlich zugeführt wird.

Beim Durchströmen des Rosts mit der Primärluft wird unter anderem auch der Rost gekühlt, wodurch das Material geschont wird. Zudem kann es bei unzureichender Luftzuführung auf dem Rost zu Schlackenbildung kommen. Insbesondere Feuerungen, die mit unterschiedlichen Brennstoffen beschickt werden sollen, womit sich die vorliegende Offenbarung insbesondere beschäftigt, weisen die inhärente Problematik auf, dass die unterschiedlichen Brennstoffe unterschiedliche Ascheschmelzpunkte, Wassergehalte und unterschiedliches Brennverhalten aufweisen. Damit ist es problematisch eine Heizanlage vorzusehen, die für unterschiedliche Brennstoffe gleichermaßen gut geeignet ist. Die Brennkammer kann weiterhin regelmäßig in eine Primärverbrennungszone (unmittelbare Verbrennung des Brennstoffes auf dem Rost sowie im Gasraum darüber vor Zuführung einer weiteren Verbrennungsluft) und eine Sekundärverbrennungszone (Nachverbrennungszone des Rauchgases nach einer weiteren Luftzufuhr) eingeteilt werden. In der Brennkammer erfolgen die Trocknung, pyrolytische Zersetzung sowie die Vergasung des Brennstoffes und der Holzkohleausbrand. Um die entstehenden brennbaren Gase vollständig zu verbrennen wird zudem eine weitere Verbrennungsluft in einer oder mehreren Stufen (Sekundärluft bzw. Tertiärluft) bei Beginn der Sekundärverbrennungszone eingebracht.

Die Verbrennung der Pellets oder des Hackguts weist nach der Trocknung im Wesentlichen zwei Phasen auf. In der ersten Phase wird der Brennstoff durch hohe Temperaturen und Luft, die in die Brennkammer eingeblasen werden kann, und zumindest teilweise pyrolytisch zersetzt und in Gas umgewandelt. In der zweiten Phase treten die Verbrennung des in Gas umgewandelten (An-)Teils sowie die Verbrennung der eventuell vorhandenen restlichen Feststoffe (beispielsweise Holzkohle) ein. Insofern gast der Brennstoff aus, und das entstandene Gas sowie die darin vorhandene Holzkohle werden mitverbrannt.

Unter Pyrolyse versteht man die thermische Zersetzung eines festen Stoffes unter Sauerstoffabschluss. Die Pyrolyse lässt sich in die primäre und sekundäre Pyrolyse aufteilen. Die Produkte der primären Pyrolyse sind Pyrolysekoks und Pyrolysegase, wobei sich die Pyrolysegase in bei Raumtemperatur kondensierbare und nicht kondensierbare Gase unterteilen lassen. Die primäre Pyrolyse findet bei grob 250-450°C und die sekundäre Pyrolyse bei ungefähr 450-600°C statt. Die in weiterer Folge auftretende sekundäre Pyrolyse basiert auf der Weiterreaktion der primär gebildeten Pyrolyseprodukte. Die Trocknung und Pyrolyse finden zumindest weitgehend ohne den Einsatz von Luft statt, da flüchtige CH - Verbindungen vom Partikel austreten und daher keine Luft an die Partikeloberfläche gelangt. Die Vergasung kann als Teil der Oxidation gesehen werden; es werden die bei der pyrolytischen Zersetzung entstandenen festen, flüssigen und gasförmigen Produkte durch weitere Wärmeeinwirkung in Reaktion gebracht. Dies geschieht unter Zugabe eines Vergasungsmittels wie Luft, Sauerstoff, Wasserdampf, oder auch Kohlendioxid. Der Lambda-Wert bei der Vergasung ist größer als null und kleiner als eins. Die Vergasung findet bei rund 300 bis 850°C oder sogar bis 1.200 °C statt. Die vollständige Oxidation mit Luftüberschuss (Lambda größer 1) findet durch weitere Luftzugabe an diese Prozesse anschließend statt. Die Reaktionsendprodukte sind im Wesentlichen Kohlendioxid, Wasserdampf und Asche. Bei allen Phasen sind die Grenzen nicht starr, sondern fließend. Mittels einer am Abgasausgang des Kessels vorgesehenen Lamdasonde kann der Verbrennungsprozess vorteilhaft geregelt werden.

Allgemein ausgedrückt wird der Wirkungsgrad der Verbrennung durch die Umwandlung der Pellets in Gas erhöht, weil gasförmiger Brennstoff mit der Verbrennungsluft besser vermischt und damit vollständiger umgesetzt wird, und eine geringere Emission von Schadstoffen, weniger unverbrannte Partikel und Asche (Flugasche bzw. Staubpartikel) erzeugt werden.

Bei der Verbrennung von Biomasse entstehen gasförmige bzw. luftgetragene Verbrennungsprodukte, deren Hauptbestandteile Kohlenstoff, Wasserstoff und Sauerstoff sind. Diese können in Emissionen aus vollständiger Oxidation, aus unvollständiger Oxidation und Stoffen aus Spurenelementen bzw. Verunreinigungen unterschieden werden. Bei den Emissionen aus vollständiger Oxidation handelt es sich im Wesentlichen um Kohlenstoffdioxid ($CO_2$) und Wasserdampf ($H_2O$). Die Bildung von Kohlenstoffdioxid aus dem Kohlenstoff der Biomasse ist das Ziel der Verbrennung, da so die freigesetzte Energie vollständiger genutzt werden kann. Die Freisetzung von Kohlenstoffdioxid ($CO_2$) verhält sich weitgehend proportional zum Kohlenstoffgehalt der verbrannten Brennstoffmenge; somit ist der Kohlenstoffdioxid auch abhängig von der bereitzustellenden Nutzenergie. Eine Reduzierung kann im Wesentlichen nur durch eine Verbesserung des Wirkungsgrades erzielt werden. Ebenso entstehen Verbrennungsrückstände, wie beispielsweise Asche oder auch Schlacke.

Allerdings sind die vorstehend beschriebenen komplexen Verbrennungsvorgänge nicht einfach zu beherrschen. So besteht ganz allgemein formuliert ein Verbesserungsbedarf betreffend der Verbrennungsvorgänge in Biomasse-Heizanlagen.

Insbesondere besteht dabei ein Verbesserungsbedarf darin, Schlackenbildung in der Brennkammer zu verringern, den Wirkungsgrad und die Feinstaubwerte sowie die NOx-Emissionen zu verringern. Dabei ist es erforderlich, den unterschiedlichen Brennstoffen und Brennstoffqualitäten Rechnung zu tragen, welche bei herkömmlichen Biomasse-Heizanlagen oft stark verschlechterte Leistungs-, Wirkungsgrad- und Schadstoffwerte mit sich bringen.

In anderen Worten sind herkömmliche Biomasse-Heizanlagen oftmals nur für optimale Brennstoffe ausgelegt, und verschlechtern sich schon bei geringfügigen Abweichungen der Brennstoffqualität. Insbesondere feuchter und nicht normgemäßer Brennstoff, beispielsweise aus Selbstherstellung, kann bei herkömmlichen Biomasse-Heizanlagen zu erheblichen Problemen oder Verschlechterungen im Betrieb führen.

Dabei besteht bei herkömmlichen Biomasse-Heizanlagen zudem regelmäßig das Problem, dass diese bei Unregelmäßigkeiten in der Anlage (beispielsweise schlechter Brennstoff, Probleme im Wärmekreislauf, starke Laständerungen, Ausfälle von Komponenten der Biomasse-Heizanlage) unsicher werden und fehlerhaft arbeiten. In einigen Fällen weisen die Biomasse-Heizanlagen gar keine Mechanismen auf, um auf intern oder extern induzierte Probleme oder Fehler zu reagieren. Dies kann beispielsweise nachteilhaft zu unerwünschten Verpuffungen oder zu Ausfällen der Anlage führen.

Ebenso kann ein Anfahren bzw. Anschalten einer Biomasse-Heizanlage zu Problemen führen, da in diesem Fall der Kessel noch "kalt" ist und die Anlagenregelung noch nicht eingespielt ist.

Ebenso muss ganz allgemein das Abfahren bzw. Ausschalten der Biomasse-Heizanlage kontrolliert erfolgen, so dass ein erneutes Anfahren gut möglich ist und, dass ein kontrollierter Ausschaltzustand erreicht wird.

Neben der Luftzufuhr in die Brennkammer sind weiterhin Rauchgas- bzw. Abgasrückführungseinrichtungen bekannt, die Abgas aus dem Kessel zur Kühlung und zur erneuten Verbrennung in die Brennkammer zurückführen. Hierbei existieren im Stand der Technik üblicherweise Öffnungen in der Brennkammer zur Zufuhr von Primärluft durch eine die Brennkammer speisende Primärluftleitung, und weiterhin existieren Umfangsöffnungen in der Brennkammer zur Zufuhr von Sekundärluft aus einer Sekundärluftleitung bzw. eventuell von Frischluft. Eine Rauchgasrezirkulation kann unter oder über dem Rost erfolgen. Zudem kann die Rauchgasrezirkulation gemischt mit der Verbrennungsluft oder separat erfolgen.

Das Rauchgas bzw. das Abgas der Verbrennung in der Brennkammer wird dem Wärmetauscher zugeführt, so dass die heißen Verbrennungsgase durch den Wärmetauscher strömen, um Wärme auf ein Wärmetauschmedium zu übertragen, bei dem es sich normalerweise um Wasser bei etwa 80°C (üblicherweise zwischen 70 °C und 110°C) handelt. Der Kessel weist weiter üblicherweise einen Strahlungsteil, der in die Brennkammer integriert ist, und ein Konvektionsteil (dem daran anschließenden Wärmetauscher) auf.

Bei der Zündvorrichtung handelt es sich meistens um eine Heißlufteinrichtung oder eine Glüheinrichtung. Im ersten Fall wird die Verbrennung in Gang gesetzt, indem der Brennkammer Heißluft zugeführt wird, wobei die Heißluft durch einen elektrischen Widerstand aufgeheizt wird. Im zweiten Fall weist die Zündvorrichtung eine Glühkerze / einen Glühstab oder mehrere Glühkerzen auf, um die Pellets oder das Hackgut durch direkten Kontakt zu erhitzen, bis die Verbrennung beginnt. Die Glühkerzen können auch mit einem Motor versehen sein, um während der Zündphase mit den Pellets oder dem Hackgut in Berührung zu bleiben, und dann zurückzufahren, um nicht den Flammen ausgesetzt zu bleiben. Diese Lösung ist verschleißanfällig und aufwändig.

Grundsätzlich bestehen bei herkömmlichen Biomasse-Heizanlagen die Probleme, dass die gasförmigen oder festen Emissionen zu hoch sind, dass der Wirkungsgrad zu niedrig ist und dass die Staubemissionen zu hoch sind. Problematisch ist weiter die variierende Qualität des Brennstoffs, aufgrund des variierenden Wassergehalts und der Stückigkeit des Brennstoffs, womit ein gleichmäßiger Abbrand des Brennstoffs mit niedriger Emission erschwert wird. Insbesondere bei Biomasse-Heizanlagen, welche für verschiedene Arten von biologischem bzw. biogenem Brennstoff tauglich sein sollen, erschwert es die variierende Qualität und Konsistenz des Brennstoffs, eine durchgängig hohe Effizienz der Biomasse-Heizanlage aufrechtzuerhalten. Diesbezüglich besteht erheblicher Optimierungsbedarf.

Ein Nachteil der herkömmlichen Biomasse-Heizanlagen für Pellets kann darin bestehen, dass Pellets, die in die Brennkammer fallen, aus dem Gitter bzw. vom Rost herausrollen bzw. abrutschen können oder neben dem Rost landen können und in einen Bereich der Brennkammer gelangen können, in dem die Temperatur niedriger ist oder in dem die Luftzufuhr schlecht ist, oder sie können sogar in die unterste Kammer des Kessels bzw. den Ascheschacht fallen. Pellets, die nicht auf dem Gitter bzw. Rost verbleiben, verbrennen unvollständig und verursachen dadurch einen schlechten Wirkungsgrad, übermäßige Asche und eine bestimmte Menge an unverbrannten Schadstoffpartikeln. Dies gilt für Pellets wie auch für Hackschnitzel.

Aus diesem Grund besitzen die bekannten Biomasse-Heizanlagen für Pellets in der Nähe des Gitters bzw. Rostes und/oder des Austritts des Verbrennungsgases beispielsweise Prallbleche, um Brennstoffelemente an bestimmten Orten zurückzuhalten. Bei manchen Kesseln sind an der Innenseite der Brennkammer Absätze vorgesehen, um zu verhindern, dass Pellets in die Entaschung oder/und die unterste Kammer des Kessels hineinfallen. In diesen Prallblechen und Absätzen können sich jedoch wiederum Verbrennungsrückstände festsetzen, was die Reinigung erschwert und Luftströmungen in der Brennkammer behindern kann, was wiederum die Effizienz mindert. Zudem erfordern diese Prallbleche einen eigenen Herstellungs- und Montageaufwand. Dies gilt für Pellets wie auch für Hackschnitzel.

Biomasse-Heizanlagen für Pellets oder Hackgut weisen die folgenden weiteren Nachteile und Probleme auf.

Ein Problem besteht darin, dass eine unvollständige Verbrennung infolge der nicht gleichmäßigen Verteilung des Brennstoffes aus dem Rost und infolge der nicht optimalen Mischung von Luft und Brennstoff die Anhäufung und das Herabfallen von unverbrannter Asche durch die Lufteintrittsöffnungen, die direkt auf den Verbrennungsrost führen, oder vom Rostende in die Luftkanäle oder den Luftzufuhrbereich begünstigt.

Dies ist besonders störend und verursacht häufige Unterbrechungen, um Wartungsarbeiten wie Reinigen durchzuführen. Aus allen diesen Gründen wird in der Brennkammer normalerweise ein großer Luftüberschuss aufrechterhalten, doch dadurch nehmen die Flammentemperatur und der Wirkungsgrad der Verbrennung ab, und es kommt zu erhöhten Emissionen an unverbrannten Gasen (z.B. CO, CyHy), NOx und Staub (bspw. durch die verstärkte Aufwirbelung).

Der Einsatz eines Gebläses mit niedriger Druckhöhe liefert keine geeignete Wirbelströmung der Luft in der Brennkammer und ermöglicht deshalb auch keine optimale Mischung von Luft und Brennstoff. Generell ist es schwierig, in herkömmlichen Brennkammern eine optimale Wirbelströmung auszubilden.

Ein weiteres Problem bei den bekannten Brennern ohne Luftstufung besteht noch darin, dass die beiden Phasen, Umwandlung der Pellets in Gas und Verbrennung, mittels der gleichen Luftmenge gleichzeitig in der gesamten Brennkammer stattfinden, womit die Effizienz gesenkt wird.

Weiter besteht insbesondere auch bei den Wärmetauschern von Biomasse-Heizanlagen des Stands der Technik Optimierungsbedarf, d.h., deren Effizienz könnte gesteigert werden. Ebenso besteht Verbesserungsbedarf betreffend der oft umständlichen und ineffizienten Abreinigung von herkömmlichen Wärmetauschern.

Das gleiche gilt für die üblichen Elektrofilter von Biomasse-Heizanlagen. Deren Sprüh- und auch Abscheideelektroden setzen sich regelmäßig mit Verbrennungsrückständen zu, was die Ausbildung des elektrischen Feldes zur Filterung verschlechtert und die Effizienz der Filterung verringert.

Pellets- und Hackgutkessel werden in der Regel als Wärmeerzeuger für Gebäude oder Fernwärmenetze und zur Bereitstellung von Prozesswärme eingesetzt. Die erzeugte Wärmemenge muss dabei immer den aktuellen Bedarf der Verbraucher abdecken. Der Zweck des Regelungskonzeptes ist es somit, die Kesselleistung permanent an die Leistungsanforderung der Verbraucher anzupassen. Dies hat so zu geschehen, dass ein kontinuierlicher Anlagenbetrieb in einem Leistungsband zwischen üblicherweise 30 und 100% der Kesselnennleistung aufrechterhalten wird, keine gefährlichen Betriebszustände (z. B. Verpuffungen) auftreten, und die Emissionen unter den jeweiligen gesetzlichen Grenzwerten gehalten werden.

In herkömmlichen Anlagen werden in der Regel für unterschiedliche Brennstoffe (Pellets oder Hackgutsortimente unterschiedlicher Qualität bzw. mit unterschiedlichem Wassergehalt und Heizwert) die Parametersätze, die als Basis für die Regelung herangezogen werden, über manuell vom Nutzer zu aktivierende Voreinstellungen angepasst. Dies ist aufwändig und nicht praxisgerecht.

Es kann eine Aufgabe der Erfindung sein, eine Biomasse-Heizanlage in Hybridtechnologie vorzusehen, welche brennstoffflexibel mit Hackgut und Pellets betrieben werden kann, und welche dabei einen hohen Wirkungsgrad aufweist.

Dabei kann es ergänzend oder komplementär eine Aufgabe der Erfindung sein, eine Biomasse-Heizanlage in Hybridtechnologie vorzusehen, welche emissionsarm (v. a. bzgl. Feinstaub, CO, Kohlenwasserstoffen, NOx) ist, und welche betriebssicher ist.

Dabei können erfindungsgemäß und ergänzend folgende Überlegungen eine Rolle spielen:

Die Hybridtechnologie soll sowohl den Einsatz von Pellets als auch von Hackgut mit Wassergehalten zwischen 8 und 35 Gewichtsprozent ermöglichen.

Möglichst niedrige gasförmige Emissionen (kleiner als 50 oder 100 mg/Nm$^3$ bezogen auf trockenes Rauchgas und 13 Volumenprozent $O_2$) sollen erzielt werden.

Sehr niedrige Staubemissionen kleiner 15 mg/Nm$^3$ ohne und kleiner 5 mg/Nm$^3$ mit Elektrofilterbetrieb werden angestrebt.

Ein hoher Wirkungsgrad von bis zu 98% (bezogen auf die zugeführte Brennstoffenergie (Heizwert) soll erreicht werden.

Weiter kann man berücksichtigen, dass der Betrieb der Anlage optimiert sein soll. Beispielsweise soll eine einfache Entaschung, einfache Reinigung oder eine einfache Wartung ermöglicht werden.

Zudem sollte eine hohe Anlagenverfügbarkeit vorhanden sein.

Dabei kann/können sich die vorstehend genannte Aufgabe(n) oder die potentiellen Einzelproblemstellungen auch auf einzelne Teilaspekte der Gesamtanlage beziehen, beispielsweise auf die Brennkammer, den Wärmetauscher oder die Anlagenregelung oder Regelungen auch nur eines Teils der Biomasse-Heizanlage.

Dies vorstehend genannte(n) Aufgabe(n) wird/werden durch die Gegenstände der unabhängigen Ansprüche gelöst. Weitere Aspekte und vorteilhafte Weiterbildungen sind Gegenstand der abhängigen Ansprüche.

Gemäß einem Aspekt der vorliegenden Offenbarung Biomasse-Heizanlage zur brennstoffflexiblen Verfeuerung von biogenen Brennstoffen, beispielsweise Pellets und/oder Hackgut, vorgesehen, die Biomasse-Heizanlage aufweisend:

einen Kessel mit einer Brenneinrichtung; einen Wärmetauscher mit einem Eintritt und einem Austritt; wobei die Brenneinrichtung eine Brennkammer mit einer Primärverbrennungszone und mit einer stromabwärts dazu vorgesehenen Sekundärverbrennungszone aufweist; wobei die Sekundärverbrennungszone der Brennkammer strömungstechnisch mit dem Eintritt des Wärmetauschers verbunden ist; eine Rezirkulationseinrichtung zum Rezirkulieren eines Teils des bei der Verfeuerung des Brennstoffs in der Brenneinrichtung erzeugten Rauchgases; wobei die Biomasse-Heizanlage derart eingerichtet ist, dass die Rezirkulationseinrichtung die Rezirkulation des Rauchgases entsprechend des Brennstoffs einstellt.

Gemäß einer Weiterbildung des vorstehenden Aspekts ist eine Biomasse-Heizanlage vorgesehen, wobei die Rezirkulationseinrichtung das Folgende aufweist: ein Kombinations-Schieberventil mit zumindest zwei Schieberventilen mit jeweils einem verschiebbaren Schieberglied, mit welchem die jeweilig geöffnete Querschnittsfläche eingestellt werden kann; und einen Primärmischkanal, der stromabwärts zum Kombinations-Schieberventil vorgesehen ist; wobei die Rezirkulationseinrichtung derart eingerichtet ist, dass das Mischungsverhältnis von Primärfrischluft mit rezirkuliertem Rauchgas mittels der jeweilig geöffneten Querschnittsfläche der zumindest zwei Schieberventile des Kombinations-Schieberventils eingestellt werden kann; wobei die Mischung aus Primärfrischluft mit rezirkuliertem Rauchgas im Primärmischkanal temperiert und gemischt werden kann.

Gemäß einer Weiterbildung des vorstehenden Aspekts ist eine Biomasse-Heizanlage vorgesehen, wobei dasjenige Schieberventil des Kombinations-Schieberventils, mit welchem das rezirkulierte Rauchgas eingestellt wird, ein bewegliches Schieberglied mit einer Ausnehmung derart aufweist, dass dieses Schieberventil eine Mindest-Öffnungsquerschnittsfläche aufweist, die zumindest 10% der maximal möglichen Öffnungsquerschnittsfläche aufweist.

Gemäß einer Weiterbildung des vorstehenden Aspekts ist eine Biomasse-Heizanlage vorgesehen, wobei das Kombinations-Schieberventil zwei strömungstechnisch getrennte Einlässe aufweist.

Gemäß einer Weiterbildung des vorstehenden Aspekts ist eine Biomasse-Heizanlage vorgesehen, wobei die Rezirkulationseinrichtung ferner das Folgende aufweist: einen Rezirkulationseintritt, der stromabwärts zu dem Austritt des Wärmetauschers vorgesehen und strömungstechnisch mit diesem verbunden ist; und ein Blendenventil mit einer verstellbaren Ventilblende, welches stromabwärts zum Rezirkulationseintritt vorgesehen ist, wobei die Ventilblende des Blendenventils zumindest zwei Blendenöffnungen mit jeweils unterschiedlicher Öffnungsfläche aufweist; wobei die Biomasse-Heizanlage und das Blendenventil derart eingerichtet sind, dass der Volumenstrom des Rauchgases durch das Blendenventil mittels Verstellens der Ventilblende in Abhängigkeit zum Brennstoff eingestellt werden kann.

Gemäß einer Weiterbildung des vorstehenden Aspekts ist eine Biomasse-Heizanlage vorgesehen, wobei eine der Blendenöffnungen der Ventilblende eine erste vordefinierte Querschnittsfläche aufweist, und eine andere der Blendenöffnungen der Ventilblende eine zweite vordefinierte Querschnittsfläche aufweist, und wobei die erste Querschnittsfläche weniger als die Hälfte der zweiten Querschnittsfläche beträgt.

Gemäß einer Weiterbildung des vorstehenden Aspekts ist eine Biomasse-Heizanlage vorgesehen, wobei die Biomasse-Heizanlage derart eingerichtet ist, dass die Ventilblende des Blendenventils bei einem Brennstoff mit einem Wassergehalt von mehr als 20 Gew% der Frischsubstanz auf die Kleinste der Blendenöffnungen der Ventilblende eingestellt wird.

Gemäß einer Weiterbildung des vorstehenden Aspekts ist eine Biomasse-Heizanlage vorgesehen, diese weiter aufweisend: einen Drehrost, auf welchem der Brennstoff verfeuert werden kann; einen Temperatursensor zur Erfassung der Temperatur in der Brennkammer; wobei ein Drehvorgang des Drehrosts zum Abreinigen des Drehrosts bei einem Abfahrvorgang der Biomasse-Heizanlage durchgeführt wird, falls die erfasste Temperatur der Brennkammer unter einen vordefinierten Schwellenwert fällt.

Gemäß einer Weiterbildung des vorstehenden Aspekts ist eine Biomasse-Heizanlage vorgesehen, wobei die Biomasse-Heizanlage derart eingerichtet ist, dass der Kessel mit einem Verbrennungsluftverhältnis, das der zugeführten Primärluftmenge dividiert durch die für die Verbrennung des Brennstoffes unter stöchiometrischen Bedingungen minimal benötigte Luftmenge entspricht, von 1,2 bis 1,75, vorzugsweise von 1,3 bis 1,49, betrieben werden kann.

Gemäß einer Weiterbildung des vorstehenden Aspekts ist eine Biomasse-Heizanlage vorgesehen, wobei die Biomasse-Heizanlage mit der Rezirkulationseinrichtung derart eingerichtet ist, dass diese typischerweise mit einem Verbrennungsluftverhältnis Lambda zwischen 1,3 und 1,75 betrieben werden kann.

Gemäß einer Weiterbildung des vorstehenden Aspekts ist eine Biomasse-Heizanlage vorgesehen, die Biomasse-Heizanlage weiter aufweisend: einen Unterdrucksensor für die Brennkammer, und einen Temperatursensor für die Brennkammer, und einen Kesseltemperatursensor am Auslauf des Kessels zur Erfassung der Temperatur eines Heizungswassers des Kessels, und eine Brennstoffbetthöhenmesseinrichtung zur Messung der Höhe des Brennstoffbetts über der Oberfläche des Rosts.

Gemäß einer Weiterbildung des vorstehenden Aspekts ist eine Biomasse-Heizanlage vorgesehen, wobei die Rezirkulationseinrichtung weiter das Folgende aufweist: einen Sekundärluftkanal für die Zufuhr von Sekundärluft; einen Sekundärtemperierungskanal, wobei der Sekundärtemperierungskanal stromabwärts zu dem Sekundärluftkanal vorgesehen und mit diesem strömungstechnisch verbunden ist; und zumindest ein Schieberventil, das zwischen Sekundärtemperierungskanal und Sekundärluftkanal zum Einstellen des Volumenstroms vorgesehen ist; und wobei das Schieberventil für die Sekundärluft ein bewegliches Schieberglied mit einer Ausnehmung derart aufweist, dass dieses Schieberventil eine Mindest-Öffnungsquerschnittsfläche aufweist, die zumindest 10% der maximal möglichen Öffnungsquerschnittsfläche aufweist.

Die vorstehenden Aspekte betreffen hauptsächlich eine Vorrichtung und auch Verfahren zum brennstoffflexiblen Betrieb von Pellet- und Hackgutkesseln bzw. von Kesseln, die unterschiedliche biogene Brennstoffe einsetzen können (Hybridkessel) und die als Rostfeuerungen mit Luftstufung ausgeführt sein können. Der typische Nennleistungsbereich liegt zwischen 20 und 500 kW, kann aber auch davon abweichen. Die später in Bezug auf die Regelung angegebenen Werte beziehen sich hauptsächlich auf einen Kessel im Leistungsbereich von 70 bis 120 kW.

Die nachstehenden Aspekte betreffen im Allgemeinen eine Biomasse-Heizanlage, welche mit den vorstehenden Aspekten ausgestattet oder vorgesehen sein kann. Insofern lassen sie die nachstehenden Merkmale und Merkmalskombinationen mit den vorstehenden Aspekten kombinieren, soweit dies dem Fachmann für möglich erscheint.

Gemäß einem Aspekt der vorliegenden Offenbarung ist eine Biomasse-Heizanlage zur Verfeuerung von Brennstoff in Form von Pellets und/oder Hackgut vorgesehen, die Anlage aufweisend das Folgende: einen Kessel mit einer Brenneinrichtung; einen Wärmetauscher mit einem Eintritt und einem Austritt; wobei die Brenneinrichtung eine Brennkammer mit einer Primärverbrennungszone und mit einer stromabwärts dazu vorgesehenen Sekundärverbrennungszone aufweist; wobei die Brenneinrichtung einen Drehrost aufweist, auf welchem der Brennstoff verfeuert werden kann; wobei die Sekundärverbrennungszone der Brennkammer strömungstechnisch mit dem Eintritt des Wärmetauschers verbunden ist; wobei die Primärverbrennungszone durch eine Mehrzahl von Brennkammersteinen seitlich umfasst ist.

Die Vorteile dieser Konfiguration und auch der folgenden Aspekte ergeben sich aus der folgenden Beschreibung der zugehörigen Ausführungsbeispiele.

Gemäß einer Weiterbildung des vorstehenden Aspekts ist eine Biomasse-Heizanlage vorgesehen, die weiter das Folgende aufweist: eine Rezirkulationseinrichtung zum Rezirkulieren eines bei der Verfeuerung des Brennstoffs in der Brenneinrichtung erzeugten Rauchgases; wobei die Rezirkulationseinrichtung das Folgende aufweist: einen Rezirkulationseintritt, der stromabwärts zu dem Austritt des Wärmetauschers vorgesehen und strömungstechnisch mit diesem verbunden ist; und einen Primärluftkanal für die Zufuhr von Primärluft; eine Primärmischeinheit mit einer Primärmischkammer und einem Primärmischkanal, wobei die Primärmischkammer stromabwärts zu dem Rezirkulationseintritt und dem Primärluftkanal vorgesehen und mit diesen strömungstechnisch verbunden ist; und zumindest zwei Luftventile, die eingangsseitig an der Primärmischkammer vorgesehen sind; und einen Primärdurchtritt in die Primärverbrennungszone, der stromabwärts zu dem Primärmischkanal vorgesehen ist und mit diesem strömungstechnisch verbunden ist; wobei der Primärdurchtritt stromaufwärts zu dem Drehrost vorgesehen ist; wobei die Primärmischeinheit derart eingerichtet ist, dass diese das Rauchgas aus dem Rezirkulationseintritt mit der Primärluft aus dem Primärluftkanal mittels der zumindest zwei Luftventile der Primärmischkammer mischen kann.

Gemäß einer Weiterbildung des vorstehenden Aspekts ist eine Biomasse-Heizanlage vorgesehen, wobei der Primärmischkanal mit einem Primärmischkammeraustritt der Primärmischkammer unmittelbar verbunden ist, und der Primärmischkanal stromabwärts zu der Primärmischkammer vorgesehen ist.

Gemäß einer Weiterbildung des vorstehenden Aspekts ist eine Biomasse-Heizanlage vorgesehen, wobei der Primärmischkanal sich geradlinig erstreckt und von Anfang bis Ende eine Mindestlänge von 700 mm aufweist.

Gemäß einer Weiterbildung des vorstehenden Aspekts ist eine Biomasse-Heizanlage vorgesehen, wobei die Luftventile der Primärmischkammer Schieberventile sind.

Gemäß einer Weiterbildung des vorstehenden Aspekts ist Biomasse-Heizanlage vorgesehen, die weiter das Folgende aufweist: die Primärmischkammer ausgangsseitig einen Primärmischkammeraustritt aufweist und; die Primärmischkammer eingangsseitig zumindest zwei Ventildurchtrittsöffnungen aufweist; und die Primärmischkammer derart eingerichtet ist, dass sich die zumindest zwei Ventildurchtrittsöffnungen und der Primärmischkammeraustritt nicht durch die Primärmischkammer hindurch gegenüberliegen, so dass die durch die zumindest zwei Ventildurchtrittsöffnungen in die Primärmischkammer eintretenden Strömungen in der Primärmischkammer ab- oder umgelenkt werden.

Gemäß einer Weiterbildung des vorstehenden Aspekts ist eine Biomasse-Heizanlage vorgesehen, wobei die Rezirkulationseinrichtung zudem das Folgende aufweist: einen Sekundärluftkanal für die Zufuhr von Sekundärluft; eine Sekundärmischeinheit mit einer Sekundärmischkammer und einem Sekundärmischkanal, wobei die Sekundärmischkammer stromabwärts zu dem Rezirkulationseintritt und dem Sekundärluftkanal vorgesehen und mit diesen strömungstechnisch verbunden ist; und zumindest zwei Luftventile, die eingangsseitig an der Sekundärmischkammer vorgesehen sind; und Sekundärluftdüsen, die in den Brennkammersteinen vorgesehen sind und die seitlich in die Primärverbrennungszone gerichtet sind, und die stromabwärts zu dem Sekundärmischkanal vorgesehen und mit diesem strömungstechnisch verbunden sind; wobei die Sekundärmischeinheit derart eingerichtet ist, dass diese das Rauchgas aus dem Rezirkulationseintritt mit der Sekundärluft aus dem Sekundärluftkanal mittels der zumindest zwei Luftventile der Sekundärmischkammer mischen kann.

Gemäß einer Weiterbildung des vorstehenden Aspekts ist eine Biomasse-Heizanlage vorgesehen, wobei die Rezirkulationseinrichtung zudem das Folgende aufweist: einen Sekundärluftkanal für die Zufuhr von Sekundärluft; einen Sekundärtemperierungskanal, wobei der Sekundärtemperierungskanal stromabwärts zu dem Sekundärluftkanal vorgesehen und mit diesen strömungstechnisch verbunden ist; und zumindest ein Luftventil, das eingangsseitig an dem Sekundärtemperierungskanal zwischen Sekundärtemperierungskanal und Sekundärluftkanal vorgesehen ist; und Sekundärluftdüsen, die in den Brennkammersteinen vorgesehen sind und die seitlich in die Brennkammer gerichtet sind, und die stromabwärts zu dem Sekundärtemperierungskanal vorgesehen und mit diesem strömungstechnisch verbunden sind; wobei der Sekundärtemperierungskanal derart eingerichtet ist, dass dieser das Rauchgas vor dessen Eintritt in die Brennkammer erwärmen kann.

Gemäß einer Weiterbildung des vorstehenden Aspekts ist eine Biomasse-Heizanlage vorgesehen, die weiter das Folgende aufweist: eine elektrostatische Filtereinrichtung zu Filterung des Rauchgases einen Rauchgaskondensator, der stromabwärts zu der elektrostatischen Filtereinrichtung vorgesehen und mit dieser strömungstechnisch verbunden ist; wobei: der Rauchgaskondensator einen ersten Fluidanschluss und einen zweiten Fluidanschluss zur Beströmung des Rauchgaskondensators mit einem Wärmetauschermedium aufweist; und der Rauchgaskondensator eine Vielzahl von U-förmigen Wärmetauscherrohren aufweist, wobei die Vielzahl der U-förmigen Wärmetauscherrohre gruppenweise in einer ersten Richtung parallel zueinander angeordnet ist; wobei die Gruppen der Wärmetauscherrohre in einer zweiten Richtung parallel zueinander angeordnet sind; wobei die Gruppen der Wärmetauscherrohre strömungstechnisch zwischen dem Fluidanschluss und dem zweiten Fluidanschluss in Serie miteinander verbunden sind; die Vielzahl der U-förmigen Wärmetauscherrohre derart angeordnet ist, dass diese in Bezug auf die Durchströmung der Vielzahl von Wärmetauscherrohren mit dem Rauchgas eine Kreuz-Gegenstrom Konfiguration ausbilden.

Gemäß einer Weiterbildung des vorstehenden Aspekts ist eine Biomasse-Heizanlage vorgesehen, wobei die Vielzahl der U-förmigen Wärmetauscherrohre derart angeordnet ist, dass diese für die Durchströmung mit dem Rauchgas strömungstechnisch durchgängige Gassen in der zweiten Richtung ausbilden, wobei die Gassen eine Minimalbreite SP2 (in der ersten Richtung) von 6,0 mm +- 2 mm aufweisen.

Gemäß einer Weiterbildung des vorstehenden Aspekts ist eine Biomasse-Heizanlage vorgesehen, wobei: die Enden aller U-förmigen Wärmetauscherrohre in einem plattenförmigen Rohrbodenelement aufgenommen angeordnet sind; und eine Anzahl von 7 bis 12, vorzugsweise von 8 bis 10, Wärmetauscherrohren 493 jeweils als Gruppe in der ersten Richtung angeordnet sind; eine Anzahl von 8 bis 14, vorzugsweise 10 bis 12, Gruppen von Wärmetauscherrohren 493 in der zweiten Richtung angeordnet sind.

Gemäß einer Weiterbildung des vorstehenden Aspekts ist eine Biomasse-Heizanlage vorgesehen, wobei die U-förmigen Wärmetauscherrohre eine Maximallänge von 421 mm +- 50 mm aufweisen; und/oder aus dem Werkstoff 1.4462 (in der beim Anmeldetag dieser Anmeldung gültigen Fassung der Definition dieses Werkstoffs) bestehen.

Gemäß einer Weiterbildung des vorstehenden Aspekts ist eine Biomasse-Heizanlage vorgesehen, die weiter das Folgende aufweist: eine Ascheaustragungsschnecke zum Befördern von Verbrennungsrückständen aus dem Kessel heraus; wobei die Ascheaustragungsschnecke eine Übergangsschnecke aufweist, die in einem Übergangsschneckengehäuse drehbar aufgenommen angeordnet ist, und die einen Gegenlauf aufweist.

Gemäß einer Weiterbildung des vorstehenden Aspekts ist eine Biomasse-Heizanlage vorgesehen, wobei die Verbrennungsrückstände in dem Übergangsschneckengehäuse bei Drehung der Ascheaustragungsschnecke derart kompaktiert werden, dass die Verbrennungsrückstände zwischen die Brennkammer und den Austritt des Wärmetauschers in Bezug auf das Rauchgas zumindest weitgehend trennen oder gasdicht abdichten.

Gemäß einer Weiterbildung des vorstehenden Aspekts ist eine Biomasse-Heizanlage vorgesehen, wobei das Übergangsschneckengehäuse eine nach oben geöffnete Öffnung aufweist, die von einem Trichterelement umfasst ist, und der Gegenlauf der Übergangsschnecke derart angeordnet ist, dass die Verbrennungsrückstände bei Drehung der Ascheaustragungsschnecke nach oben aus der Öffnung ausgetragen werden.

Gemäß einer Weiterbildung des vorstehenden Aspekts ist eine Biomasse-Heizanlage vorgesehen, wobei die Ascheaustragungsschnecke auf einer Seite der Übergangsschnecke einen größeren Durchmesser aufweist, als auf der anderen Seite der Übergangsschnecke.

"Horizontal" kann vorliegend eine ebene Ausrichtung einer Achse oder eines Querschnitts in der Annahme bezeichnen, dass der Kessel ebenso horizontal aufgestellt ist, womit beispielsweise das Erdniveau die Referenz sein kann. Alternativ kann "Horizontal" vorliegend "parallel" zur Grundebene des Kessels bedeuten, so wie diese üblicherweise definiert wird. Weiter alternativ kann, insbesondere bei einem Fehlen einer Bezugsebene, "horizontal" lediglich als "Parallel" zur Verbrennungsebene des Rosts verstanden werden.

Obschon alle vorstehenden Einzelmerkmale und Details eines Aspekts der Erfindung und der Weiterbildungen dieses Aspekts in Zusammenhang mit der Biomasse-Heizanlage und der Rezirkulationseinrichtung beschrieben sind, so sind diese Einzelmerkmale und Details auch als solche unabhängig von der Biomasse-Heizanlage offenbart.

Insbesondere sind unabhängig von der Biomasse-Heizanlage eine Rauchgasrezirkulationseinrichtung, eine Übergangsschnecke, eine Primärmischeinheit, eine Sekundärmischeinheit und ein Rauchgaskondensator beschrieben und können entsprechend unabhängig davon beansprucht werden.

Insofern ist ergänzend eine Rezirkulationseinrichtung zum Rezirkulieren eines bei der Verfeuerung des Brennstoffs in einer Brenneinrichtung erzeugten Rauchgases offenbart, wobei die Rezirkulationseinrichtung das Folgende aufweist: einen Rezirkulationseintritt, der eingerichtet ist, stromabwärts zu dem Austritt des Wärmetauschers vorgesehen und strömungstechnisch mit diesem verbunden zu werden; und einen Primärluftkanal für die Zufuhr von Primärluft; eine Primärmischeinheit mit einer Primärmischkammer und einem Primärmischkanal, wobei die Primärmischkammer stromabwärts zu dem Rezirkulationseintritt und dem Primärluftkanal vorgesehen und mit diesen strömungstechnisch verbunden ist; und zumindest zwei Luftventile, die eingangsseitig an der Primärmischkammer vorgesehen sind; und einen Primärdurchtritt in die Primärverbrennungszone, der stromabwärts zu dem Primärmischkanal vorgesehen ist und mit diesem strömungstechnisch verbunden ist; wobei die Primärmischeinheit derart eingerichtet ist, dass diese das Rauchgas aus dem Rezirkulationseintritt mit der Primärluft aus dem Primärluftkanal mittels der zumindest zwei Luftventile der Primärmischkammer mischen kann.

Diese Rezirkulationseinrichtung kann mit weiteren hierin offenbarten Aspekten und Einzelmerkmalen der vorliegenden Offenbarung kombiniert werden, so wie der Fachmann dies als technisch machbar erachtet.

Die Option der Rauchgasrezirkulation kann entweder nur als Rauchgasrezirkulation unter Rost mit der Primärluft oder auch als Rauchgasrezirkulation unter und über Rost (d.h., mit Primär- und Sekundärluft) erfolgen. Die Rauchgasrezirkulation über Rost dient der verbesserten Durchmischung und der Temperaturregelung in der Brennkammer und der Brennkammersteine. Die Rauchgasrezirkulation unter Rost dient ebenfalls der Temperaturregelung (hier aber der Brennstoffbettemperaturregelung) und kann die Abbranddauer des Brennstoffbettes beeinflussen, wodurch Unterschiede zwischen z.B. Hackgut und Pellets ausgeglichen bzw. reduziert werden können.

Es ist weiter ein Rauchgaskondensator offenbart, der mit einem Abgasausgang eines Kessels verbunden werden kann; wobei: der Rauchgaskondensator einen ersten Fluidanschluss und einen zweiten Fluidanschluss zur Beströmung des Rauchgaskondensators mit einem Wärmetauschermedium aufweist; und der Rauchgaskondensator eine Vielzahl von U-förmigen Wärmetauscherrohren aufweist, wobei die Vielzahl der U-förmigen Wärmetauscherrohre gruppenweise in einer ersten Richtung parallel zueinander angeordnet ist; wobei die Gruppen der Wärmetauscherrohre in einer zweiten Richtung parallel zueinander angeordnet sind; wobei die Gruppen der Wärmetauscherrohre strömungstechnisch zwischen dem Fluidanschluss und dem zweiten Fluidanschluss in Serie miteinander verbunden sind; die Vielzahl der U-förmigen Wärmetauscherrohre derart angeordnet ist, dass diese in Bezug auf die Durchströmung der Vielzahl von Wärmetauscherrohren mit dem Rauchgas eine Kreuz-Gegenstrom Konfiguration ausbilden.

Dieser Rauchgaskondensator kann mit weiteren hierin offenbarten Aspekten und Einzelmerkmalen kombiniert werden, so wie der Fachmann dies als technisch machbar erachtet. Insbesondere ist eine vorteilhafte Kombination aus Rauchgaskondensator und elektrischer Filtereinrichtung offenbart.

Weiter eine Ascheaustragungsschnecke zum Befördern von Verbrennungsrückständen aus einem Kessel einer Biomasse-Heizanlage offenbart; wobei die Ascheaustragungsschnecke eine Übergangsschnecke aufweist, die in einem Übergangsschneckengehäuse drehbar aufgenommen angeordnet ist, und die einen Gegenlauf aufweist.

Diese Ascheaustragungsschnecke kann mit weiteren hierin offenbarten Aspekten und Einzelmerkmalen kombiniert werden, so wie der Fachmann dies als technisch machbar erachtet.

Die erfindungsgemäße Biomasse-Heizanlage wird nachfolgend in Ausführungsbeispielen und einzelnen Aspekten anhand der Figuren der Zeichnung näher erläutert:

Fig. 1     zeigt eine dreidimensionale Überblicksansicht einer Biomasse-Heizanlage gemäß einer Ausführungsform der Erfindung;

Fig. 2     zeigt eine Querschnittsansicht durch die Biomasse-Heizanlage der Fig. 1, welche entlang einer Schnittlinie SL1 vorgenommen wurde und welche aus der Seitenansicht S betrachtet dargestellt ist;

Fig. 3     zeigt ebenso eine Querschnittsansicht durch die Biomasse-Heizanlage der Fig. 1 mit einer Darstellung des Strömungsverlaufs, wobei die Quer-schnittsansicht entlang einer Schnittlinie SL1 vorgenommen wurde und aus der Seitenansicht S betrachtet dargestellt ist;

Fig. 4     zeigt eine Teilansicht der Fig. 2, die eine Brennkammergeometrie des Kessels der Fig. 2 und Fig. 3 darstellt;

Fig. 5     zeigt eine Schnittansicht durch den Kessel bzw. die Brennkammer des Kessels entlang der Vertikalschnittlinie A2 der Fig. 4;

Fig. 6     zeigt eine dreidimensionale Schnittansicht auf die Primärverbrennungs-zone der Brennkammer mit dem Drehrost der Fig. 4;

Fig. 7     zeigt entsprechend zur Fig. 6 eine Explosionsdarstellung der Brennkam-mersteine;

Fig. 8     zeigt eine Aufsicht auf den Drehrost mit Drehrostelementen von oben aus Sicht der Schnittlinie A1 der Fig. 2;

Fig. 9     zeigt den Drehrost der Fig. 2 in geschlossener Position, wobei alle Dreh-rostelemente horizontal ausgerichtet bzw. geschlossen sind;

Fig. 10     zeigt den Drehrost der Fig. 9 in dem Zustand einer Teilabreinigung des Drehrosts im Gluterhaltungsbetrieb;

Fig. 11     zeigt den Drehrost der Fig. 9 im Zustand der Universalabreinigung, welche bevorzugt während eines Anlagenstillstands durchgeführt wird;

Fig. 12     zeigt eine herausgestellte Schrägansicht einer beispielhaften Rezirkulationseinrichtung mit Brennkammersteinen, die eine Primärverbrennungszone umgeben;

Fig. 13     zeigt eine herausgestellte semitransparente Schrägansicht der Rezirkulationseinrichtung der Fig. 12;

Fig. 14     zeigt eine Seitenansicht der Rezirkulationseinrichtung 5 der Figuren 12 und 13;

Fig. 15     zeigt ein schematisches Blockdiagramm, dass den Strömungsverlauf in den jeweiligen Einzelkomponenten der Biomasse-Heizanlage und der Rezirkulationseinrichtung der Fig. 12 bis 14 zeigt;

Fig. 16     zeigt, korrespondierend zu den Außenansichten der Fig. 12 und der Fig. 13, eine Schnittansicht einer beispielhaften Primärmischkammer, sowie von zwei eingangsseitigen (Primär-) Luftventile 52 mit deren (Primär-) Ventilvorkammern 525 aus einem schrägen Sichtwinkel;

Fig. 17     zeigt, korrespondierend zu den Außenansichten der Fig. 12 und der Fig. 13, betreffend der optionalen Sekundärrezirkulation eine Schnittansicht einer beispielhaften Sekundärmischkammer, sowie von zwei eingangsseitigen (Sekundär-) Luftventilen mit deren (Sekundär-) Ventilvorkammern aus einem weiteren schrägen Sichtwinkel;

Fig. 18     zeigt eine Draufsicht auf ein Kombinations-Schieberventil, in welchem zwei Schieberventile in einem Ventilaufbau integriert vorgesehen sind;

Fig. 19    zeigt eine dreidimensionale Ansicht des Kombinations-Schieberventils der Fig. 18;

Fig. 20    zeigt eine dreidimensionale Ansicht eines Schieberventils für die Sekundärrezirkulation;

Fig. 21    zeigt eine Schnittansicht in ein (optionales) Blendenventil;

Fig. 22    zeigt eine Schnittansicht in das Blendenventil der Fig. 22 entlang eines Schnitts BS1;

Fig. 23    zeigt eine dreidimensionale Einsicht in das Blendenventil der Figuren 21 und 22;

Fig. 24    zeigt eine herausgestellte semitransparente Schrägansicht einer Rezirkula-tionseinrichtung einer weiteren Ausführungsform;

Fig. 25    zeigt ein schematisches Blockdiagramm, das den Strömungsverlauf in den jeweiligen Einzelkomponenten einer Biomasse-Heizanlage und der Rezirkulationseinrichtung der Fig. 24 gemäß einer weiteren Ausführungsform offenbart;

Fig. 26    zeigt ein Prinzipdiagramm der Biomasse-Heizanlage / des Kessels der Figuren 24 und 25 und teilweise auch der Biomasse-Heizanlage / des Kessels der Figuren 1 und 2;

## BESCHREIBUNG VON BEISPIELHAFTEN AUSFÜHRUNGSFORMEN

Im Folgenden werden verschiedene Ausführungsformen der vorliegenden Offenbarung unter Bezugnahme auf die beigefügten Zeichnungen lediglich beispielhaft offenbart. Ausführungsformen und darin verwendete Begriffe sollen jedoch nicht dazu dienen, die vorliegende Offenbarung auf bestimmte Ausführungsformen zu beschränken, und sie sollte so ausgelegt werden, dass sie verschiedene Änderungen, Äquivalente und/oder Alternativen gemäß den Ausführungsformen der vorliegenden Offenbarung beinhaltet.

Sollten in der Beschreibung allgemeinere Begriffe für in den Figuren dargestellte Merkmale oder Elemente verwendet werden, so ist beabsichtigt, dass für den Fachmann nicht nur das spezielle Merkmal oder Element in den Figuren offenbart ist, sondern auch die allgemeinere technische Lehre.

In Bezug auf die Beschreibung der Figuren können die gleichen Bezugszeichen in den einzelnen Figuren verwendet werden, um auf ähnliche oder technisch entsprechende Elemente zu verweisen. Weiter können der Übersichtlichkeit halber in einzelnen Detailoder Ausschnittsansichten mehr Elemente oder Merkmale mit Bezugszeichen dargestellt sein, als in den Überblicksansichten. Dabei ist davon auszugehen, dass diese Elemente oder Merkmale auch entsprechend in den Überblicksdarstellungen offenbart sind, auch wenn diese dort nicht explizit aufgeführt sind.

Es ist zu verstehen, dass eine Singularform eines Substantivs, das einem Gegenstand entspricht, eines oder mehrere der Dinge beinhalten kann, es sei denn, der betreffende Kontext weist eindeutig auf etwas anderes hin.

In der vorliegenden Offenbarung kann ein Ausdruck wie "A oder B", "mindestens einer von "A oder/und B" oder "einer oder mehrere von A oder/und B" alle möglichen Kombinationen von zusammen aufgeführten Merkmalen beinhalten. Ausdrücke wie "erster", "zweiter", "primär" oder "sekundär", die hierin verwendet werden, können verschiedene Elemente unabhängig von ihrer Reihenfolge und/oder Bedeutung darstellen und schränken entsprechende Elemente nicht ein. Wenn beschrieben wird, dass ein Element (z. B. ein erstes Element) "funktionsfähig" oder "kommunikativ" mit einem anderen Element (z. B. einem zweiten Element) gekoppelt oder verbunden ist, kann das Element direkt mit dem anderen Element verbunden werden oder mit dem anderen Element über ein anderes Element (z. B. ein drittes Element) verbunden werden.

Ein in der vorliegenden Offenbarung verwendeter Ausdruck "konfiguriert zu" (oder "eingerichtet") kann beispielsweise durch "geeignet für", "geeignet zu", "angepasst zu", "gemacht zu", "fähig zu" oder "entworfen zu" ersetzt werden, je nach dem technisch Möglichen. Alternativ kann in einer bestimmten Situation ein Ausdruck "Vorrichtung konfiguriert zu" oder "eingerichtet zu" bedeuten, dass die Vorrichtung zusammen mit einer anderen Vorrichtung oder Komponente arbeiten kann, oder eine entsprechende Funktion ausführen kann.

Alle Größenangaben, welche in "mm" angegeben sind, sind als ein Größenbereich von +- 1 mm um den angegebenen Wert zu verstehen, sofern nicht eine andere Toleranz oder andere Bereiche explizit angegeben sind.

Anzumerken ist, dass die vorliegenden Einzelaspekte, beispielsweise der Drehrost, die Brennkammer oder die Filtereinrichtung gesondert von bzw. getrennt von der Biomasse-Heizanlage hierin als Einzelteile oder Einzelvorrichtungen offenbart sind. Es ist dem Fachmann also klar, dass auch einzelne Aspekte oder Anlagenteile hierin auch für sich genommen offenbart sind. Vorliegend sind die einzelnen Aspekte oder Anlageteile insbesondere in den durch Klammern gekennzeichneten Unterkapiteln offenbart. Es ist vorgesehen, dass diese einzelnen Aspekte auch gesondert beansprucht werden können.

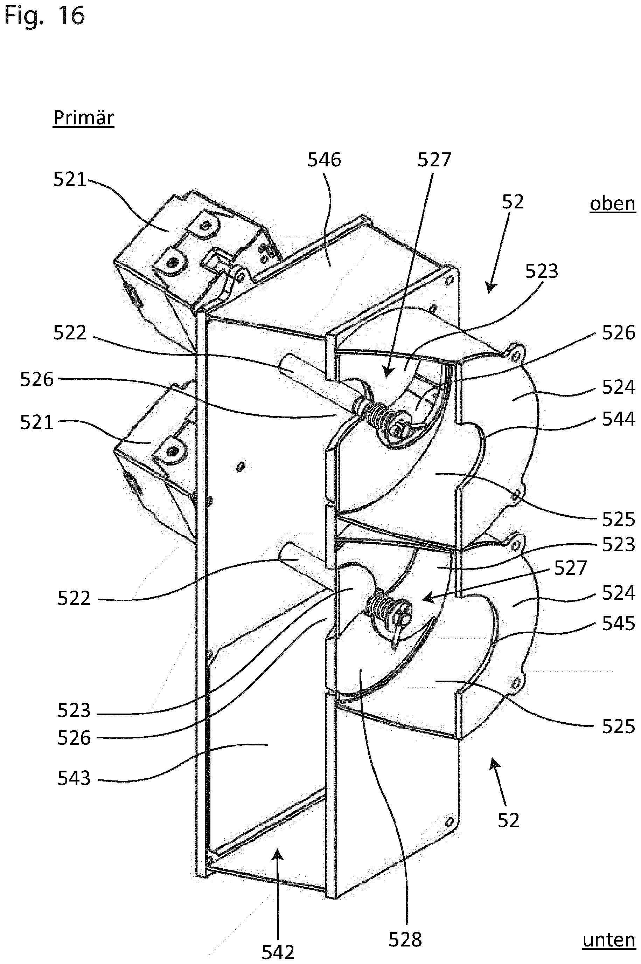

Weiter sind der Übersichtlichkeit halber in den Figuren nicht alle Merkmale und Elemente, insbesondere wenn sich diese wiederholen, einzeln bezeichnet. Es sind vielmehr die Elemente und Merkmale jeweils exemplarisch bezeichnet. Analoge oder gleiche Elemente sind dann als solche zu verstehen. Dies gilt beispielweise für die Einschubrichtung der Fig. 16a.

(Biomasse-Heizanlage)

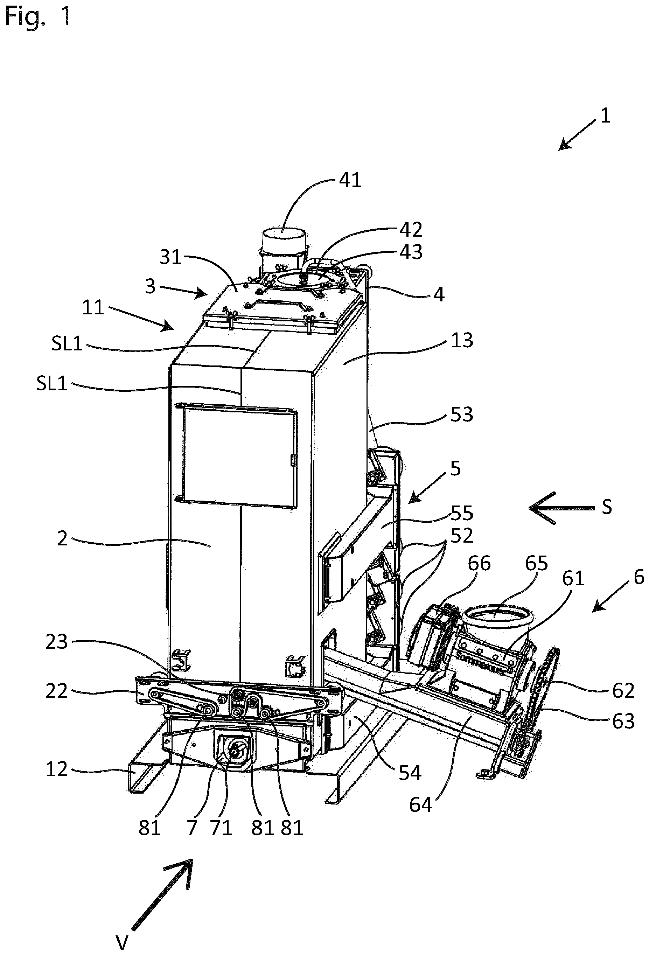

Fig. 1 zeigt eine dreidimensionale Überblicksansicht der Biomasse-Heizanlage 1 gemäß einer Ausführungsform der Erfindung.

Der Pfeil V bezeichnet in den Figuren die Vorderansicht der Anlage 1, und der Pfeil S bezeichnet in den Figuren die Seitenansicht der Anlage 1.

Die Biomasse-Heizanlage 1 weist einen Kessel 11 auf, der auf einem Kesselfuß 12 gelagert ist. Der Kessel 11 weist ein Kesselgehäuse 13, beispielsweise aus Stahlblech, auf.

Im vorderen Teil des Kessels 11 befindet sich eine Brenneinrichtung 2 (nicht dargestellt), die über eine erste Wartungsöffnung mit einem Verschluss 21 erreicht werden kann. Eine Drehmechanikhalterung 22 für einen Drehrost 25 (nicht dargestellt) lagert eine Drehmechanik 23, mit der Antriebskräfte auf Lagerachsen 81 des Drehrosts 25 übertragen werden können.

Im Mittelteil des Kessels 11 befindet sich ein Wärmetauscher 3 (nicht dargestellt), der von oben über eine zweite Wartungsöffnung mit einem Verschluss 31 erreicht werden kann.

Im Hinterteil des Kessels 11 befindet sich eine optionale Filtereinrichtung 4 (nicht dargestellt) mit einer Elektrode 44 (nicht dargestellt), die mit einer isolierenden Elektrodenhalterung 43 aufgehängt ist, und die über eine Elektrodenversorgungsleitung 42 unter Spannung gesetzt wird. Das Abgas der Biomasse-Heizanlage 1 wird über einen Abgasausgang 41 abgeführt, der der Filtereinrichtung 4 (fluidisch) strömungstechnisch nachgelagert angeordnet ist. Hier kann ein Ventilator vorgesehen sein.

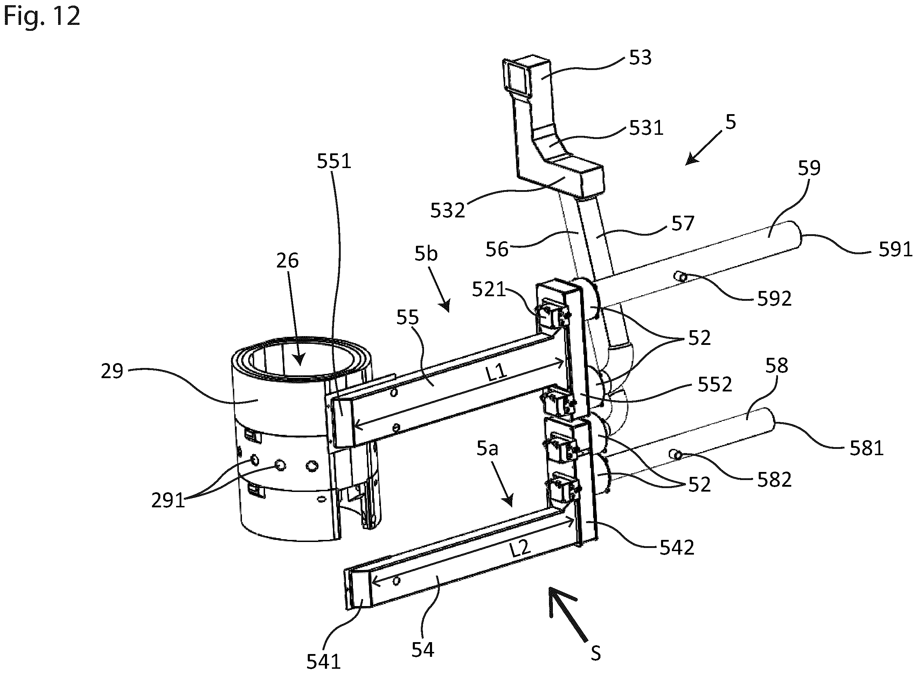

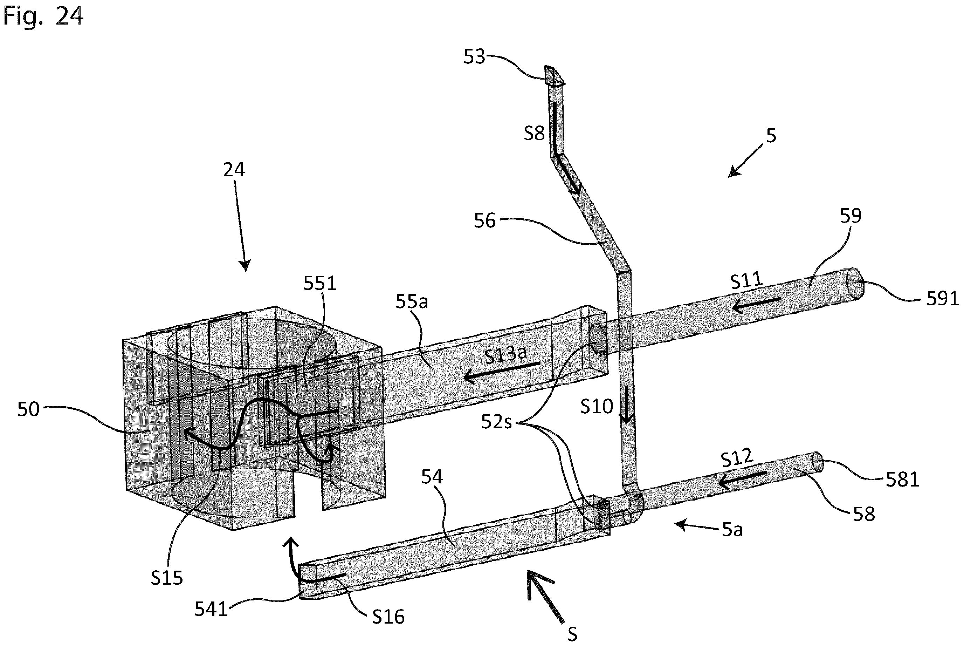

Hinter dem Kessel 11 ist eine Rezirkulationseinrichtung 5 vorgesehen, die einen Teil des Rauch- bzw. Abgases über Rezirkulationskanäle 51, 53 und 54 und Klappen 52 zur Kühlung des Verbrennungsvorgangs und Wiederverwendung beim Verbrennungsvorgang rezirkuliert. Diese Rezirkulationseinrichtung 5 wird später mit Bezug auf die Figuren 12 bis 17 im Detail erläutert. Eine analoge Rezirkulationseinrichtung 5 wird in den Figuren 24 bis 26 beschrieben.

Weiter weist die Biomasse-Heizanlage 1 eine Brennstoffzufuhr 6 auf, mit der der Brennstoff kontrolliert zu der Brenneinrichtung 2 in die Primärverbrennungszone 26 von der Seite auf den Drehrost 25 befördert wird. Die Brennstoffzufuhr 6 weist eine Zellradschleuse 61 mit einer Brennstoffzufuhröffnung 65 auf, wobei die Zellradschleuse 61 einen Antriebsmotor 66 mit einer Ansteuerelektronik aufweist. Eine von dem Antriebsmotor 66 angetriebene Achse 62 treibt eine Übersetzungsmechanik 63 an, die eine (nicht dargestellte) Brennstoff-Förderschnecke 67 antreiben kann, so dass der Brennstoff in einem Brennstoff-Zufuhrkanal 64 zu der Brenneinrichtung 2 gefördert wird.

Im unteren Teil der Biomasse-Heizanlage 1 ist eine Ascheabfuhreinrichtung 7 vorgesehen, welche eine Ascheaustragungsschnecke 71 in einem Ascheaustragungskanal aufweist, die von einem Motor 72 betrieben wird.

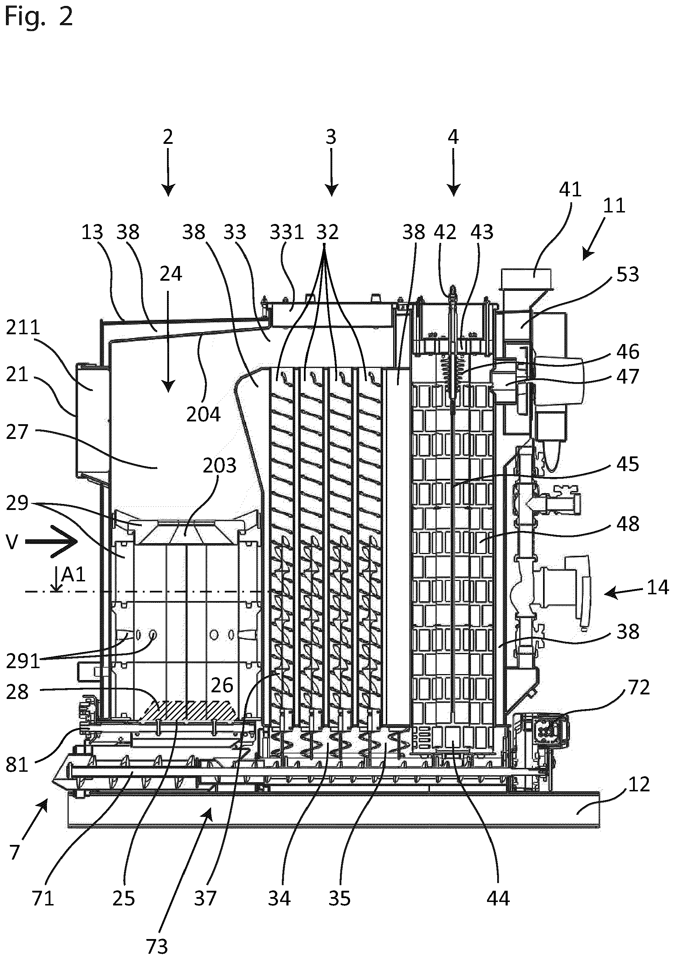

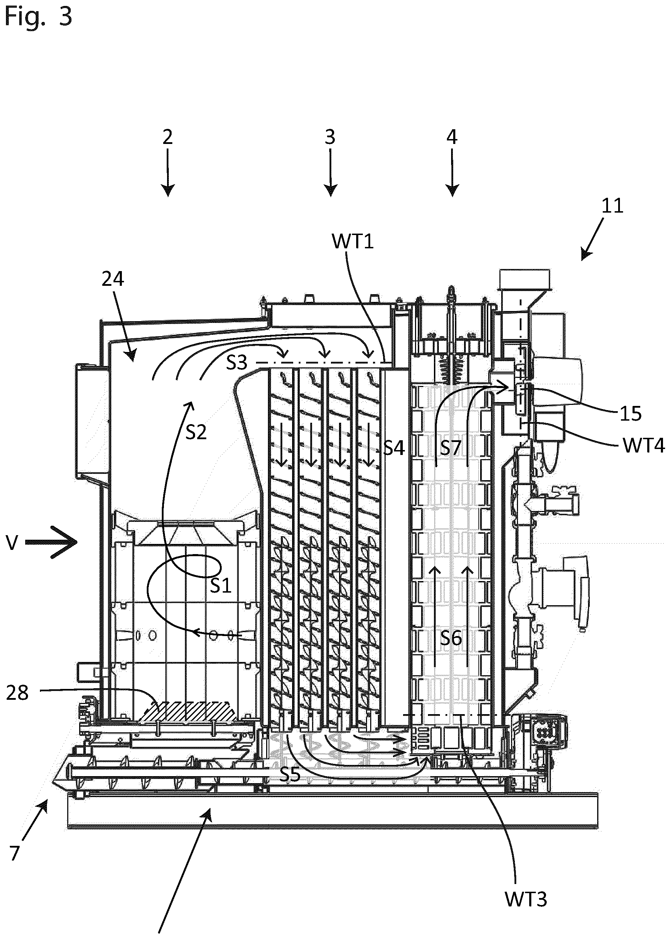

Fig. 2 zeigt nun eine Querschnittsansicht durch die Biomasse-Heizanlage 1 der Fig. 1, welche entlang einer Schnittlinie SL1 vorgenommen wurde und welche aus der Seitenansicht S betrachtet dargestellt ist. In der korrespondierenden Fig. 3, welche den gleichen Schnitt wie Fig. 2 darstellt, sind der Übersichtlichkeit halber die Strömungen des Rauchgases, und strömungstechnische Querschnitte schematisch dargestellt. Zu Fig. 3 anzumerken ist, dass einzelne Bereiche im Vergleich zu der Fig. 2 abgeblendet dargestellt sind. Dies dient nur der Übersichtlichkeit der Fig. 3 und der Sichtbarkeit der Strömungspfeile S5, S6 und S7.

Von links nach rechts sind in Fig. 2 die Brenneinrichtung 2, der Wärmetauscher 3 und eine (optionale) Filtereinrichtung 4 des Kessels 11 vorgesehen. Der Kessel 11 ist auf dem Kesselfuß 12 gelagert, und weist ein mehrwandiges Kesselgehäuse 13 auf, in welchem Wasser oder ein anderes fluides Wärmetauschmedium zirkulieren kann. Zur Zufuhr und Abfuhr des Wärmetauschmediums ist eine Wasserzirkulationseinrichtung 14 mit Pumpe, Ventilen, Leitungen, etc. vorgesehen.

Die Brenneinrichtung 2 weist eine Brennkammer 24 auf, in der im Kern der Verbrennungsprozess des Brennstoffes stattfindet. Die Brennkammer 24 weist einen, später näher erläuterten, mehrteiligen Drehrost 25 auf, auf dem das Brennstoffbett 28 aufliegt. Der mehrteilige Drehrost 25 ist mittels einer Mehrzahl von Lagerachsen 81 drehbar gelagert angeordnet.

Weiter bezugnehmend auf Fig. 2 ist die Primärverbrennungszone 26 der Brennkammer 24 durch (eine Mehrzahl von) Brennkammerstein(e)n 29 umfasst, womit die Brennkammersteine 29 die Geometrie der Primärverbrennungszone 26 definieren. Der Querschnitt der Primärverbrennungszone 26 (beispielsweise) entlang der Horizontalschnittlinie A1 ist im Wesentlichen oval (beispielsweise 380 mm +- 60mm x 320 mm +- 60 mm; dabei ist anzumerken, dass einige der vorstehenden Größenkombinationen auch einen kreisförmigen Querschnitt ergeben können). Der Pfeil S1 gibt die Strömung aus der Sekundärluftdüse 291 schematisch wieder, wobei diese Strömung (diese ist rein schematisch dargestellt) einen durch die Sekundärluftdüsen 291 induzierten Drall aufweist, um die Durchmischung des Rauchgases zu verbessern.

Dabei sind die Sekundärluftdüsen 291 derart ausgestaltet, dass diese die (durch die Brennkammersteine 29 vorgewärmte) Sekundärluft tangential in die Brennkammer 24 mit ihrem dortigen ovalen Querschnitt einführen. Damit entsteht eine wirbel- oder drallbehaftete Strömung S1, die grob spiral- oder helixförmig nach oben verläuft. In anderen Worten wird eine nach oben verlaufende und um eine Vertikalachse rotierende Spiralströmung ausgebildet.

Es sind die Sekundärluftdüsen 291 somit derart ausgerichtet, dass diese die Sekundärluft -in der horizontalen Ebene betrachtet- tangential in die Brennkammer 24 einführen. In anderen Worten sind die Sekundärluftdüsen 291 jeweils als nicht auf die Brennkammermitte ausgerichteter Eintritt für die Sekundärluft vorgesehen. Im Übrigen kann ein solcher tangentialer Eintritt auch bei einer kreisförmigen Brennkammergeometrie zum Einsatz kommen.

Dabei sind alle Sekundärluftdüsen 291 derart ausgerichtet, dass diese jeweils entweder eine rechtsdrehende oder eine linksdrehende Strömung bewirken. Insofern kann jede Sekundärluftdüse 291 zur Entstehung der Wirbelströmungen beitragen, wobei jede Sekundärluftdüse 291 eine gleichartige Ausrichtung aufweist. Zu Vorstehendem ist anzumerken, dass in Ausnahmefällen einzelne Sekundärluftdüsen 291 auch neutral (mit Ausrichtung in die Mitte) oder gegenläufig (mit entgegengesetzter Ausrichtung) angeordnet sein können, obschon dies die strömungstechnische Effizienz der Anordnung verschlechtern kann.

Die Brennkammersteine 29 bilden die Innenverkleidung der Primärverbrennungszone 26 aus, speichern Wärme und sind dem Feuer direkt ausgesetzt. Damit schützen die Brennkammersteine 29 auch das weitere Material der Brennkammer 24, beispielsweise Gusseisen, vor der direkten Flammeneinwirkung in der Brennkammer 24. Die Brennkammersteine 29 sind vorzugsweise an die Form des Rosts 25 angepasst. Die Brennkammersteine 29 weisen weiter Sekundärluft- bzw. Rezirkulationsdüsen 291 auf, die das Rauchgas in die Primärverbrennungszone 26 zur erneuten Teilnahme am Verbrennungsprozess und insbesondere zur bedarfsweisen Kühlung rezirkulieren. Die Sekundärluftdüsen 291 sind dabei nicht auf die Mitte der Primärverbrennungszone 26 ausgerichtet, sondern azentrisch ausgerichtet, um einen Drall der Strömung in der Primärverbrennungszone 26 zu bewirken (d. h., eine Drall- und Wirbelströmung, welche später näher erläutert wird). Die Brennkammersteine 29 werden später noch eingehender erläutert. Eine Isolation 311 ist am Kesselrohreintritt vorgesehen. Die ovale Querschnittsform der Primärverbrennungszone 26 (und der Düse) sowie die Länge und Lage der Sekundärluftdüsen 291 begünstigen die Ausbildung und den Erhalt einer Wirbelströmung vorzugsweise bis zur Decke der Brennkammer 24 vorteilhaft.

Eine Sekundärverbrennungszone 27 schließt sich, entweder auf der Höhe der Brennkammerdüsen 291 (funktional bzw. verbrennungstechnisch betrachtet) oder auf

Höhe der Brennkammerdüse 203 (rein strukturell bzw. baulich betrachtet) an die Primärverbrennungszone 26 der Brennkammer 26 an und definiert den Strahlungsteil der Brennkammer 26. In dem Strahlungsteil gibt das bei der Verbrennung entstandene Rauchgas seine Wärmeenergie hauptsächlich durch Wärmestrahlung insbesondere an das Wärmetauschmedium ab, welches sich in den beiden linken Kammern für das Wärmetauschmedium 38 befindet. Die entsprechenden Rauchgasströmungen sind in Fig. 3 durch die Pfeile S2 und S3 rein beispielhaft angegeben. Diese Wirbelströmungen werden eventuell auch leichte Rückströmungen oder weitere Turbulenzen beinhalten, die durch die rein schematischen Pfeile S2 und S3 nicht dargestellt werden. Das Grundprinzip der Strömungsausprägung in der Brennkammer 24 ist dem Fachmann jedoch ausgehend von den Pfeilen S2 und S3 klar bzw. berechenbar.

Durch die Sekundärlufteindüsung hervorgerufen bilden sich in der isolierten bzw. begrenzten Brennkammer 24 ausgeprägt Drall- bzw. Rotations- bzw. Wirbelströmungen aus. Dabei trägt insbesondere die ovale Brennkammergeometrie 24 dazu bei, dass sich die Wirbelströmung ungestört bzw. optimal entwickeln kann.

Nach dem Austritt aus der Düse 203, die diese Wirbelströmungen nochmals bündelt, zeigen sich kerzenflammenförmige Rotationsströmungen S2, welche vorteilhaft bis zur Brennkammerdecke 204 reichen können, womit der verfügbare Raum der Brennkammer 24 besser ausgenutzt wird. Dabei sind die Wirbelströmungen auf die Brennkammermitte A2 konzentriert und nutzen das Volumen der Sekundärverbrennungszone 27 ideal aus. Weiter mindert die Einschnürung, die die Brennkammerdüse 203 für die Wirbelströmungen darstellt, die Rotationsströmungen, womit Turbulenzen zur Verbesserung der Durchmischung des Luft- Rauchgasgemischs erzeugt werden. Es findet also eine Quervermischung durch die Einschnürung bzw. Verengung durch die Brennkammerdüse 203 statt. Der Rotationsimpuls der Strömungen bleibt allerdings zumindest teilweise auch oberhalb der Brennkammerdüse 203 erhalten, was die Ausbreitung dieser Strömungen bis zur Brennkammerdecke 204 erhält.

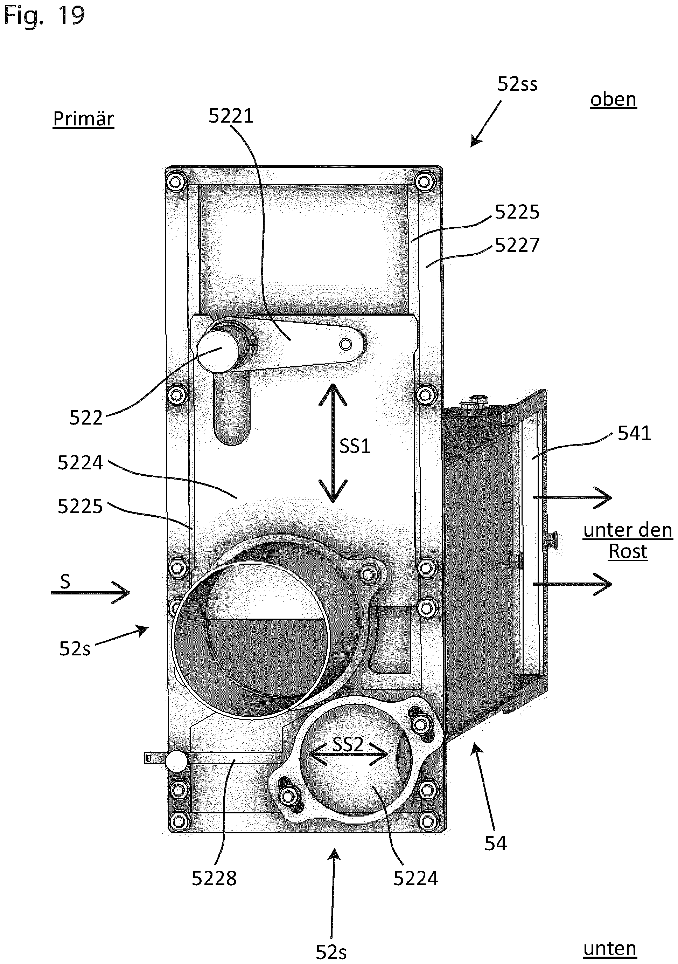

Die Sekundärluftdüsen 291 sind in den elliptischen bzw. ovalen Querschnitt der Brennkammer 24 somit derart integriert, dass sie aufgrund ihrer Länge und ihrer Ausrichtung Wirbelströmungen induzieren, die das Rauchgas-Sekundärluftgemisch in Rotation versetzen und dadurch (nochmals durch in Kombination mit der darüber positionierten Brennkammerdüse 203 verbessert) eine vollständige Verbrennung bei minimalem Luftüberschuss und somit maximalem Wirkungsgrad ermöglichen. Dies ist auch in den Figuren 19 bis 21 illustriert.

Dabei ist die Sekundärluftzufuhr derart gestaltet ist, dass diese die heißen Brennkammersteine 29 durch Umströmung derselben kühlt und die Sekundärluft im Gegenzug selbst vorgewärmt wird, wodurch die Ausbrandgeschwindigkeit der Rauchgase beschleunigt wird und die Vollständigkeit des Ausbrandes auch bei extremer Teillast (z. B. 30% der Nennlast) sichergestellt wird.

Die erste Wartungsöffnung 21 ist mit einem Dämmmaterial, beispielsweise Vermiculite™, isoliert. Die vorliegende Sekundärverbrennungszone 27 ist derart eingerichtet, dass ein Ausbrand des Rauchgases gewährleistet wird. Die spezielle geometrische Ausgestaltung der Sekundärverbrennungszone 27 wird später noch eingehender erläutert.

Nach der Sekundärverbrennungszone 27 strömt das Rauchgas in die Wärmetauscheinrichtung 3, welche ein Bündel von parallel zueinander vorgesehenen Kesselrohren 32 aufweist. In den Kesselrohren 32 strömt das Rauchgas nun abwärts, wie in Fig. 3 durch die Pfeile S4 angegeben. Man kann diesen Teil der Strömung auch als Konvektionsteil bezeichnen, da die Wärmeabgabe des Rauchgases im Wesentlichen an den Kesselrohrwänden über eine erzwungene Konvektion erfolgt. Durch die im Kessel 11 verursachten Temperaturgradienten im Wärmetauschermedium, beispielsweise im Wasser, stellt sich eine natürliche Konvektion des Wassers ein, welche eine Durchmischung des Kesselwassers begünstigt.

In den Kesselrohren 32 sind Federturbulatoren 36 und Spiral- bzw. Bandturbulatoren 37 angeordnet, um den Wirkungsgrad der Wärmetauscheinrichtung 4 zu verbessern. Dies wird später noch eingehender erläutert werden.

Der Ausgang der Kesselrohre 32 mündet über den Wendekammereintritt 34 bzw. -einlass in die Wendekammer 35. Dabei ist die Wendekammer 35 derart gegenüber der Brennkammer 24 abgedichtet, dass kein Rauchgas aus der Wendekammer 35 direkt zurück in die Brennkammer 24 strömen kann. Allerdings ist trotzdem ein gemeinsamer (Ab-)Transportweg für die Verbrennungsrückstände vorgesehen, die im gesamten Strömungsbereich des Kessels 11 anfallen können. Falls die Filtereinrichtung 4 nicht vorgesehen ist, wird das Rauchgas wieder im Kessel 11 nach oben abgeführt. Der andere Fall der optionalen Filtereinrichtung 4 ist in den Fig. 2 und 3 dargestellt. Dabei wird das Rauchgas nach der Wendekammer 35 wieder nach oben in die Filtereinrichtung 4 eingeleitet (vgl. Pfeile S5), welche vorliegend beispielhaft eine elektrostatische Filtereinrichtung 4 ist. Dabei können am Eintritt 44 der Filtereinrichtung 4 Strömungsblenden vorgesehen sein, die die Einströmung des Rauchgases in den Filter vergleichmäßigen.

Elektrostatische Staubfilter, oder auch Elektroabscheider genannt, sind Einrichtungen zur Abscheidung von Partikeln aus Gasen, die auf dem elektrostatischen Prinzip beruhen. Diese Filtereinrichtungen werden insbesondere zur elektrischen Reinigung von Abgasen verwendet. Bei Elektrofiltern werden Staubteilchen durch eine Koronaentladung einer Sprühelektrode elektrisch aufgeladen und zur entgegengesetzt aufgeladenen Elektrode (Niederschlagselektrode) gezogen. Die Koronaentladung findet auf einer dafür geeigneten, geladenen Hochspannungselektrode (auch als Sprühelektrode bezeichnet) im Inneren des Elektrofilters statt. Die (Sprüh-) Elektrode ist bevorzugt mit herausragenden Spitzen und eventuell scharfen Kanten ausgeführt, weil dort die Dichte der Feldlinien und damit auch die elektrische Feldstärke am größten und somit die Koronaentladung begünstigt ist. Die gegengesetzte Elektrode (Niederschlagselektrode) besteht für gewöhnlich aus einem geerdeten Abgasrohrabschnitt, der um die Elektrode gelagert ist. Der Abscheidungsgrad eines Elektrofilters ist insbesondere von der Verweilzeit der Abgase im Filtersystem und der Spannung zwischen Sprüh- und Abscheidungselektrode abhängig. Die dafür notwendige gleichgerichtete Hochspannung wird von einer Hochspannungserzeugungseinrichtung (nicht dargestellt) bereitgestellt. Die Hochspannungserzeugungsanlage und die Halterung für die Elektrode sind vor Staub und Verschmutzung zu schützen, um ungewollte Kriechströme zu vermeiden und die Standzeit der Anlage 1 zu verlängern.

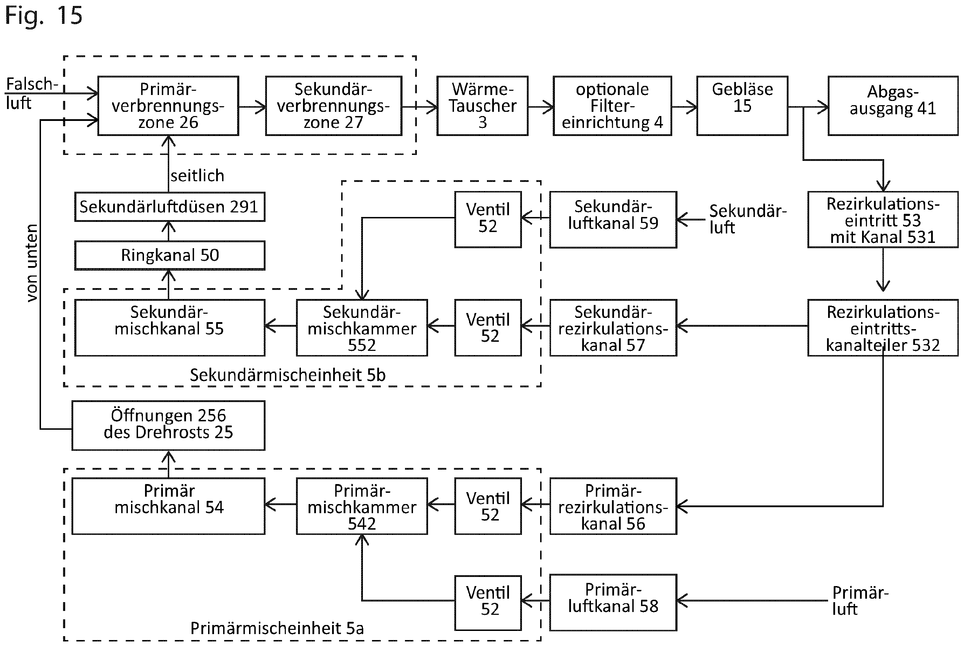

Wie in Fig. 2 gezeigt, ist eine stabförmige Elektrode 45 (welche vorzugsweise wie eine längliche, plattenförmige Stahlfeder ausgestaltet ist, vgl. Fig. 15) in etwa mittig in einem annähernd kaminförmigen Innenraum der Filtereinrichtung 4 gehalten. Die Elektrode 45 besteht zumindest weitgehend aus einem hochwertigen Federstahl oder Chromstahl und ist von einer Elektrodenhalterung 43 über einen Hochspannungsisolator, d. h., eine Elektrodenisolation 46, gehalten.

Die (Sprüh-) Elektrode 45 hängt schwingungsfähig nach unten in den Innenraum der Filtereinrichtung 4. Dabei kann die Elektrode 45 beispielsweise quer zur Längsachse der Elektrode 45 hin- und herschwingen.

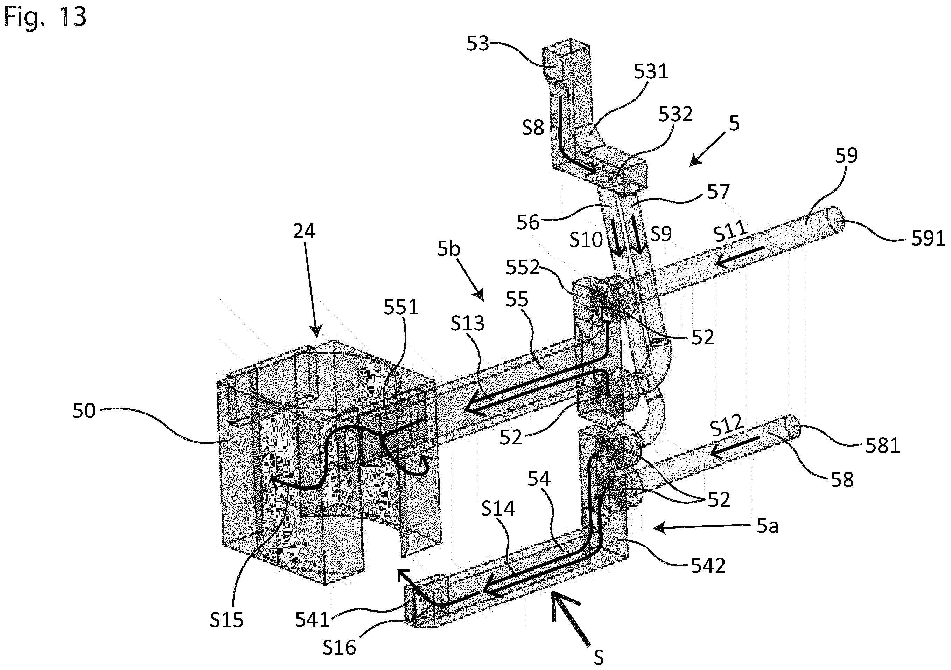

Ein Käfig 48 dient gleichzeitig als Gegenelektrode und als Abreinigungsmechanik für die Filtereinrichtung 4. Der Käfig 48 ist mit dem Masse- bzw. Erdpotential verbunden. Durch den herrschenden Potentialunterschied wird das in der Filtereinrichtung 4 strömende Rauchgas bzw. Abgas, vgl. die Pfeile S6, gefiltert wie vorstehend erläutert. Im Falle der Abreinigung der Filtereinrichtung 4 wird die Elektrode 45 stromlos geschaltet. Der Käfig 48 weist vorzugsweise ein achteckiges regelmäßiges Querschnittsprofil auf, so wie sich das beispielsweise der Ansicht der Fig. 13 entnehmen lässt. Der Käfig 48 kann vorzugsweise bei der Herstellung mit dem Laser zugeschnitten werden.

Das Rauchgas strömt nach dem Austritt aus dem Wärmetauscher 3 (aus dessen Austritt) durch die Wendekammer 34 in den Eintritt 44 der Filtereinrichtung 4.

Dabei ist die (optionale) Filtereinrichtung 4 optional vollintegriert in den Kessel 11 vorgesehen, womit die dem Wärmetauscher 3 zugewandte und von dem Wärmetauschermedium durchspülte Wandfläche auch aus Richtung der Filtereinrichtung 4 zum Wärmetausch eingesetzt wird, womit die Effizienz der Anlage 1 nochmals verbessert wird. Damit kann zumindest ein Teil der Wand die Filtereinrichtung 4 mit dem Wärmetauschmedium durchspült sein, womit zumindest ein Teil dieser Wand mit Kesselwasser gekühlt wird.

Am Filteraustritt 47 strömt das gereinigte Abgas aus der Filtereinrichtung 4 hinaus, wie durch die Pfeile S7 angegeben. Nach dem Filteraustritt wird ein Teil des Abgases über die Rezirkulationseinrichtung 5 wieder zu der Primärverbrennungszone 26 zurückgeführt. Auch dies wird später noch näher erläutert werden. Dieses zur Rezirkulierung bestimmte Abgas bzw. Rauchgas kann kurz auch als "Rezi" oder "Rezi-Gas" bezeichnet werden. Der verbleibende Teil des Abgases wird über den Abgasausgang 41 aus dem Kessel 11 hinausgeleitet.

Eine Ascheabfuhr 7 ist im unteren Teil des Kessels 11 angeordnet. Über eine Ascheaustragungsschnecke 71 wird die beispielsweise aus der Brennkammer 24, den Kesselrohren 32 und der Filtereinrichtung 4 abgeschiedene und herausfallende Asche seitlich aus dem Kessel 11 ausgefördert.

Die Brennkammer 24 und der Kessel 11 dieser Ausführungsform wurden mittels CFD-Simulationen berechnet. Weiter wurden Praxisexperimente durchgeführt, um die CFD-Simulationen zu bestätigen. Ausgangspunkt der Überlegungen waren Berechnungen für einen 100 kW Kessel, wobei jedoch ein Leistungsbereich von 20 bis 500 kW berücksichtigt wurde.

Eine CFD-Simulation (CFD = Computational Fluid Dynamics = numerische Strömungsmechanik) ist die räumlich und zeitlich aufgelöste Simulation von Strömungs- und Wärmeleitprozessen. Dabei können die Strömungsprozesse laminar und/oder turbulent sein, von chemischen Reaktionen begleitet auftreten, oder es kann sich um ein mehrphasiges System handeln. CFD-Simulationen eignen sich somit gut als Design- und Optimierungswerkzeug. Bei der vorliegenden Erfindung wurden CFD-Simulationen eingesetzt, um die strömungstechnischen Parameter derart zu optimieren, dass die vorstehend aufgeführten Aufgaben der Erfindung gelöst werden. Insbesondere wurden im Ergebnis die mechanische Ausgestaltung und Dimensionierung des Kessels 11, der Brennkammer 24, der Sekundärluftdüsen 291 und der Brennkammerdüse 203 maßgeblich durch die CFD-Simulation und auch durch zugehörige praktische Experimente definiert. Die Simulationsergebnisse basieren auf einer Strömungssimulation mit Berücksichtigung der Wärmeübertragung.

Die vorstehend aufgeführten Bestandteile der Biomasse-Heizanlage 1 und des Kessels 11, die Ergebnisse der CFD-Simulationen sind, werden nachstehend eingehender beschrieben.

(Brennkammer)

Die Gestaltung der Brennkammerform ist von Wichtigkeit, um die aufgabengemäßen Anforderungen einhalten zu können. Durch die Brennkammerform bzw. -geometrie sollen eine möglichst gute turbulente Durchmischung und Homogenisierung der Strömung über den Querschnitt des Rauchgaskanals, eine Minimierung des Feuerungsvolumens, sowie eine Reduktion des Luftüberschusses und des Rezirkulationsverhältnisses (Wirkungsgrad, Betriebskosten), eine Reduktion der CO- und CxHx- Emissionen, der NOx-Emissionen, der Staubemissionen, eine Reduktion von lokalen Temperaturspitzen (Fouling und Verschlackung) sowie eine Reduktion von lokalen Rauchgas-Geschwindigkeitsspitzen (Materialbeanspruchung und Erosion) erreicht werden.

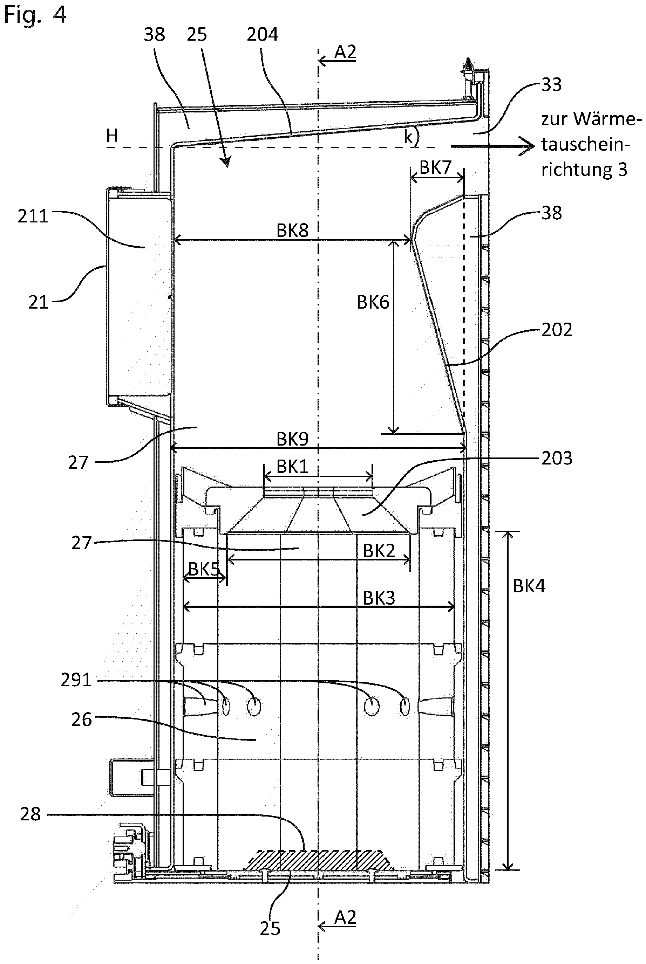

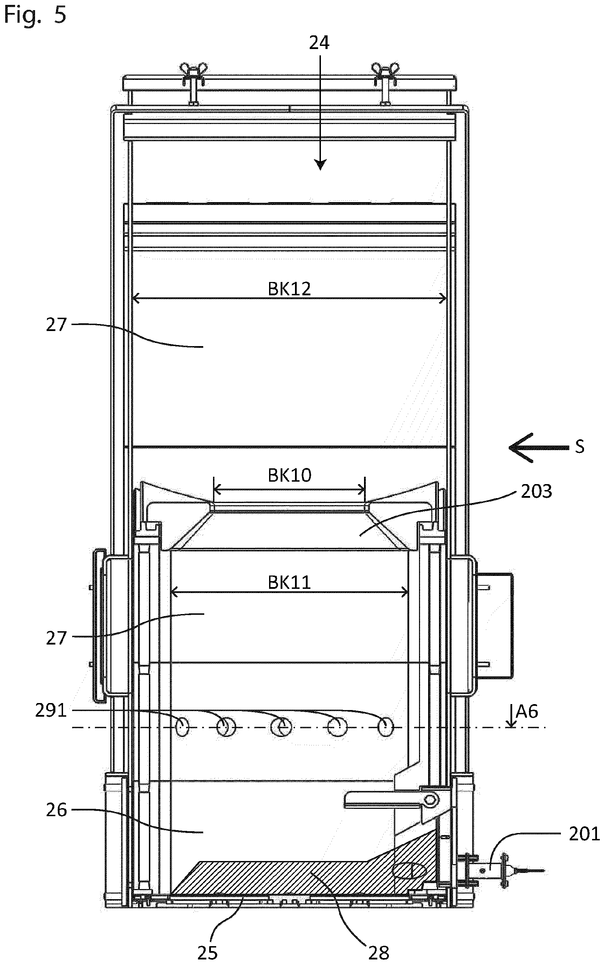

Die Fig. 4, die eine Teilansicht der Fig. 2 ist, und die Fig. 5, welche eine Schnittansicht durch den Kessel 11 entlang der Vertikalschnittlinie A2 ist, stellen eine Brennkammergeometrie dar, die den vorstehend genannten Anforderungen für Biomasse-Heizanlagen über einen weiten Leistungsbereich von beispielsweise 20 bis 500 kW gerecht wird. Die Vertikalschnittlinie A2 kann im Übrigen auch als Mittel- oder Mittenachse der ovalen Brennkammer 24 verstanden werden.

Die in den Figuren 3 und 4 angegebenen und über CFD-Berechnungen und Praxisexperimente ermittelten Maße bei einem beispielhaften Kessel mit ca. 100 kW sind im Einzelnen wie folgt:

$$BK1 = 172 \text{ mm} +\text{-} 40 \text{ mm, vorzugsweise} +\text{-} 17 \text{ mm};$$

$$BK2 = 300 \text{ mm} +\text{-} 50 \text{ mm, vorzugsweise} +\text{-} 30 \text{ mm};$$

$$BK3 = 430 \text{ mm} +\text{-} 80 \text{ mm, vorzugsweise} +\text{-} 40 \text{ mm};$$

$$BK4 = 538 \text{ mm} +\text{-} 80 \text{ mm, vorzugsweise} +\text{-} 50 \text{ mm};$$

$$BK5 = (BK3 - BK2) / 2 = \text{bspw. } 65 \text{ mm} +\text{-} 30 \text{ mm, vorzugsweise} +\text{-} 20 \text{ mm};$$

$$BK6 = 307 \text{ mm} +\text{-} 50 \text{ mm, vorzugsweise} +\text{-} 20 \text{ mm};$$

$$BK7 = 82 \text{ mm} +\text{-} 20 \text{ mm, vorzugsweise} +\text{-} 20 \text{ mm};$$

$$BK8 = 379 \text{ mm} +- 40 \text{ mm, vorzugsweise} +- 20 \text{ mm;}$$

$$BK9 = 470 \text{ mm} +- 50 \text{ mm, vorzugsweise} +- 20 \text{ mm;}$$

$$BK10 = 232 \text{ mm} +- 40 \text{ mm, vorzugsweise} +- 20 \text{ mm;}$$

$$BK11 = 380 \text{ mm} +- 60 \text{ mm, vorzugsweise} +- 30 \text{ mm;}$$

$$BK12 = 460 \text{ mm} +- 80 \text{ mm, vorzugsweise} +- 30 \text{ mm.}$$

Alle Maß- und Größenangaben sind um Übrigen lediglich beispielhaft zu verstehen.

Mit diesen Werten werden vorliegend sowohl die Geometrien der Primärverbrennungszone 26 als auch der Sekundärverbrennungszone 27 der Brennkammer 24 optimiert. Die angegebenen Größenbereiche sind Bereiche, mit denen die Anforderungen ebenso (annähernd) erfüllt werden, wie mit den angegebenen exakten Werten.

Dabei kann vorzugsweise eine Kammergeometrie der Primärverbrennungszone 26 und der Brennkammer 24 (bzw. ein Innenvolumen der Primärverbrennungszone 26 der Brennkammer 24) anhand der folgenden Grundparameter definiert werden:

Ein Volumen mit einer ovalen horizontalen Grundfläche mit den Maßen von 380 mm +- 60 mm (vorzugsweise +-30 mm) x 320 mm +- 60 mm (vorzugsweise +-30 mm), sowie einer Höhe von 538 mm +- 80 mm (vorzugsweise +- 50 mm).

Die vorstehenden Größenangaben können im Verhältnis dieser zueinander skaliert auch Anwendung auf Kessel anderer Leistungsklassen (bspw. 50 kW oder 200 kW) finden.

Als Fortbildung dessen kann das vorstehend definierte Volumen eine obere Öffnung in Form einer Brennkammerdüse 203 aufweisen, die in der Sekundärverbrennungszone 27 der Brennkammer 24 vorgesehen ist, welche eine in die Sekundärverbrennungszone 27 hineinragende Brennkammerschräge 202 aufweist, welche vorzugsweise das Wärmetauschmedium 38 beinhaltet. Die Brennkammerschräge 202 verringert den Querschnitt der Sekundärverbrennungszone 27. Dabei ist die Brennkammerschräge 202 um einen Winkel k von zumindest 5%, bevorzugt um einen Winkel k von zumindest 15% und noch mehr bevorzugt um zumindest einen Winkel k von 19% in Bezug auf eine fiktive horizontale bzw. gerade vorgesehene Brennkammerdecke H (vgl. die gestrichelte Horizontallinie H in Fig. 4) vorgesehen.

Zudem ist eine Brennkammerdecke 204 ebenfalls in Richtung des Eintritts 33 aufsteigend geneigt vorgesehen. Die Brennkammer 24 in der Sekundärverbrennungszone 27 weist somit die Brennkammerdecke 204 auf, die in Richtung des Eintritts 33 des Wärmetauschers 3 nach oben geneigt vorgesehen ist. Diese Brennkammerdecke 204 erstreckt sich im Schnitt der Fig. 2 zumindest weitgehend gerade bzw. geradlinig und geneigt. Der Neigungswinkel der geraden bzw. ebenen Brennkammerdecke 204 kann gegenüber der (fiktiven) Horizontalen vorzugsweise 4 bis 15 Grad betragen.

Mit der Brennkammerdecke 204 ist eine weitere (Decken-)Schräge in der Brennkammer 24 vor dem Eintritt 33 vorgesehen, die zusammen mit der Brennkammerschräge 202 einen Trichter ausbildet. Dieser Trichter dreht die nach oben gerichtete Drall- bzw. Wirbelströmung zur Seite und lenkt diese Strömung in etwa in das Horizontale um. Aufgrund der schon turbulenten Aufwärtsströmung und der Trichterform vor dem Eintritt 33 wird sichergestellt, dass alle Wärmetauscherrohre 32 bzw. Kesselrohre 32 gleichmäßig beströmt werden, womit ein gleichverteilter Durchfluss des Rauchgases in allen Kesselrohren 32 sichergestellt ist. Dies optimiert den Wärmeübergang im Wärmetauscher 3 ganz erheblich.

Dabei kann insbesondere die Kombination der vertikalen und horizontalen Schrägen 203, 204 in der Sekundärverbrennungszone in Kombination als Einströmgeometrie in dem konvektiven Kessel eine gleichmäßige Verteilung des Rauchgases auf die konvektiven Kesselrohre erreichen.

Die Brennkammerschräge 202 dient der Homogenisierung der Strömung S3 in Richtung des Wärmetauschers 3 und damit der Beströmung der Kesselrohre 32. Somit wird eine möglichst gleichmäßige Verteilung des Rauchgases auf die einzelnen Kesselrohre bewirkt, um dort den Wärmeübergang zu optimieren.

Im Detail dreht die Kombination der Schrägen mit dem Einströmquerschnitt des Kessels die Rauchgasströmung so, dass eine möglichst gleichmäßige Verteilung des Rauchgasdurchflusses bzw. der Durchflussmenge auf die jeweiligen Kesselrohre 32 erfolgt.

Im Stand der Technik gibt es häufig Brennkammern mit rechteckiger oder polygonaler Brennkammer und Düse, wobei jedoch die unregelmäßige Form der Brennkammer und der Düse sowie deren Zusammenspiel ein weiteres Hindernis für eine gleichmäßige Luftverteilung und eine gute Mischung von Luft und Brennstoff und somit einen guten Ausbrand darstellen, wie vorliegend erkannt wurde. Insbesondere mit einer eckigen Geometrie der Brennkammer entstehen Strömungsfäden bzw. Vorzugsströmungen, die nachteilhaft zu einer ungleichmäßigen Beströmung der Wärmetauscherrohre 32 führen.

Deshalb ist vorliegend die Brennkammer 24 ohne Totecken oder Totkanten vorgesehen.

Vorliegend wurde somit erkannt, dass die Geometrie der Brennkammer (und des gesamten Strömungsverlaufs im Kessel) eine maßgebliche Rolle bei den Überlegungen zur Optimierung der Biomasse-Heizanlage 1 spielt. Deshalb wurde (in Abkehr von den üblichen rechteckigen oder mehr-eckigen oder rein zylindrischen Formgebungen) die hierin beschriebene ovale oder runde Grundgeometrie ohne Totecken gewählt. Zudem wurden auch diese Grundgeometrie der Brennkammer und deren Aufbau mit den vorstehend angegebenen Maßen / Maßbereichen für einen 100 kW Kessel optimiert. Dabei sind diese Maße /Maßbereiche derart gewählt, dass insbesondere auch unterschiedliche Brennstoffe (Hackgut und Pellets) mit unterschiedlicher Qualität (beispielsweise mit unterschiedlichem Wassergehalt) bei sehr hohem Wirkungsgrad verbrannt werden können. Dies haben die Praxistests und CFD-Simulationen ergeben.

Insbesondere kann die Primärverbrennungszone 26 der Brennkammer 24 ein Volumen umfassen, das bevorzugt im Außenumfang einen ovalen oder annähernd kreisförmigen Horizontalquerschnitt aufweist (ein solcher Querschnitt ist in Fig. 2 beispielhaft mit A1 gekennzeichnet). Dieser Horizontalquerschnitt kann zudem bevorzugt die Grundfläche der Primärverbrennungszone 26 der Brennkammer 24 darstellen. Über die durch den Doppelpfeil BK4 angegebene Höhe kann die Brennkammer 24 einen annähernd gleichbleibenden Querschnitt aufweisen. Insofern kann die Primärverbrennungszone 24 ein annähernd oval-zylindrisches Volumen aufweisen. Bevorzugt können die Seitenwände und die Grundfläche (der Rost) der Primärverbrennungszone 26 senkrecht aufeinander stehen. Dabei können die vorstehend beschriebenen Schrägen 203, 204 integriert als Wände der Brennkammer 24 vorgesehen sein, wobei die Schrägen 203, 204 einen Trichter ausbilden, der im Eintritt 33 des Wärmetauschers 33 mündet und dort den geringsten Querschnitt aufweist.

Vorstehend wird der Begriff "annähernd" verwendet, da selbstverständlich einzelne Kerben, konstruktiv bedingte Abweichungen oder kleine Asymmetrien vorhanden sein können, beispielsweise bei den Übergängen der einzelnen Brennkammersteine 29 zueinander. Diese geringfügigen Abweichungen spielen strömungstechnisch jedoch nur eine untergeordnete Rolle.

Der Horizontalquerschnitt der Brennkammer 24 und insbesondere der Primärverbrennungszone 26 der Brennkammer 24 können ebenso bevorzugt regelmäßig ausgeführt sein. Weiter kann der Horizontalquerschnitt der Brennkammer 24 und insbesondere der Primärverbrennungszone 26 der Brennkammer 24 bevorzugt eine regelmäßige (und/oder symmetrische) Ellipse sein.

Zudem kann der Horizontalquerschnitt (der Außenumfang) der Primärverbrennungszone 26 über eine vorgegebene Höhe, (beispielsweise 20 cm) gleichbleibend ausgestaltet sein.

Damit ist vorliegend eine oval-zylindrische Primärverbrennungszone 26 der Brennkammer 24 vorgesehen, die nach CFD-Berechnungen eine deutlich gleichmäßigere und bessere Luftverteilung in der Brennkammer 24 ermöglicht als bei rechteckigen Brennkammern des Stands der Technik. Die fehlenden Toträume vermeiden zudem Zonen in der Brennkammer mit schlechter Luftdurchströmung, was die Effizienz steigert und die Schlackebildung verringert.

Ebenso ist die Düse 203 in der Brennkammer 24 als ovale oder annähernd kreisförmige Verengung ausgestaltet, um die Strömungsverhältnisse noch weiter zu optimieren. Der vorstehend erläuterte Drall der Strömung in der Primärverbrennungszone 26, welcher durch die erfindungsgemäßen speziell konzipierten Sekundärluftdüsen 291 bedingt ist, führt zu einem grob helixförmig oder spiralförmig nach oben gerichteten Strömungsverlauf, wobei eine ebenso ovale oder annähernd kreisförmige Düse diesen Strömungsverlauf begünstigt, und nicht wie übliche rechteckige Düsen stört. Diese optimierte Düse 203 bündelt das nach oben rotierend strömende Rauchgas-Luft-Gemisch und sorgt für eine bessere Durchmischung, einen Erhalt der Wirbelströmungen in der Sekundärverbrennungszone 27 und damit für eine vollständige Verbrennung. Dadurch wird auch der erforderliche Luftüberschuss minimiert. Dies verbessert den Verbrennungsvorgang und erhöht die Effizienz.

Damit dient insbesondere die Kombination der vorstehend erläuterten Sekundärluftdüsen 291 und der dadurch induzierten Wirbelströmungen mit der optimierten Düse 203 der Bündelung des nach oben rotierenden Rauchgas-/Luftgemischs. Dies sorgt für eine zumindest annähernd vollständige Verbrennung in der Sekundärverbrennungszone 27.

Somit wird eine wirbel- bzw. drallbehaftete Strömung durch die Düse 203 gebündelt und nach oben gerichtet, womit sich diese Strömung weiter nach oben erstreckt als im Stand der Technik üblich. Dies hat, wie für den Fachmann aus den Gesetzen der Physik betreffend des Drehimpulses ersichtlich, seine Ursache in der durch die Düse 203 erzwungenen Verkleinerung des drallbehafteten Abstandes des Luftstromes zur Rotations- bzw. Drallmittelachse (vgl. analog die Physik des Pirouetteneffekts).

Zudem wird vorliegend der Strömungsverlauf in der Sekundärverbrennungszone 27 und aus der Sekundärverbrennungszone 27 zu den Kesselrohren 32 optimiert, wie nachstehend näher erläutert.

Die Brennkammerschräge 202 der Fig. 4, welche ohne Bezugszeichen auch in den Fig. 2 und 3 zu erkennen ist und an der sich die Brennkammer 25 (bzw. deren Querschnitt) von unten nach oben hin zumindest annähernd linear verjüngt, sorgt nach CFD-Berechnungen für eine Vergleichmäßigung der Rauchgasströmung in Richtung der Wärmetauscheinrichtung 4, womit deren Effizienz verbessert werden kann. Dabei verjüngt sich die horizontale Querschnittsfläche der Brennkammer 25 von Anfang bis Ende der Brennkammerschräge 202 bevorzugt zumindest um 5%. Die Brennkammerschräge 202 ist dabei auf der Seite der Brennkammer 25 zur Wärmetauscheinrichtung 4 vorgesehen, und ist an der Stelle der maximalen Verjüngung abgerundet vorgesehen. Im Stand der Technik üblich sind parallele bzw. gerade Brennkammerwände ohne eine Verjüngung (um die Rauchgasströmung nicht zu behindern). Hinzu kommt, einzeln oder in Kombination, die zur horizontalen schräg nach oben in Richtung des Eintritts 33 verlaufende Brennkammerdecke 204, die die Wirbelströmungen in der Sekundärverbrennungszone 27 seitlich ableitet, und dabei in deren Strömungsgeschwindigkeitsverteilung vergleichmäßigt.

Die Einströmung bzw. Umlenkung des Rauchgasstromes vor dem Rohrbündelwärmetauscher ist derart ausgestaltet, dass eine ungleichmäßige Anströmung der Rohre bestmöglich vermieden wird, womit Temperaturspitzen in einzelnen Kesselrohren 32 niedrig gehalten werden können und damit der Wärmeübergang im Wärmetauscher 4 verbessert werden kann (bestmögliche Nutzung der Wärmetauscherflächen). In der Folge ist die Effizienz der Wärmetauscheinrichtung 4 verbessert.

Im Detail wird der gasförmige Volumenstrom des Rauchgases durch die schräge Brennkammerwandung 203 mit einer gleichmäßigen Geschwindigkeit (auch im Falle unterschiedlicher Verbrennungszustände) zu den Wärmetauscherrohren bzw. den Kesselrohren 32 geführt. Durch die schräge Brennkammerdecke 204 wird dieser Effekt nochmals verstärkt, wobei ein Trichtereffekt bewirkt wird. Im Ergebnis entsteht eine gleichmäßige Wärmeverteilung der einzelnen Kesselrohre 32 betreffenden Wärmetauscherflächen und damit eine verbesserte Nutzung der Wärmetauscherflächen. Die Abgastemperatur wird somit gesenkt und der Wirkungsgrad erhöht. Dabei ist die Strömungsverteilung insbesondere an der in der Fig. 3 dargestellten Indikatorlinie WT1 deutlich gleichmäßiger als im Stand der Technik. Die Linie WT1 stellt eine Eintrittsfläche für den Wärmetauscher 3 dar. Die Indikatorlinie WT3 gibt eine beispielhafte Querschnittslinie durch die Filtereinrichtung 4 an, in der die Strömung möglichst homogen eingerichtet bzw. über den Querschnitt der Kesselrohre 32 in etwa gleichverteilt ist (u. A. aufgrund von Strömungsblenden am Eingang der Filtereinrichtung 4 und aufgrund der Geometrie der Wendekammer 35). Eine gleichmäßige Durchströmung der Filtereinrichtung 3 bzw. des letzten Kesselzuges minimiert Strähnenbildung und optimiert dadurch zudem die Abscheideeffizienz der Filtereinrichtung 4 sowie den Wärmeübergang in der Biomasse-Heizanlage 1.

Weiter ist im unteren Teil der Brennkammer 25 am Brennstoffbett 28 eine Zündeinrichtung 201 vorgesehen. Diese kann eine Initialzündung oder eine erneute Zündung des Brennstoffes bewirken. Es kann die Zündeinrichtung 201 ein Glühzünder sein. Die Zündeinrichtung ist vorteilhaft ortsfest und horizontal seitlich versetzt zum Ort der Einführung des Brennstoffs angeordnet.

Weiter kann (optional) nach dem Ausgang des Rauchgases (d. h., nach S7) aus der Filtereinrichtung eine Lamdasonde (nicht dargestellt) vorgesehen sein. Durch die Lambdasonde kann eine Steuerung (nicht dargestellt) den jeweiligen Heizwert erkennen. Die Lambdasonde kann somit für das ideale Mischverhältnis zwischen den Brennstoffen und der Sauerstoffzufuhr sorgen. Trotz unterschiedlicher Brennstoffqualitäten werden im Ergebnis eine hohe Effizienz und ein höherer Wirkungsgrad erreichbar.

Das in Fig. 5 gezeigte Brennstoffbett 28 zeigt eine grobe Brennstoffverteilung aufgrund der Zuführung des Brennstoffs von der rechten Seite der Fig. 5. Dieses Brennstoffbett 28 wird von unten mit einem Rauchgas-Frischluft Gemisch beströmt, das von der Rezirkulationseinrichtung 5 bereitgestellt wird. Dieses Rauchgas-Frischluft Gemisch ist vorteilhaft vortemperiert und weist die ideale Menge (Massenstrom) und das ideale Mischungsverhältnis auf, so wie das eine nicht näher gezeigte Anlagensteuerung aufgrund diverser sensorisch erfasster Messwerte und zugehöriger Luftventile 52 regelt.

Weiter ist in den Fig. 4 und 5 eine Brennkammerdüse 203 gezeigt, in der eine Sekundärverbrennungszone 27 vorgesehen ist und die die Rauchgasströmung beschleunigt und bündelt. Dadurch wird die Rauchgasströmung besser durchmischt und kann in der Nachverbrennungszone 27 bzw. Sekundärverbrennungszone 27 effizienter verbrennen. Das Flächenverhältnis der Brennkammerdüse 203 liegt in einem Bereich von 25 % bis 45 %, beträgt jedoch bevorzugt 30 % bis 40 %, und ist, beispielsweise für eine 100 kW Biomasse-Heizanlage 1, idealerweise 36 % +- 1 % (Verhältnis der gemessenen Eingangsfläche zur gemessenen Ausgangsfläche der Düse 203).

Mithin stellen die vorstehenden Angaben zur Brennkammergeometrie der Primärverbrennungszone 26 zusammen mit der Geometrie der Sekundärluftdüsen 291 und der Düse 203 eine vorteilhafte Weiterbildung der vorliegenden Offenbarung dar.

(Brennkammersteine)

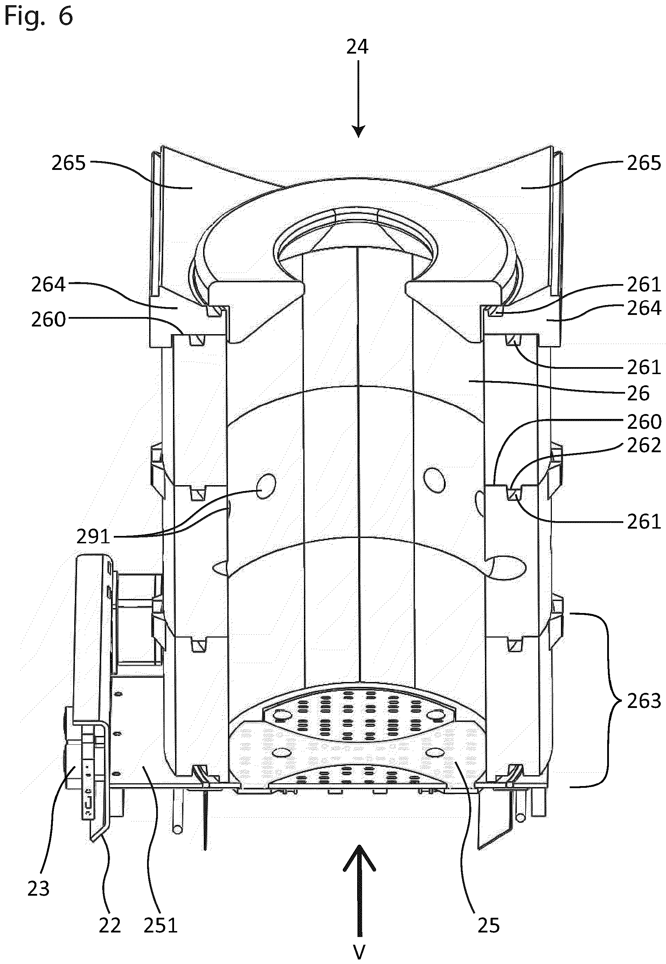

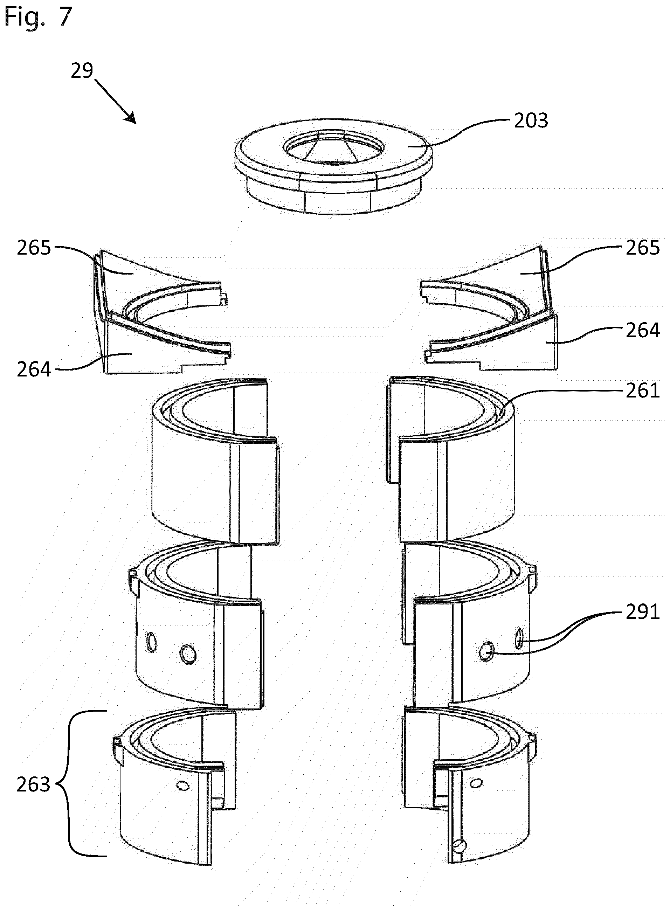

Die Fig. 6 zeigt eine dreidimensionale Schnittansicht (von schräg oben) auf die Primärverbrennungszone 26 sowie den isolierten Teil der Sekundärverbrennungszone 27 der Brennkammer 24 mit dem Drehrost 25, und insbesondere auf die besondere Ausgestaltung der Brennkammersteine 29. Die Fig. 7 zeigt entsprechend zur Fig. 6 eine Explosionsdarstellung der Brennkammersteine 29. Die Ansichten der Fig. 6 und 7 können bevorzugt mit den vorstehend aufgeführten Abmessungen der Fig. 4 und 5 ausgeführt sein. Dies ist jedoch nicht zwingend der Fall.

Die Kammerwand der Primärverbrennungszone 26 der Brennkammer 24 ist mit einer Mehrzahl von Brennkammersteinen 29 in einem modularen Aufbau vorgesehen, was unter anderem die Fertigung und die Wartung erleichtert.

Die Wartung wird insbesondere durch die Möglichkeit der Entnahme einzelner Brennkammersteine 29 erleichtert.

An den Auflageflächen 260 der Brennkammersteine 29 sind formschlüssige Nuten 261 und Vorsprünge 262 (in Fig. 6 sind zur Vermeidung von Redundanzen in den Figuren exemplarisch nur jeweils ein paar dieser bezeichnet) vorgesehen, um eine mechanische und weitgehend luftdichte Verbindung zu schaffen, um wiederum das Eindringen von störender Fremdluft zu vermeiden. Bevorzugt bilden je zwei zumindest weitgehend symmetrische Brennkammersteine (mit Ausnahme eventuell der Öffnungen für die Sekundärluft bzw. das rezirkulierte Rauchgas) einen vollständigen Ring aus. Weiter sind bevorzugt drei Ringe aufeinandergestapelt, um die oval-zylindrische oder alternativ auch zumindest annähernd kreisförmige (letzteres ist nicht dargestellt) Primärverbrennungszone 26 der Brennkammer 24 auszubilden.

Als oberer Abschluss sind drei weitere Brennkammersteine 29 vorgesehen, wobei die ringförmige Düse 203 durch zwei Halterungssteine 264 gelagert wird, die formschlüssig auf den oberen Ring 263 aufgesetzt werden. Bei allen Auflageflächen 260 sind Nuten 261 entweder für passende Vorsprünge 262 und/oder zur Einfügung von geeignetem Dichtmaterial vorgesehen.

Die Halterungssteine 264, welche bevorzugt symmetrisch ausgebildet sind, können bevorzugt eine nach innen geneigte Schräge 265 aufweisen, um ein Abkehren von Flugasche auf den Drehrost 25 zu vereinfachen.

Der untere Ring 263 der Brennkammersteine 29 liegt auf einer Bodenplatte 251 des Drehrosts 25 auf. An der Innenkannte zwischen diesem unteren Ring 263 der Brennkammersteine 29 lagert sich vermehrt Asche ab, was somit diesen Übergang vorteilhaft im Betrieb der Biomasse-Heizanlage 1 selbstständig und vorteilhaft abdichtet.

Im mittleren Ring der Brennkammersteine 29 sind die (optionalen) Öffnungen für die Rezirkulationsdüsen 291 bzw. Sekundärluftdüsen 291 vorgesehen. Dabei sind die Sekundärluftdüsen 291 zumindest annähernd auf der gleichen (horizontalen) Höhe der Brennkammer 24 in den Brennkammersteinen 29 vorgesehen.

Vorliegend sind drei Ringe von Brennkammersteinen 29 vorgesehen, da dies den effizientesten Weg der Herstellung und auch der Wartung darstellt. Alternativ können auch 2, 4 oder 5 solcher Ringe vorgesehen sein.

Die Brennkammersteine 29 bestehen vorzugsweise aus Hochtemperatur-Siliziumkarbid, wodurch diese sehr verschleißfest sind.

Die Brennkammersteine 29 sind als Formsteine vorgesehen. Die Brennkammersteine 29 sind derart geformt, dass das Innenvolumen der Primärverbrennungszone 26 der Brennkammer 24 einen ovalen Horizontalquerschnitt aufweist, womit durch eine ergonomische Formgebung Totecken bzw. Toträume vermieden werden, die üblicherweise vom Rauchgas- Luftgemisch nicht optimal durchströmt werden, wodurch der dort vorhandene Brennstoff nicht optimal verbrannt wird. Aufgrund der vorliegenden Formgebung der Brennkammersteine 29 wird die Durchströmung des Rosts 25 mit Primärluft, die auch zur Verteilung des Brennstoffs über dem Rost 25 passt, und die Möglichkeit von unbehinderten Wirbelströmungen verbessert; und folglich wird die Effizienz der Verbrennung verbessert.

Der ovale Horizontalquerschnitt der Primärverbrennungszone 26 der Brennkammer 24 ist bevorzugt ein punktsymmetrisches und/oder regelmäßiges Oval mit dem kleinsten Innendurchmesser BK3 und dem größten Innendurchmesser BK11. Diese Maße waren das Ergebnis der Optimierung der Primärverbrennungszone 26 der Brennkammer 24 mittels CFD-Simulation und von praktischen Versuchen.

(Drehrost)

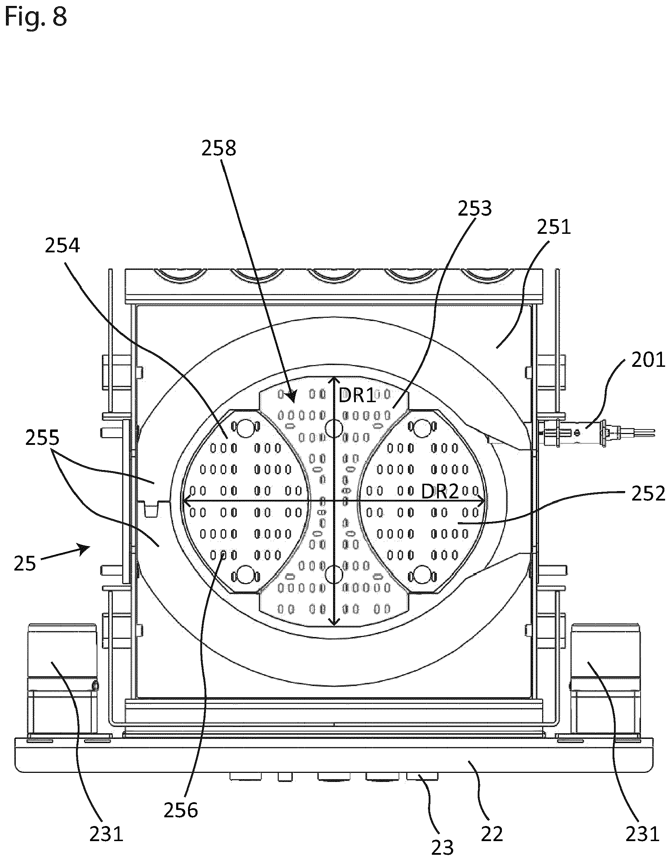

Fig. 8 zeigt eine Aufsicht auf den Drehrost 25 von oben aus Sicht der Schnittlinie A1 der Fig. 2.

Die Aufsicht der Fig. 8 kann bevorzugt mit den vorstehend aufgeführten Abmessungen ausgeführt sein. Dies ist jedoch nicht zwingend der Fall.

Der Drehrost 25 weist die Bodenplatte 251 als Basiselement auf. In einer grob ovalförmigen Öffnung der Bodenplatte 251 ist ein Übergangselement 255 vorgesehen, welches einen Zwischenraum zwischen einem ersten Drehrostelement 252, einem zweiten Drehrostelement 253 und einem dritten Drehrostelement 254 überbrückt, welche drehbar gelagert sind. Damit ist der Drehrost 25 als Drehrost mit drei Einzelelementen vorgesehen, d. h., dieser kann auch als 3-fach Drehrost bezeichnet werden. In den Drehrostelementen 252, 253 und 254 sind Luftlöcher zur Durchströmung mit Primärluft vorgesehen.

Die Drehrostelemente 252, 253 und 254 sind flache und hitzebeständige Metallplatten, beispielsweise aus einem Metallguss, die auf deren Oberseite eine zumindest weitgehend eben konfigurierte Oberfläche aufweisen und an deren Unterseite mit den Lagerachsen 81 beispielsweise über Zwischenhalterungselemente verbunden sind. Von oben betrachtet weisen die Drehrostelemente 252, 253 und 254 gekrümmte und komplementäre Seiten bzw. Umrisse auf.

Insbesondere können die Drehrostelemente 252, 253, 254 zueinander komplementäre und gekrümmte Seiten aufweisen, wobei vorzugsweise das zweite Drehrostelement 253 jeweils zu dem benachbarten ersten und dritten Drehrostelement 252, 254 konkave Seiten aufweist, und vorzugsweise das erste und dritte Drehrostelement 252, 254 jeweils zu dem zweiten Drehrostelement 253 hin eine konvexe Seite aufweist. Damit wird die Brecherfunktion der Drehrostelemente verbessert, da die Länge des Bruchs vergrößert wird, und die zum Brechen wirkenden Kräfte (ähnlich wie bei einer Schere) gezielter angreifen.

Die Drehrostelemente 252, 253 und 254 (sowie deren Umfassung in Form des Übergangselements 255) weisen gemeinsam betrachtet in der Aufsicht eine annähernd ovale Außenform auf, womit hier wiederum Totecken bzw. Toträume vermieden werden, in denen eine nicht optimale Verbrennung stattfinden könnte oder sich Asche unerwünscht ansammeln könnte. Die optimalen Abmessungen dieser Außenform der Drehrostelemente 252, 253 und 254 sind in Fig. 8 mit den Doppelpfeilen DR1 und DR2 bezeichnet. Bevorzugt, aber nicht ausschließlich, sind DR1 und DR2 wie folgt definiert:

$$DR1 = 288 \ mm \ +- \ 40 \ mm, \ bevorzugt \ +-20 \ mm$$

$$DR2 = \ 350 \ mm \ +- \ 60 \ mm, \ bevorzugt \ +- \ 20 \ mm$$

Diese Werte haben sich bei den CFD-Simulationen und dem folgenden Praxistest als Optimalwerte (-bereiche) herausgestellt. Diese Maße korrespondieren mit denen der Fig. 4 und 5. Diese Maße sind insbesondere für die Verbrennung von unterschiedlichen Brennstoffen bzw. den Brennstoffarten Hackgut und Pellets (Hybridfeuerung) in einem Leistungsbereich von 20 bis 200 kW vorteilhaft.

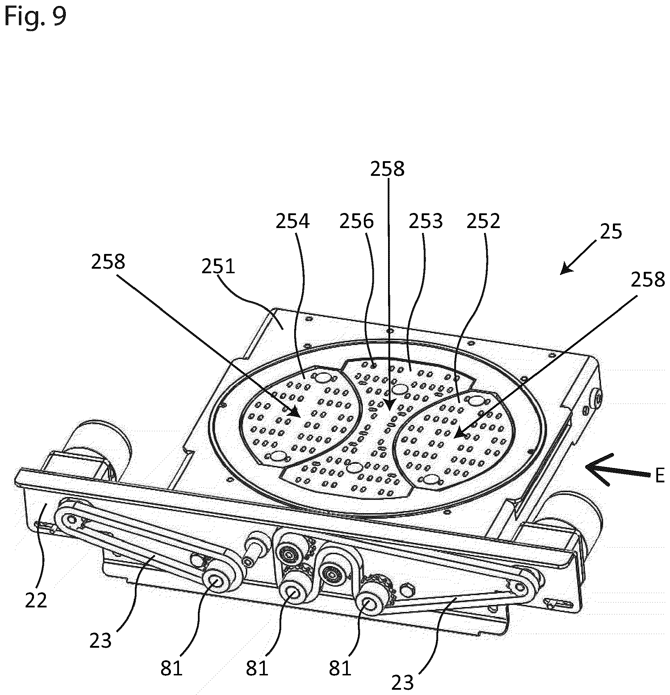

Dabei weist der Drehrost 25 eine ovale Verbrennungsfläche auf, die für die Brennstoffverteilung, die Luftdurchströmung des Brennstoffs und den Abbrand des Brennstoffs günstiger ist als eine übliche rechteckige Verbrennungsfläche. Die Verbrennungsfläche 258 wird im Kern durch die Oberflächen der Drehrostelemente 252, 253 und 254 (im horizontalen Zustand) gebildet. Die Verbrennungsfläche ist somit die nach oben zeigende Oberfläche der Drehrostelemente 252, 253 und 254. Diese ovale Verbrennungsfläche entspricht vorteilhaft der Brennstoffauflagefläche, wenn diese seitlich auf den Drehrost 25 aufgebracht bzw. aufgeschoben wird (vgl. der Pfeil E der Fig. 9, 10 und 11). Insbesondere kann die Brennstoffzufuhr aus einer Richtung erfolgen, die parallel zu einer längeren Mittelachse (Hauptachse) der ovalen Verbrennungsfläche des Drehrosts 25 liegt.

Das erste Drehrostelement 252 und das dritte Drehrostelement 254 können bevorzugt in deren Verbrennungsfläche 258 identisch ausgebildet sein. Weiter können das erste Drehrostelement 252 und das dritte Drehrostelement 254 identisch oder baugleich zueinander sein. Dies ist beispielsweise in Fig. 9 zu sehen, wobei das erste Drehrostelement 252 und das dritte Drehrostelement 254 die gleiche Form aufweisen.

Weiter ist das zweite Drehrostelement 253 zwischen dem ersten Drehrostelement 252 und dem dritten Drehrostelement 254 angeordnet.

Bevorzugt ist der Drehrost 25 mit einer annähernd punktsymmetrischen ovalen Verbrennungsfläche 258 vorgesehen.

Ebenso kann der Drehrost 25 eine annähernd elliptische Verbrennungsfläche 258 ausbilden, wobei DR2 die Maße von deren Hauptachse und DR1 die Maße von deren Nebenachse ist.

Weiter kann der Drehrost 25 eine annähernd ovale Verbrennungsfläche 258 aufweisen, welche achsensymmetrisch in Bezug auf eine Mittenachse der Verbrennungsfläche 258 ist.

Weiter kann der Drehrost 25 eine annähernd kreisförmige Verbrennungsfläche 258 aufweisen, wobei dies geringfügige Nachteile bei der Brennstoffzuführung und der - verteilung nach sich zieht.

Weiter sind zwei Motoren bzw. Antriebe 231 der Drehmechanik 23 vorgesehen, mit denen die Drehrostelemente 252, 253 und 254 entsprechend gedreht werden können. Näheres zur besonderen Funktion und zu den Vorteilen des vorliegenden Drehrosts 25 wird später mit Bezug auf die Figuren 9, 10 und 11 beschrieben.

Insbesondere bei Pellet- und Hackgutheizungen (und insbesondere bei hybriden Biomasse-Heizanlagen) kann es vermehrt zu Ausfällen durch Schlacke-Bildung in der Brennkammer 24, insbesondere auf dem Drehrost 25, kommen. Schlacke entsteht bei einem Verbrennungsvorgang immer dann, wenn in der Glut Temperaturen über dem Ascheschmelzpunkt erreicht werden. Die Asche wird dann weich, verklebt und bildet nach dem Abkühlen feste, und oft dunkel gefärbte Schlacke. Dieser auch als Versinterung bezeichnete Vorgang ist bei der Biomasse-Heizanlage 1 unerwünscht, da es durch die Anreicherung von Schlacke in der Brennkammer 24 zu einer Funktionsstörung kommen kann: sie schaltet sich ab. Die Brennkammer 24 muss üblicherweise geöffnet werden und die Schlacke muss entfernt werden.

Der Ascheschmelzbereich (dieser erstreckt sich vom Sinterpunkt bis zum Fließpunkt) hängt ganz wesentlich von dem verwendeten Brennmaterial ab. Fichtenholz hat beispielsweise eine kritische Temperatur von ca. 1.200 °C. Doch auch der Ascheschmelzbereich eines Brennstoffes kann starken Schwankungen unterliegen. Je nach Menge und Zusammensetzung der im Holz enthaltenen Mineralien ändert sich das Verhalten der Asche im Verbrennungsprozess.

Ein weiterer Faktor, der die Schlackebildung beeinflussen kann, sind Transport und Lagerung der Holzpellets oder der Hackschnitzel. Diese sollten nämlich möglichst unbeschädigt in die Brennkammer 24 gelangen. Sind die Holzpellets bereits zerbröselt, wenn sie in den Verbrennungsprozess gelangen, so erhöht sich dadurch die Dichte des Glutbetts. Stärkere Schlackebildung ist die Folge. Insbesondere der Transport vom Lagerraum zur Brennkammer 24 ist hier von Bedeutung. Besonders lange Wege, sowie Bögen und Winkel, führen zu einer Beschädigung bzw. einem Abrieb der Holzpellets.

Ein weiterer Faktor betrifft die Führung des Verbrennungsvorgangs. Bislang war man bestrebt, die Temperaturen eher hoch zu halten, um einen möglichst guten Ausbrand und niedrige Emissionen zu erzielen. Durch eine optimierte Brennkammergeometrie und Geometrie der Verbrennungszone 258 des Drehrosts 25 ist es möglich, die Verbrennungstemperatur am Rost niedriger und im Bereich der Sekundärluftdüsen 291 hoch zu halten, und somit die Schlackebildung am Rost zu verringern.

Zudem kann entstehende Schlacke (und auch die Asche) durch die besondere Formgebung und die Funktionalität des vorliegenden Drehrosts 25 vorteilhaft entfernt werden. Dies wird nun mit Bezug auf die Figuren 9, 10 und 11 näher erläutert.

Die Figuren 9, 10 und 11 zeigen eine dreidimensionale Ansicht des Drehrosts 25 mit der Bodenplatte 251, dem ersten Drehrostelement 252, dem zweiten Drehrostelement 253 und dem dritten Drehrostelement 254. Die Ansichten der Fig. 9, 10 und 11 können bevorzugt mit den vorstehend aufgeführten Abmessungen korrespondieren. Dies ist jedoch nicht zwingend der Fall.

Diese Ansicht zeigt den Drehrost 25 als freigestelltes Einschubteil mit Drehrostmechanik 23 und Antrieb(en) 231. Der Drehrost 25 ist mechanisch derart vorgesehen, dass er nach Art des Baukastensystems einzeln vorgefertigt werden kann, und als Einschubteil in eine vorgesehene längliche Öffnung des Kessels 11 eingeführt und eingebaut werden kann. Dies erleichtert zudem die Wartung dieses verschleißanfälligen Teils. Damit kann der Drehrost 25 bevorzugt modular ausgebildet sein, wobei dieser als Komplettteil mit Drehrostmechanik 23 und Antrieb 231 schnell und effizient entnommen und wieder eingesetzt werden kann. Der modularisierte Drehrost 25 kann damit auch mittels Schnellverschlüssen montiert und demontiert werden. Im Gegensatz dazu sind die Drehroste des Stands der Technik regelmäßig fest montiert, und somit schwer zu warten oder zu montieren.

Der Antrieb 231 kann zwei getrennt ansteuerbare Elektromotoren aufweisen. Diese sind vorzugsweise seitlich an der Drehrostmechanik 23 vorgesehen. Die Elektromotoren können Untersetzungsgetriebe aufweisen. Weiter können Endanschlagsschalter vorgesehen sein, die Endanschläge jeweils für die Endpositionen der Drehrostelemente 252, 253 und 254 vorsehen.

Die Einzelkomponenten der Drehrostmechanik 23 sind austauschbar vorgesehen. Beispielsweise sind die Zahnräder aufsteckbar vorgesehen. Dies erleichtert die Wartung und auch einen Seitenwechsel der Mechanik bei der Montage, falls erforderlich.

In den Drehrostelementen 252, 253 und 254 des Drehrosts 25 sind die schon erwähnten Öffnungen 256 vorgesehen. Die Drehrostelemente 252, 253 und 254 können über deren jeweilige Lagerachsen 81, die über die Drehmechanik 23 von dem Antrieb 231, vorliegend den beiden Motoren 231, angetrieben werden, jeweils zumindest um 90 Grad, bevorzugt zumindest um 120 Grad, noch mehr bevorzugt um 170 Grad um die jeweilige Lager- bzw. Drehachse 81 gedreht werden. Dabei kann der maximale Drehwinkel 180 Grad, oder auch etwas weniger als 180 Grad sein, so wie das die Rostlippen 257 zulassen. Dabei ist die Drehmechanik 23 derart eingerichtet, dass das dritte Drehrostelement 254 einzeln und unabhängig vom ersten Drehrostelement 252 und vom zweiten Drehrostelement 243 gedreht werden kann, und dass das erste Drehrostelement 252 und das zweite Drehrostelement 243 gemeinsam und unabhängig von dem dritten Drehrostelement 254 gedreht werden können. Die Drehmechanik 23 kann beispielsweise mittels Laufrädern, Zahn- oder Antriebsriemen und/oder Zahnrädern entsprechend vorgesehen sein.

Die Drehrostelemente 252, 253 und 254 können bevorzugt als Gussrost mit einem Laserzuschnitt hergestellt werden, um eine exakte Formhaltigkeit sicherzustellen. Dies insbesondere um die Luftführung durch das Brennstoffbett 28 so genau wie möglich zu definieren, und störende Luftströmungen, beispielsweise Luftsträhnen an den Rändern der Drehrostelemente 252, 253 und 254, zu vermeiden.

Die Öffnungen 256 in den Drehrostelementen 252, 253 und 254 sind derart eingerichtet, dass diese für das übliche Pelletmaterial und/oder die üblichen Hackschnitzel klein genug sind, dass diese nicht hindurchfallen, und dass diese groß genug sind, dass der Brennstoff gut mit Luft beströmt werden kann. Zudem sind die Öffnungen 256 groß genug bemessen, dass diese durch Aschepartikel oder Störstoffe (z. B. keine Steine im Brennstoff) blockiert werden können.

Fig. 9 zeigt nun den Drehrost 25 in geschlossener Position, wobei alle Drehrostelemente 252, 253 und 254 horizontal ausgerichtet bzw. geschlossen sind. Dies ist die Position im Regelbetrieb. Durch die gleichmäßige Anordnung der Vielzahl der Öffnungen 256 wird eine gleichmäßige Durchströmung des Brennstoffbetts 28 (dieses ist in Fig. 9 nicht dargestellt) auf dem Drehrost 25 sichergestellt. Insofern kann hier der optimale Verbrennungszustand hergestellt werden. Der Brennstoff wird aus Richtung des Pfeiles E auf den Drehrost 25 aufgebracht; insofern wird der Brennstoff von der rechten Seite der Fig. 9 auf den Drehrost 25 hinaufgeschoben.

Im Betrieb sammelt sich Asche und oder Schlacke auf dem Drehrost 25 und insbesondere auf den Drehrostelementen 252, 253 und 254 an. Mit dem vorliegenden Drehrost 25 kann eine effiziente Abreinigung des Drehrosts 25 erfolgen.

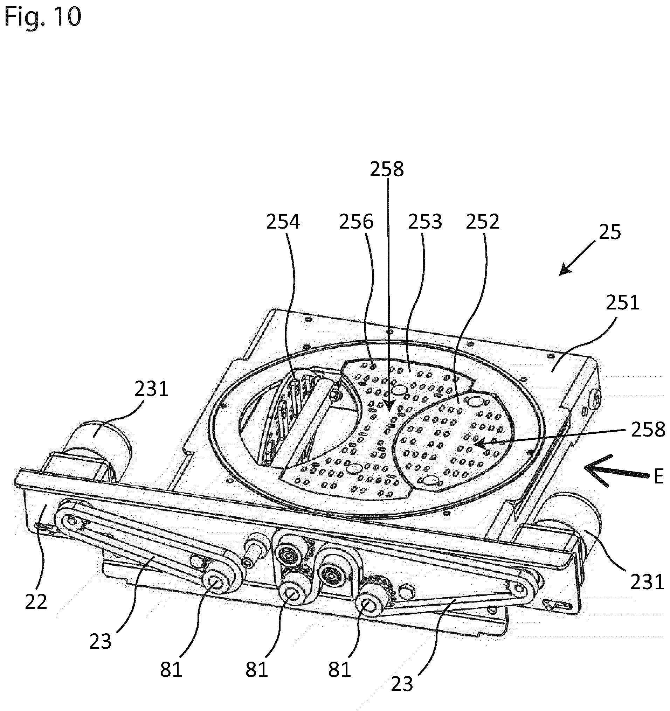

Fig. 10 zeigt den Drehrost in dem Zustand einer Teilabreinigung des Drehrosts 25 im Gluterhaltungsbetrieb. Dazu wird nur das dritte Drehrostelement 254 gedreht. Dadurch, dass nur eines der drei Drehrostelemente gedreht wird, erhält sich die Glut auf dem ersten und dem zweiten Drehrostelement 252, 253, während zugleich die Asche und Schlacke nach unten aus der Brennkammer 24 hinausfallen kann. In der Folge ist keine externe Zündung zur Wiederaufnahme des Betriebs erforderlich (dies spart bis zu 90% Zündenergie). Eine weitere Folge sind eine Verschleißminderung der Zündeinrichtung (beispielsweise eines Zündstabes) und eine Stromersparnis. Weiter kann vorteilhaft eine Aschereinigung im Betrieb der Biomasse-Heizanlage 1 erfolgen.

Fig. 10 zeigt ebenso einen Zustand der Gluterhaltung während einer (oft schon ausreichenden) Teilabreinigung. Damit kann der Betrieb der Anlage 1 vorteilhaft kontinuierlicher erfolgen, womit im Gegensatz zur üblichen Vollabreinigung eines herkömmlichen Rostes keine langwierige vollständige Zündung erfolgen muss, die einige zehn Minuten in Anspruch nehmen kann.

Zudem wird eine potentielle Schlackebildung bzw. Schlackeansammlung an den beiden Außenkanten des dritten Drehrostelements 254 bei der Drehung dessen (auf-)gebrochen, wobei aufgrund der kurvenförmigen Außenkanten des dritten Drehrostelements 254 nicht nur die Abscherung über eine größere Gesamtlänge als bei herkömmlichen rechteckigen Elementen des Stands der Technik erfolgt, sondern auch mit einer ungleichmäßigen Bewegungsverteilung in Bezug auf die Außenkante (in der Mitte erfolgt eine größere Bewegung als an den unteren und oberen Rändern). Damit ist die Brecherfunktion des Drehrosts 25 deutlich verstärkt.

In Fig. 10 sind (beidseitige) Rostlippen 257 des zweiten Drehrostelements 253 erkennbar. Diese Rostlippen 257 sind derart eingerichtet, dass das erste Drehrostelement 252 und das dritte Drehrostelement 254 im geschlossenen Zustand dieser auf der Oberseite der Rostlippen 257 aufliegen, und somit die Drehrostelemente 252, 253 und 254 zueinander spaltfrei vorgesehen und damit dichtend vorgesehen sind. Damit werden Luftsträhnen und unerwünschte ungleichmäßige Primärluftströmungen durch das Glutbett vermieden. Vorteilhaft wird damit die Effizienz der Verbrennung verbessert.

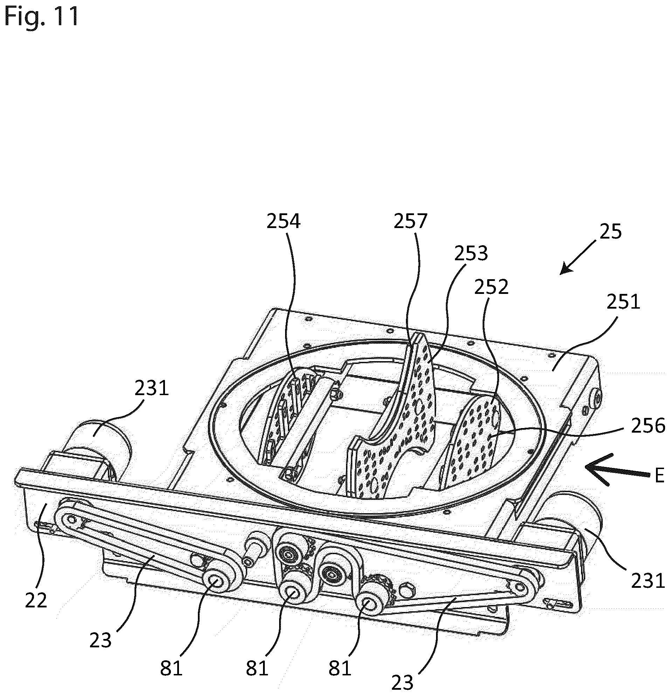

Fig. 11 zeigt den Drehrost 25 im Zustand der Universalabreinigung, welche bevorzugt während eines Anlagenstillstands durchgeführt wird. Dabei werden alle drei Drehrostelemente 252, 253 und 254 gedreht, wobei das erste und zweite Drehrostelement 252, 253 bevorzugt in die entgegengesetzte Richtung gedreht werden wie das dritte Drehrostelement 254. Realisiert wird damit einerseits eine vollständige Entleerung des Drehrosts 25, und andererseits wird die Asche und Schlacke nunmehr an vier ungeraden Außenkanten aufgebrochen. Mit anderen Worten wird eine vorteilhafte 4-fache Brecherfunktion realisiert. Das vorstehend in Bezug auf Fig. 9 zu der Geometrie der Außenkanten Erläuterte gilt auch in Bezug auf Fig. 10.

Zusammengefasst realisiert der vorliegende Drehrost 25 neben dem Normalbetrieb (vgl. Fig. 9) vorteilhaft zwei unterschiedliche Arten der Abreinigung (vgl. Fig. 10 und 11), wobei die Teilabreinigung eine Abreinigung während des Betriebs der Anlage 1 erlaubt.

Im Vergleich dazu sind marktübliche Drehrostsysteme nicht ergonomisch und haben durch ihre rechteckige Geometrie nachteilige Totecken, in welchen die Primärluft den Brennstoff nicht optimal durchströmen kann, womit eine Luftsträhnenbildung auftreten kann. An diesen Ecken kommt es auch gehäuft zu einer Schlackenbildung. Diese Punkte sorgen für eine schlechtere Verbrennung mit einem schlechteren Wirkungsgrad.

Der vorliegende einfache mechanische Aufbau des Drehrosts 25 gestaltet diesen robust, zuverlässig und langlebig.


(Rezirkulationseinrichtung)


Zur Optimierung der vorstehend kurz erwähnten Rezirkulationseinrichtung 5 wurden wiederum CFD-Simulationen, weitere Überlegungen und Praxistests durchgeführt. Dabei wurde die nachstehend beschriebene Rauchgasrezirkulation für eine Biomasse-Heizanlage vorgesehen.

Bei den Berechnungen wurden beispielsweise ein 100 kW Kessel im Nennlastbetriebsfall mit einem Lastbereich von 20 bis 500 kW mit verschiedenen Brennstoffen (beispielsweise Hackgut mit 30% Wasseranteil) simuliert. Vorliegend wurde zudem für alle mit Rauchgas in Berührung stehenden Flächen eine leichte Verschmutzung oder Verrußung (sogenanntes Fouling mit einer Dicke von 1 mm) berücksichtigt. Die Emissivität einer derartigen Fouling-Schicht wurde mit 0,6 angesetzt.

Das Ergebnis dieser Optimierung und der einhergehenden Überlegungen ist in den Fig. 12 bis 17 dargestellt. Die Figuren 12 bis 14 zeigen verschiedene Ansichten der Rezirkulationseinrichtung 5, welche in den Figuren 1 bis 3 ersichtlich ist.

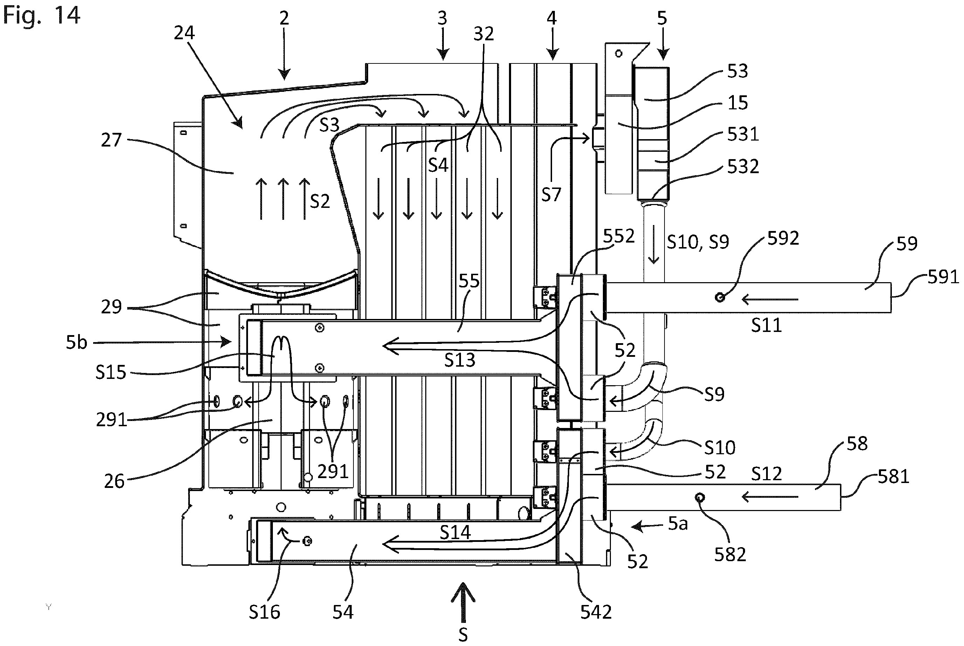

Fig. 12 zeigt eine herausgestellte Schrägansicht der Rezirkulationseinrichtung 5 mit den Brennkammersteinen 29, die die Primärverbrennungszone 26 umgeben. Fig. 13 zeigt eine herausgestellte semitransparente Schrägansicht der Rezirkulationseinrichtung 5 der Fig. 12. Die Fig. 14 zeigt eine Seitenansicht der Rezirkulationseinrichtung 5 der Figuren 12 und 13. Der Pfeil S der Figuren 12 bis 14 entspricht jeweils dem Pfeil S der Fig. 1, welcher die Richtung der Seitenansicht auf die Biomasse-Heizanlage 1 angibt.

Die Rezirkulationseinrichtung 5 wird nachstehend anhand der Figuren 12, 13, 14 und 15 näher beschrieben.

Die Rezirkulationseinrichtung 5 weist einen Rezirkulationseintritt 53 mit einem Rezirkulationseintrittskanal 531 und einem Rezirkulationseintrittskanalteiler 532 auf. Der Rezirkulationseintritt 53 und der Rezirkulationseintrittskanal 531 sind stromabwärts eines Gebläses 15 (vgl. Fig. 3) am Rauchgasausgang der Biomasse-Heizanlage 1 nach dem Wärmetauscher 3 oder nach der (optionalen) Filtereinrichtung 4 vorgesehen. Der Rezirkulationseintrittskanalteiler 532 kann das zu rezirkulierende Rauchgas beziehungsweise das Rezi-Gas in einen Primärrezirkulationskanal 56 und einen optionalen Sekundärrezirkulationskanal 57 verzweigen. Ist keine Sekundärrezirkulation vorhanden, ist auch kein Rezirkulationseintrittskanalteiler 532 erforderlich.

Der Primärrezirkulationskanal 56 mündet über ein Luftventil 52, vorliegend beispielhaft ein Drehschieberventil 52, in einer Primärmischkammer 542. In die Primärmischkammer 542 mündet über ein weiteres Luftventil 52, vorliegend beispielhaft ein Drehschieberventil 52, zudem ein Primärluftkanal 58, welcher wiederum einen Primärlufteintritt 581 für beispielsweise Raum- oder Frischluft, entsprechend als Primärfrischluft bezeichnet, aufweist. Der Primärluftkanal 58 kann einen Primärluftsensor 582 (beispielsweise zum Erfassen der Temperatur und/oder des Sauerstoffgehalts der Primärfrischluft) aufweisen.

Über den Primärlufteintritt 581 und den Primärluftkanal 58 sowie das Luftventil 52 gelangt noch unvermischte Primärluft, d. h. Frischluft oder Umgebungsluft, in die Primärmischkammer 542, in der die Umgebungsluft entsprechend der Ventilstellung der Luftventile 52 mit dem rezirkulierten Rauchgas aus dem Primärrezirkulationskanal 56 gemischt wird. Stromabwärts anschließend an die Primärmischkammer 542 ist ein Primärmischkanal 54 vorgesehen, in welchem das Gemisch aus Primär(-frisch)luft und Rauchgas weiter vermischt wird. Die Primärmischkammer 542 mit deren Ventilen 52 und der Primärmischkanal 54 bilden zusammen eine Primärmischeinheit 5a aus.

Der Sekundärrezirkulationskanal 57 mündet über ein Luftventil 52, vorliegend beispielhaft ein Drehschieberventil 52, in einer Sekundärmischkammer 552. In die Sekundärmischkammer 552 mündet über ein weiteres Luftventil 52, vorliegend beispielhaft ein Drehschieberventil 52, zudem ein Sekundärluftkanal 59, welcher wiederum einen Sekundärlufteintritt 591 für Sekundärfrischluft aufweist. Der Sekundärluftkanal 59 kann einen Sekundärluftsensor 592 (beispielsweise zum Erfassen der Temperatur und/oder des Sauerstoffgehalts der Sekundärluft) aufweisen.

Über den Sekundärlufteintritt 591 und den Sekundärluftkanal 59 sowie das Luftventil 52 gelangt die Sekundärfrischluft, d. h. Umgebungsluft, in die Sekundärmischkammer 552, in der die Umgebungsluft entsprechend der Ventilstellung der Luftventile 52 mit dem rezirkulierten Rauchgas aus dem Sekundärrezirkulationskanal 57 gemischt wird. Stromabwärts anschließend an die Sekundärmischkammer 552 ist ein Sekundärmischkanal 55 vorgesehen, in welchem das Gemisch aus Sekundärfrischluft und Rauchgas weiter vermischt wird. Die Sekundärmischkammer 552 mit deren Ventilen 52 und der Sekundärmischkanal 55 bilden die Sekundärmischeinheit 5b aus.

Die Stellung der vier Luftventile 52 wird jeweils mittels eines Ventilstellaktors 521, der beispielsweise ein Elektromotor sein kann, eingestellt. In der Fig. 12 ist aus Gründen der Übersichtlichkeit nur einer der vier Ventilstellaktoren 521 bezeichnet.

Der Primärmischkanal 54 weist eine Mindestlänge L1 auf. Die Mindestlänge L1 beträgt beispielsweise zumindest 700 mm von Beginn des Primärmischkanals 54 am Durchtritt aus der Primärmischkammer 542 bis zu dem Ende des Primärmischkanals 54. Es hat sich gezeigt, dass die Länge L1 des Primärmischkanals 54, für eine gute Durchmischung auch länger, vorzugsweise zumindest 800 mm, idealerweise 1200 mm betragen sollte. Die Länge L1 sollte zudem vorzugsweise aus konstruktiven und drucktechnischen Gründen beispielsweise 2000 mm nicht überschreiten. Der Primärmischkanal 54 kann an dessen stromaufwärtigen Anfang einen Einlauftrichter aufweisen, der sich in Richtung des Endes des Primärmischkanals 54 verjüngt. Damit wird die Strömung am stromaufwärtigen Anfang des Kanals 54 in die Mitte gebündelt, und vermischt sich nochmals besser, da aufgrund thermischer Unterschiede eine Strähnenbildung insbesondere an der oberen Seite des Kanals 54 auftreten kann. Dieser Strähnenbildung wird mittels der Verjüngung des Primärmischkanals 54 an dessen Anfang vorteilhaft entgegengewirkt.

Der (optionale) Sekundärmischkanal 55 weist eine Mindestlänge L2 auf. Die Mindestlänge L2 beträgt beispielsweise zumindest 500 mm von Beginn des Sekundärmischkanals 55 am Durchtritt aus der Sekundärmischkammer 552 bis zu dem Ende des Sekundärmischkanals 55. Es hat sich gezeigt, dass die Länge L2 des Sekundärmischkanals 55, für eine gute Durchmischung auch länger, vorzugsweise zumindest 600 mm, idealerweise 1200 mm betragen sollte. Auch die Länge L2 sollte zudem aus konstruktiven und drucktechnischen Gründen beispielsweise 2000 mm nicht überschreiten. Der Sekundärmischkanal 55 kann an dessen stromaufwärtigen Anfang ebenso einen Einlauftrichter aufweisen, der sich in Richtung des stromabwärtigen Endes des Sekundärmischkanals 55 verjüngt.

Der Primärmischkanal 54 und der (optionale) Sekundärmischkanal 55 können mit einem rechteckigen Querschnitt mit einer jeweiligen Innenbreite von 160 mm +-30 mm (vertikal) / 120 mm +- 30 mm (vertikal) und einer Innendicke (horizontal) von 50 mm +-15 mm ausgeführt sein. Aufgrund dieser Ausgestaltung des Primärmischkanals 54 und des Sekundärmischkanals 55 jeweils als langer, flacher und an dem Wärmetauscher 3 und der Brenneinrichtung anliegender Kanal, werden mehrere vorteilhafte Effekte erzielt. Zum einen wird das Gemisch aus Rauchgas und Primär(-frisch)luft/Sekundär(-frisch)luft vorteilhaft vorerwärmt, bevor es zur Verbrennung gelangt. Beispielsweise kann ein Gemisch, das nach der Primärmischkammer 542 eine Temperatur von +25 Grad Celsius aufweist, am stromabwärtigen Ende des Primärmischkanals 54 eine im Nennlastfall um 15 Grad Celsius höhere Temperatur aufweisen. Zum anderen ist der Querschnitt und die Längsausdehnung so groß gewählt, dass die Vermischung auch nach den Mischkammern 542, 552 fortgesetzt wird, womit eine Verbesserung der Homogenisierung der Strömung verursacht wird. Dabei wird der Strömung genügend Weg zu einer weiteren Vermischung der eh schon zu Beginn des Weges turbulent vorliegenden Strömung bereitgestellt.

In anderen Worten wird mit dem länglichen Primärmischkanal 54 eine Wegstrecke zur weiteren Vermischung nach der Primärmischkammer 542 bereitgestellt, wobei die Primärmischkammer 542 gezielt zur Schaffung von erheblichen Turbulenzen zu Beginn der Wegstrecke vorgesehen ist. Hierzu kann der optionale Einlauftrichter der Kanäle 54, 55 ebenso beitragen.

Es können vorzugsweise die beiden Längen L1 und L2 im Rahmen einer gewissen Toleranz (+- 10 mm) übereinstimmen.

Über einen Primärdurchtritt 541 wird das rezirkulierte Rauchgas, welches vorausgehend mit "frischer" Primärluft gut vermischt wurde, von unten zum Drehrost 25 zugeführt. Durch dessen Öffnungen 256 tritt dieses Gemisch aus rezirkuliertem Rauchgas und Primärfrischluft (d.h. die Primärluft für die Brennkammer 24) in die Primärverbrennungszone 26 der Brennkammer 24 ein. Insofern ist die Primärrezirkulation zum Rezirkulieren des Rauchgas-Primärfrischluft Gemischs derart vorgesehen, dass dieses von unten in die Primärverbrennungszone 26 eintritt.

Über einen (optionalen) Sekundärdurchtritt 551 und einen anschließenden Ringkanal 50 (vgl. Fig. 13) um die Brennkammersteine 29 wird das rezirkulierte Rauchgas, welches vorausgehend mit "frischer" Sekundärluft d.h., Sekundärfrischluft (oder bei Entfall der Sekundärrezirkulation mit Primär(-frisch)luft) gut vermischt wurde, zu den (ebenso optionalen) Rezirkulations- bzw. Sekundärluftdüsen 291 zugeführt. Die Sekundärluftdüsen 291 sind dabei, wie erläutert, nicht auf die Mitte der Primärverbrennungszone 26 ausgerichtet, sondern sind diese azentrisch ausgerichtet, um einen Drall der nach oben aus der Primärverbrennungszone 26 in die in die Sekundärverbrennungszone 27 verlaufende Strömung zu bewirken (d. h. eine nach oben gerichtete Wirbelströmung mit einer vertikalen Drallachse). Insofern kann die Sekundärrezirkulation zum Rezirkulieren des Rauchgas-Sekundärfrischluft-Gemischs zumindest teilweise in die Sekundärverbrennungszone 27 vorgesehen sein.

Die Figuren 13 und 14 zeigen entsprechend zu der Fig. 12 den Verlauf der Strömungen der Luft, des rezirkulierten Rauchgases und der Rauchgas-Luft-Gemische in der Rezirkulationseinrichtung 5 anhand der (schematischen) Strömungspfeile S8 bis S16. Die Pfeile S1 bis S16 geben die strömungstechnische Konfiguration an, d.h., den Verlauf des Flusses der diversen Gase oder bewegten Massen in der Biomasse-Heizanlage 1. Viele der vorliegenden Komponenten oder Merkmale sind dabei strömungstechnisch verbunden, wobei dies mittelbar (d.h., über andere Komponenten) oder unmittelbar erfolgen kann.

Wie in der Fig. 13 und der Fig. 14 jeweils ersichtlich ist, tritt das Rauchgas, das nach dem Wärmetausch aus dem Wärmetauscher 3 und aus der optionalen Filtereinrichtung 4 ausströmt, durch den Rezirkulationseintritt 5 in den Rezirkulationseintrittskanal 531 der Rezirkulationseinrichtung 5 ein (vgl Pfeil S8). Nach einer (optionalen) Aufteilung der Rauchgasströmung durch einen (optionalen) Rezirkulationseintrittskanalteiler 532 strömt das Rauchgas der Primärrezirkulation durch den Primärrezirkulationskanal 56 (vgl. Pfeil S10), abhängig von der Stellung eines der einstellbaren Luftventile 52 in die Primärmischkammer 541, in der das Rauchgas mit der Primärfrischluft vermischt wird, die durch den Primärluftkanal 58, abhängig von der Stellung eines weiteren der einstellbaren Luftventile 52, ebenso in die Primärmischkammer 541 einströmt (vgl. Pfeil S12).

In der Folge entsteht eine Mischströmung (vgl. Pfeil S14) in dem Primärmischkanal 54 aus Rauchgas und Primärfrischluft, in der sich diese beiden Komponenten aufgrund der Turbulenzen und der Länge des Primärmischkanals 54 vorteilhaft vermischen. Am Ende des Primärmischkanals 54 ist ein homogenes Gemisch aus Rauchgas und Primärfrischluft entstanden, welches durch den Primärdurchtritt 541 zur Primärverbrennungszone 26 strömt (vgl. Pfeil S16).

Sollte eine (strömungstechnisch ähnlich der Primärrezirkulation vorgesehene) Sekundärrezirkulation vorhanden sein, strömt das Rauchgas nach dessen Aufteilung im Rezirkulationseintrittskanalteiler 532 durch den Sekundärrezirkulationskanal 57 über ein weiteres einstellbares Luftventil 52 in die Sekundärmischkammer 552 (vgl. Pfeil S9), in welcher das Rauchgas mit der über den Sekundärluftkanal 59 und ein weiteres einstellbares Ventil 52 ebenso in die Sekundärmischkammer 552 einströmenden Sekundärfrischluft (vgl. Pfeil S11) vermischt wird. Diese Vermischung des Rauchgases und der Sekundärfrischluft setzt sich im Sekundärmischkanal fort (vgl. Pfeil S13), womit die Durchmischung beider Komponenten verbessert wird. Das entstandene vorteilhaft homogene Gemisch strömt durch den Sekundärdurchtritt 551 in den Ringkanal 50 um die Brennkammersteine 29 und durch die Rezirkulationsdüsen 291 in die Brennkammer 24 (vgl. Pfeil S15).

Das schematische Blockdiagramm der Fig. 15 zeigt den vorstehend mit Bezug auf die Figuren 12 bis 14 erläuterten Strömungsverlauf in den jeweiligen Einzelkomponenten der Rezirkulationseinrichtung 5, sowie der der Biomasse-Heizanlage 1. In dem Blockdiagramm der Fig. 15 sind sowohl die Primärrezirkulation als auch die optionale Sekundärrezirkulation als vollständiger Kreislauf dargestellt. Die Rezirkulationseinrichtung 5 kann auch nur eine Primärrezirkulation aufweisen.

Mittels der Rezirkulation des Rauchgases wird dieses im Grundsatz nach der Verbrennung mit Frischluft vermischt, wobei insbesondere der Sauerstoffgehalt erhöht wird, und einer erneuten Verbrennung zugeführt. Damit können brennbare Reste im Rauchgas, die ansonsten ungenutzt durch den Kamin abgeführt werden würden, nun doch noch einen Beitrag zur Verbrennung leisten.

Die jeweiligen Ventile 52 mit der Primärmischkammer 541 und dem (sich vorzugsweise annähernd horizontal erstreckenden) Primärmischkanal 54 bilden die Primärmischeinheit 5a aus. Die jeweiligen Ventile 52 mit der Sekundärmischkammer 552 und dem Sekundärmischkanal 55 können die Sekundärmischeinheit 5b ausbilden. Betreffend der in Fig. 14 verdeckten Teile der Strömungsführung, wird auf die Fig. 3 und die zugehörigen Erläuterungen verwiesen.

Weiter ist in Fig. 15 ergänzend der sogenannte Falschlufteintrag berücksichtigt, der vorliegend als Störfaktor berücksichtigt wurde. Dabei gelangt Falschluft aus der Umgebung über Undichtigkeiten und insbesondere auch die Brennstoffzufuhr in die Brennkammer 24, wobei dies eine zusätzliche Luftquelle für die Verbrennung darstellt, die bei der Einstellung des Mischungsverhältnisses des Gemischs oder der Gemische zu berücksichtigen ist. Deshalb ist die Biomasse-Heizanlage 1 vorliegend vorzugsweise derart eingerichtet, dass der Falschlufteintrag im Nennlastbetriebsfall auf weniger als 6%, vorzugsweise weniger als 4%, der Luftmenge des Gemischs aus Primärfrischluft und rezirkuliertem Rauchgas (und bei vorhandener Sekundärrezirkulation der Luftmenge des Gemischs aus Sekundärfrischluft und rezirkuliertem Rauchgas und des Gemischs aus Primärfrischluft und rezirkuliertem Rauchgas) beträgt.

Falschluft könnte im Übrigen auch Nachteilhaft von dem weiteren Strömungsweg des Rauchgases nach der Verbrennung zurück in die Brennkammer 24 gelangen, beispielsweise über die übliche Ascheabfuhr. Eine Lösung für dieses Problem bietet die später näher beschriebene Übergangsschnecke 73, womit diese die Rauchgasrezirkulation 5 und damit die Rauchgasbehandlung verbessern kann.

(Primär- und Sekundärmischkammer mit Ventilen)

Die Fig. 16 zeigt eine Schnittansicht der Primärmischkammer 542, sowie der zwei eingangsseitigen (Primär-) Luftventile 52 mit deren (Primär-) Ventilvorkammern 525 aus einem schrägen Sichtwinkel (vgl. in der Außenansicht entsprechend die Fig. 12 und die Fig. 13).

Das rezirkulierte Rauchgas strömt über den rohrförmigen Primärrezirkulationskanal 56 durch einen Primärreziventileintritt 544 in die optional vorgesehene und vorliegend lediglich beispielhaft oben angeordnete (Primär-) Ventilvorkammer 525, welche durch ein Ventilgehäuse 524 des oberen (Primär-) Luftventils 52 umfasst ist. Anstelle der Ventilvorkammer 525 kann beispielsweise auch der Primärrezirkulationskanal 56 derart eingerichtet sein, dass sich dessen Querschnitt kontinuierlich zum Luftventil 52 hin erweitert, womit eine eigene Vorkammer entfallen könnte.

Über den Primärluftkanal 58 strömt Primärfrischluft durch einen Primärlufteintritt 545 in eine optional vorgesehene und vorliegend lediglich beispielhaft unten angeordnete (Primär-) Ventilvorkammer 525, welche durch ein weiteres Ventilgehäuse 524 des unteren (Primär-) Luftventils 52 umfasst ist.

Alternativ kann das rezirkulierte Rauchgas auch der unteren Ventilvorkammer 525 zugeführt werden, während die Primärfrischluft der oberen Ventilvorkammer zugeführt werden kann.

Die (Primär-) Ventilvorkammern 525 der (Primär-) Luftventile 52 sind annähernd kegelstumpfförmig oder zylindrisch ausgebildet, und erweitern die Querschnittsfläche des, vorliegend beispielhaft oberen, Luftventils 52 für die Strömung des Rauchgases im Vergleich zu dem Querschnitt des Primärrezirkulationskanals 56. Damit kann einerseits Material und Platz gespart werden, da der Primärrezirkulationskanal 56 mit geringerem Querschnitt vorgesehen sein kann, und andererseits kann für die Steuerung (oder Regelung) der Strömung durch das Luftventil 52 eine größere effektive Ventilfläche vorgesehen werden. Eine solche größere Ventilfläche weist insbesondere die Vorteile auf, dass diese verschmutzungsunempfindlicher (u. A. gegenüber Verrußung) ist und aufgrund des größeren Querschnitts im offenen Zustand einen geringeren Druckverlust aufweist.

Die Luftventile 52 sind vorliegend beispielhaft Drehschieberventile 52.

Das obere und das untere (Primär-) Luftventil 52 können übereinstimmend ausgeführt sein.

Die beiden Luftventile 52 als Drehschieberventile 52 umfassen jeweils einen Ventilstellaktor 521, beispielsweise einen Elektromotor, der eine drehbar gelagerte Ventilstellachse 522 drehen kann, sowie einen an der Ventilstellachse 522 angebrachten Ventilkörper 527 mit einem Stellachsenbefestigungselement und zumindest einem Ventilflügel 523. Der zumindest eine Ventilflügel 523 des Ventilkörpers 527 des jeweiligen Luftventils 52 ist am stromabwärtigen Ende der Ventilvorkammer 525 vorgesehen. Die Ventilstellachse 522 tritt durch die Primärmischkammer 542 hindurch. Damit ist der Ventilstellaktor 521 des jeweiligen Luftventils 52 an einer Seite der Primärmischkammer 542 vorgesehen, und der Ventilkörper 527 ist an der dem Ventilstellaktor 521 gegenüberliegenden Seite der Primärmischkammer 542 vorgesehen.

Der zumindest eine Ventilflügel 523 ist derart angeordnet, dass dieser in zumindest zwei unterschiedliche Stellungen bewegt bzw. gedreht werden kann, um die Durchlässigkeit des Luftventils 52 einzustellen.

Beispielsweise ist in einer ersten der Stellungen zumindest ein Teilbereich zumindest einer Ventildurchtrittsöffnung 526 mittels einer Sperrfläche, die durch den Ventilflügel 523 vorgesehen ist, fluidisch versperrt, so dass das Rauchgas den Teilbereich der zumindest einen Ventildurchtrittsöffnung 526 in die Primärmischkammer 542 nicht durchströmen kann. In der zweiten der Stellungen gibt die Sperrfläche den Teilbereich zumindest teilweise frei, so dass der Teilbereich von dem Rauchgas durchströmt werden kann.

Es kann in der ersten Stellung das Luftventil 52 vorzugsweise vollständig geschlossen sein, wobei die Sperrfläche des zumindest einen Ventilflügels 523 die Durchgangsfläche der entsprechenden zumindest einen Ventildurchtrittsöffnung 526 vollständig abdeckt. In Fig. 16 ist diese geschlossene Ventilstellung beispielhaft durch das untere Luftventil 52 dargestellt.

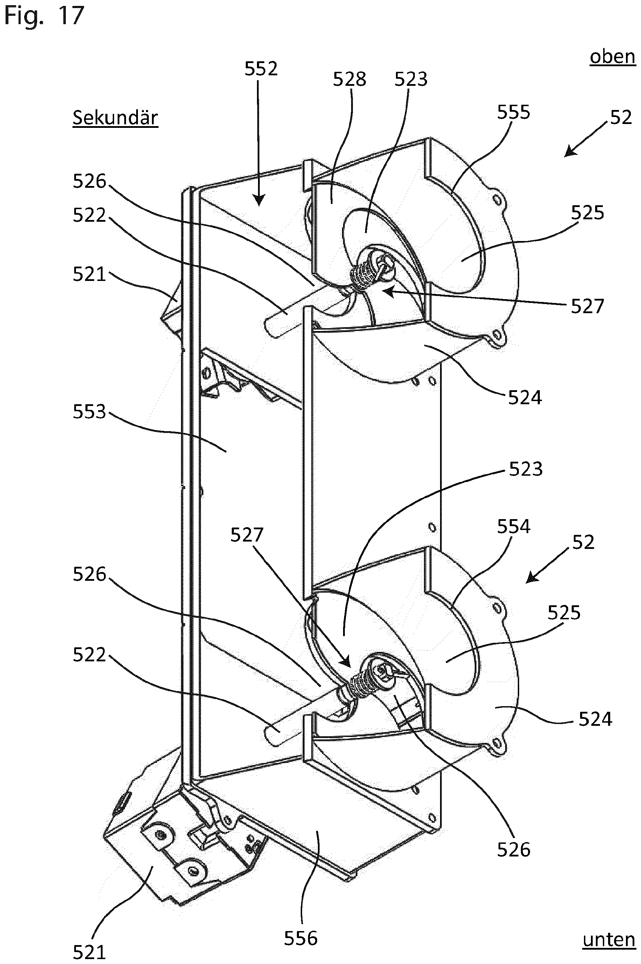

Weiter kann in der zweiten Stellung das Luftventil 52 vorzugsweise vollständig geöffnet sein, wobei die Sperrfläche des zumindest einen Ventilflügels 523 die Durchgangsfläche der entsprechenden zumindest einen Ventildurchtrittsöffnung 526 vollständig freigibt. In Fig. 17 ist diese offene Ventilstellung beispielhaft durch das obere Luftventil 52 dargestellt. Im vollständig geöffneten Zustand kann die Durchgangsfläche des Luftventils beispielsweise 5300 mm$^2$ +- 500 mm$^2$ betragen. Das Luftventil 52 kann vorzugsweise frei zwischen dem vollständig geöffneten Zustand und dem vollständig geschlossenen Zustand eingestellt werden.

Vorliegend sind bei jeweils einem Luftventil 52 beispielhaft zwei Ventilflügel 523 mit jeweils zwei Ventildurchtrittsöffnungen 526 in die Primärmischkammer 542 vorgesehen (d. h. der Ventilkörper bildet einen Fächerschieber aus). Allerdings können auch nur ein oder auch eine Vielzahl von Ventilflügeln und eine korrespondierende Anzahl von Ventildurchtrittsöffnungen 526 vorgesehen sein.

Weiter ist in Fig. 16 eine Ventilfläche 528 erkennbar, in der die Ventildurchtrittsöffnungen 526 vorgesehen sind und die durch das Primärmischkammergehäuse 546 ausgebildet ist. Die Ventilflügel 523 können vorzugsweise auf der Ventilfläche 528 in jeder Stellung des Ventilkörpers 527 auf- bzw. anliegen.

Vorzugsweise ist das Luftventil 52 derart eingerichtet, dass die Öffnungsfläche der Ventildurchtrittsöffnung 526 größer ist als die Querschnittsfläche des Primärreziventileintritts 544 (und des Primärluft(ventil)eintritts 545), um den Druckverlust durch das Ventil zu optimieren.

Die beiden Ventilflügel 523 sind spiegelsymmetrisch (punktsymmetrisch) zur Mittelachse der Ventilstellachse 522 vorgesehen. Weiter sind die beiden Ventilflügel 523 sichelförmig ausgestaltet. Dementsprechend können die beiden korrespondierenden Ventildurchtrittsöffnungen 526 ebenso sichelförmig ausgestaltet sein. Die Sichelform kann dabei beispielsweise derart vorgesehen sein, dass diese am äußeren Ende der Sichel spitz zuläuft.

Diese Sichelform des zumindest einen Ventilflügels 523 bedingt, dass die Strömung, die durch die zumindest eine Ventildurchtrittsöffnung 526 durchfließt, ein noch unregelmäßigeres Querschnittsprofil aufweist, ohne jedoch den Druckverlust zu stark zu erhöhen. Dies verbessert die Durchmischung in der Primärmischkammer 542.

Die vorstehende Ausgestaltung des Luftventils 52 als Drehschieberventil ist zudem in einem sogenannten Schwachlastbetrieb oder auch einem Einschaltbetrieb der Biomasse-Heizanlage 1 relevant, d. h. wenn diese nur mit nur geringen Temperaturen betrieben wird. Durch die geringen Temperaturen können die herkömmlichen Klappenventile durch Ruß im Rauchgas besonders stark verschmutzt werden. Infolge dieser Verschmutzung sind die üblichen Ventile nur noch schwergängig zu betätigen, was deren Belastung und folglich den Verschleiß nachteilhaft vergrößert. Die vorliegende Ausgestaltung des Luftventils 52 verringert diese Problematik.

Mittels des (beispielhaft oberen) Luftventils 52, vorliegend ebenso beispielhaft das Drehschieberventil 52, ist es möglich, die Menge des rezirkulierten Rauchgases vor dessen Mischung mit (frischer) Primärluft bedarfsgerecht einzustellen. Das weitere Luftventil 52 für die Primärfrischluft ermöglicht entsprechend eine Regelung der Menge der zugeführten Primärfrischluft. Damit kann das Mischungsverhältnis aus Primärfrischluft und rezirkuliertem Rauchgas vorteilhaft eingestellt werden. Somit kann das Mischungsverhältnis an unterschiedliche Betriebspunkte oder den optimalen Betriebspunkt der Verbrennung angepasst werden.

Das obere Drehschieberventil 52 kann auch als ein Primärrauchgasrückfuhrventil bezeichnet werden.

Das untere Drehschieberventil 52 kann auch als ein Primärfrischluftzufuhrventil bezeichnet werden.

Anstelle von Drehschieberventilen 52 können auch andere Arten von Ventilen zum Einsatz kommen, beispielsweise Gleitschieberventile, Linerarschieberventile oder Kugelventile.

Die den beiden Luftventilen 52 strömungstechnisch nachgelagert angeordnete Primärmischkammer 542 dient der Zusammenführung des rezirkulierten Rauchgases mit Primärfrischluft, welche für die Primärverbrennungszone 26 der Brennkammer 24 vorgesehen ist. Die Primärmischkammer 542 und die beiden (Primär-) Ventile 52 sind Teil der Primärmischeinheit 5a und dienen der einstellbaren Vermischung von Rauchgas mit Primärfrischluft.

Die Primärmischkammer 542 ist durch ein Primärmischkammergehäuse 546 ausgebildet. Das Primärmischkammergehäuse 546 ist in etwa quader- oder kastenförmig vorgesehen und weist einen Primärmischkammeraustritt 543 auf. Der Primärmischkammeraustritt 543 ist stromabwärts zu den beiden Ventildurchtrittsöffnungen 526 vorgesehen. Der Primärmischkammeraustritt 543 ist weiter auf einer der Seite der beiden Ventildurchtrittsöffnungen 526 gegenüberliegende Seite des Primärmischkammergehäuses 546 vorgesehen.

Das Primärmischkammergehäuse 546 mit dessen Ventildurchtrittsöffnungen 526 und dem Primärmischkammeraustritt 543 kann derart eingerichtet sein, dass sich diese nicht durch das Kammervolumen hindurch unmittelbar gegenüberliegen. In anderen Worten sind die Eintrittsöffnungen 526 der Primärmischkammer 542 und die Austrittsöffnung 543 aus der Primärmischkammer 542 derart vorgesehen, dass die sich vereinigenden Strömungen des Rauchgases und der Primärfrischluft besser vermischen können, da die Strömungen zusammengeführt werden.

Bei der Primärmischkammer 542 der Fig. 16 wird beispielsweise die (Gesamt-) Strömung des Rauchgases durch das obere Luftventil 52 erzwungenermaßen nach unten direkt vor den Eintritt der Primärfrischluft in die Primärmischkammer 542 abgelenkt. Damit werden die beiden Strömungen vorteilhaft zusammengeführt und können sich besser vermischen.

Zudem prallen sowohl die Strömung des Rauchgases durch das obere Luftventil 52 als auch die Strömung der Primärfrischluft durch das untere Luftventil 52 (die beispielsweise in Fig. 16 nach links gerichtet sind) gegen eine Wand des Primärmischkammergehäuses 546, womit diese zwangsweise auch bei geringen Strömungsgeschwindigkeiten Luftverwirbelungen ausbilden. Dies fördert eine gleichmäßige Vermischung des Rauchgases mit der Primärfrischluft.

Zudem sind die Eintrittsströmungen der Primärfrischluft und des Rauchgases in die Primärmischkammer 542 sichelförmig ausgestaltet, womit diese ein zusätzliches Element darstellen, das Verwirbelungen schon beim Eintritt in die Primärmischkammer 542 schafft.

Eine gute beziehungsweise homogene Vermischung des rezirkulierten Rauchgases mit der Primärfrischluft ist wichtig, da es sonst zur Strähnenbildung (d. h. zu dauerhaften Inhomogenitäten) in der der Verbrennung zugeführten Luft kommen kann, womit der Verbrennungsprozess nachteilhaft beeinflusst wird. Beispielsweise erhöht sich der Schadstoffausstoß der Biomasse-Heizanlage 1 bei einem inhomogenen Gemisch aus Primär(-frisch)luft und rezirkuliertem Rauchgas.

Im Ergebnis verbessert die vorstehend dargestellte Konfiguration vorteilhaft die Vermischung des Rauchgases mit der Primärfrischluft mit einem einfachen Aufbau.

Die Fig. 17 zeigt betreffend der Sekundärrezirkulation eine Schnittansicht der Sekundärmischkammer 552, sowie der zwei eingangsseitigen (Sekundär-) Luftventile 52 mit deren (Sekundär-) Ventilvorkammern 525 aus einem schrägen Sichtwinkel (vgl. in der Außenansicht entsprechend die Fig. 12 und die Fig. 13). Gleiche oder ähnliche Merkmale der Fig. 17 entsprechen strukturell und funktionell denjenigen der Fig. 16, weshalb zur Vermeidung von Wiederholungen auf die vorstehenden Ausführungen zu der weitgehend analogen Fig. 16 verwiesen wird.

Das rezirkulierte Rauchgas strömt über den rohrförmigen Sekundärrezirkulationskanal 57 durch einen Sekundärreziventileintritt 554 in die optional vorgesehene und vorliegend beispielhaft unten angeordnete (Sekundär-) Ventilvorkammer 525, welche durch ein Ventilgehäuse 524 des oberen (Sekundär-) Luftventils 52 umfasst ist.

Über den Sekundärluftkanal 58 strömt Sekundärfrischluft (Frischluft) durch einen Sekundärluft(ventil)eintritt 555 in eine optional vorgesehene und vorliegend beispielhaft oben angeordnete (Sekundär-) Ventilvorkammer 525, welche durch ein weiteres Ventilgehäuse 524 des unteren (Sekundär-) Luftventils 52 umfasst ist.

Vorliegend wurde die Lage der Eintritte der Rezirkulationskanäle 56, 57 in die Ventilvorkammern 525 (und damit die Lage der für das Rauchgas vorgesehenen Ventile 52) derart eingerichtet, dass die Rezirkulationskanäle 56, 57 über eine möglichst lange Strecke parallel geführt werden können. Damit kann eine gemeinsame Isolation der Rezirkulationskanäle 56, 57 vorgesehen sein, und es kann der thermische Verlust über die Strecke der Rezirkulationskanäle 56, 57 vorteilhaft verringert werden.

Alternativ kann das rezirkulierte Rauchgas auch der oberen (Sekundär-) Ventilvorkammer 525 zugeführt werden, während die Sekundärfrischluft der unteren (Sekundär-) Ventilvorkammer 525 zugeführt wird.

Die Sekundärmischkammer 552 weist ein Sekundärmischkammergehäuse 556 mit einem Mischkammervolumen und einen Sekundärmischkammeraustritt 553 analog zur Primärmischkammer 542 auf.

Die beiden Luftventile 52 der Fig. 17 sind ebenso wie bei der Fig. 16 als Drehschieberventile ausgeführt. Das obere und das untere (Sekundär-) Luftventil 52 können übereinstimmend ausgeführt sein.

Das untere Drehschieberventil 52 kann auch als ein Sekundärrauchgasrückfuhrventil bezeichnet werden. Das untere Drehschieberventil 52 der Fig. 17 ist in einem vollständig geöffneten Zustand dargestellt.

Das obere Drehschieberventil 52 kann auch als ein Sekundärfrischluftzufuhrventil bezeichnet werden. Das obere Drehschieberventil 52 der Fig. 17 ist in einem nur teilweise geöffneten Zustand dargestellt.

Die beiden Sekundärdrehschieberventile 52 sind annähernd identisch zu den beiden Primärdrehschieberventilen 52 der Fig. 16 vorgesehen. Dies gilt insbesondere für die sichelförmige Form der Ventilflügel 523.

Die den beiden Luftventilen 52 nachgelagert angeordnete Sekundärmischkammer 552 dient der Zusammenführung des rezirkulierten Rauchgases mit Primärfrischluft, welche für die Primärverbrennungszone 26 der Brennkammer 24 vorgesehen ist. Die Primärmischkammer 542 und die beiden (Primär-) Ventile 52 sind Teil der Primärmischeinheit 5a und dienen der einstellbaren Vermischung von Rauchgas mit Primärfrischluft.

Die Sekundärmischkammer 552 ist durch ein Sekundärmischkammergehäuse 556 ausgebildet. Das Sekundärmischkammergehäuse 556 ist in etwa quader- oder kastenförmig vorgesehen und weist einen Sekundärmischkammeraustritt 553 auf. Der Sekundärmischkammeraustritt 553 ist stromabwärts zu den beiden Ventildurchtrittsöffnungen 526 vorgesehen. Der Sekundärmischkammeraustritt 553 ist weiter auf einer der Seite der beiden Ventildurchtrittsöffnungen 526 gegenüberliegenden Seite des Sekundärmischkammergehäuses 556 vorgesehen.

Das Sekundärmischkammergehäuse 556 mit dessen Ventildurchtrittsöffnungen 526 und dem Sekundärmischkammeraustritt 553 kann zudem derart eingerichtet sein, dass sich diese nicht durch das Kammervolumen hindurch unmittelbar gegenüberliegen. In anderen Worten sind die Eintrittsöffnungen 526 der Sekundärmischkammer 552 und die Austrittsöffnung 553 aus der Sekundärmischkammer 552 derart vorgesehen, dass die sich vereinigenden Strömungen des Rauchgases und der Primärfrischluft besser vermischen können, da die Strömungen zusammengeführt werden.

Im Unterschied zu der Konfiguration der Primärmischkammer 542 der Fig. 16 ist bei der Sekundärmischkammer 552 eine alternative Konfiguration der Eintrittsöffnungen 526 der Sekundärmischkammer 552 und der Austrittsöffnung 553 aus der Sekundärmischkammer 552 dargestellt. Dabei liegt die Austrittsöffnung 553 zwischen den beiden Eintrittsöffnungen 526 (bzw. den Ventildurchtrittsöffnungen 526). Damit werden die Sekundärfrischluftströmung aus der oberen Eintrittsöffnung 526 und die Rauchgasströmung aus der unteren Eintrittsöffnung 526 derart abgelenkt, dass diese in etwa in der Mitte der der Sekundärmischkammer 552 zusammentreffen, sich dort unter Wirbelbildung vermischen und als gemeinsame Strömung aus der Austrittsöffnung 553 austreten. Durch den mehrmaligen Richtungswechsel und diese Art der Zusammenführung der beiden Strömungen kann ebenso wie bei der Primärmischkammer 542 vorteilhaft eine homogene Vermischung der Sekundärfrischluft und der Primärfrischluft erfolgen.

Die Effekte der Konfiguration der Sekundärmischkammer 552 der Fig. 17 sind somit analog denjenigen der Konfiguration der Primärmischkammer 542 der Fig. 16, worauf verwiesen wird.

Eine gute (homogene) Vermischung der Primärfrischluft bzw. der Sekundärfrischluft mit dem rezirkulierten Rauchgas leistet einen wichtigen Beitrag zur Optimierung der Verbrennungsvorgänge in der Biomasse-Heizanlage 1. Beispielsweise weisen die Primärfrischluft und die Sekundärfrischluft im Regelfall ca. 21% Sauerstoffanteil auf, und es weist das rezirkulierte Rauchgas im Nennlastbetriebsfall beispielsweise einen Sauerstoffanteil von nur ca. 4 bis 5% auf. Würde nun eine inhomogene Vermischung bei der Rezirkulation erfolgen, so würde das Brennstoffbett 28 von unten und auch die Primärverbrennungszone 26 inhomogen mit Sauerstoff versorgt. Im schlimmsten Fall würde bei einer starken Strähnenausbildung bei der Rezirkulation Luft mit nur einem sehr geringen Sauerstoffanteil zur Verbrennung zu einem Teil des Brennstoffs zugeführt. Der Verbrennungsvorgang dieses Teils würde damit deutlich verschlechtert.

Mittels der Primärmischeinheit 5a und der (optionalen) Sekundärmischeinheit 5b wird jedoch eine homogene Vermischung der Primärfrischluft bzw. der Sekundärfrischluft mit dem rezirkulierten Rauchgas bereitgestellt. Weitere Vorteile einer homogenen Vermischung sind die Reduktion von Temperaturspitzen (welche Fouling und Verschlackung verursachen können), sowie die Reduktion von Rauchgas-Geschwindigkeitsspitzen (welche die Materialbeanspruchung und Erosion der Anlage erhöhen).

Die Gestaltung der Sekundärluft- bzw. Rezirkulationsdüsen 291 für die Sekundärrezirkulation erfolgte vorliegend unter den gleichen Gesichtspunkten wie vorstehend dargelegt.

Die Sekundärluft- bzw. Rezirkulationsdüsen 291 sind derart angeordnet, dass eine turbulente Durchmischung und Homogenisierung der Strömung über den Querschnitt der Brennkammer 24 erfolgt. Insbesondere sind die Sekundärluft- bzw. Rezirkulationsdüsen 291 derart angeordnet und ausgerichtet, dass diese in der Brennkammer 24 eine Drallströmung herbeiführen können.

Insbesondere führt die vorstehend erläuterte Ausgestaltung der Sekundärluftdüsen 291 zu einer Minimierung des Feuerungsvolumens sowie zu einer Reduktion der Emissionen.

Ist nur eine Primärrezirkulation vorgesehen, können mittels der beiden (Primär-) Luftventile 52 sowohl der Massestrom (kg/h) als auch das Mischungsverhältnis des Gemischs aus rezirkuliertem Rauchgas und Primärfrischluft vorteilhaft derart geregelt werden, dass ein optimaler Betriebspunkt der Verbrennung in der Biomasse-Heizanlage 1 erreicht wird oder dieser zumindest annähern erreicht wird.

Sollte eine Sekundärrezirkulation und eine Primärrezirkulation vorgesehen sein, so kann beides vorteilhaft unabhängig voneinander geregelt werden. D. h., es können der Massestrom (kg/h) und das Mischungsverhältnis des Gemischs der Primärrezirkulation und der Massestrom (kg/h) und das Mischungsverhältnis des Gemischs der Sekundärrezirkulation jeweils unabhängig voneinander eingestellt werden.

Damit kann die Verbrennung vorteilhaft flexibel und optimiert im Betriebpunkt, auch unter Berücksichtigung eines vorbekannten Falschlufteintrags, eingestellt werden. In anderen Worten führt insbesondere der Einsatz von zwei (nur Primärrezirkulation) oder vier (Primär- und Sekundärrezirkulation) unabhängig einstellbaren Luftventilen 52 dazu, dass ein größerer Regelungsbereich für die Rezirkulationseinrichtung 5 als üblich vorgesehen ist.

Im Betriebsfall kann insbesondere der Primär- und optional auch der Sekundär-Luftstrombereich vollautomatisch über eine Steuerung geregelt werden. Damit erreicht man eine optimierte Leistungs- und Verbrennungsoptimierung, verringert Schlackenbildung durch Unterschreitung der Ascheschmelzpunkte in der Brennkammer und sorgt für hohe Wirkungsgrade, sehr geringe Feinstaubwerte mit geringen NOx-Emissionen; und dies bei unterschiedlichen Brennstoffen und Brennstoffqualitäten, da die Rezirkulationseinrichtung 5 somit insbesondere für eine hybride Feuerung mit unterschiedlichen Brennstoffen geeignet ist.

Die Rezirkulationseinrichtung 4 sieht somit eine verbesserte Rauchgasbehandlung vor.

(Ventile)

Die Rezirkulationseinrichtung 4 kann des Weiteren auch alternativ (oder ergänzend) Luftventile in Form von Schieberventilen 52s aufweisen. Insofern können alle hierin offenbarten Rezirkulationseinrichtungen 4 auch mit zumindest einem der nachstehend erläuterten Schieberventile 52s vorgesehen sein.

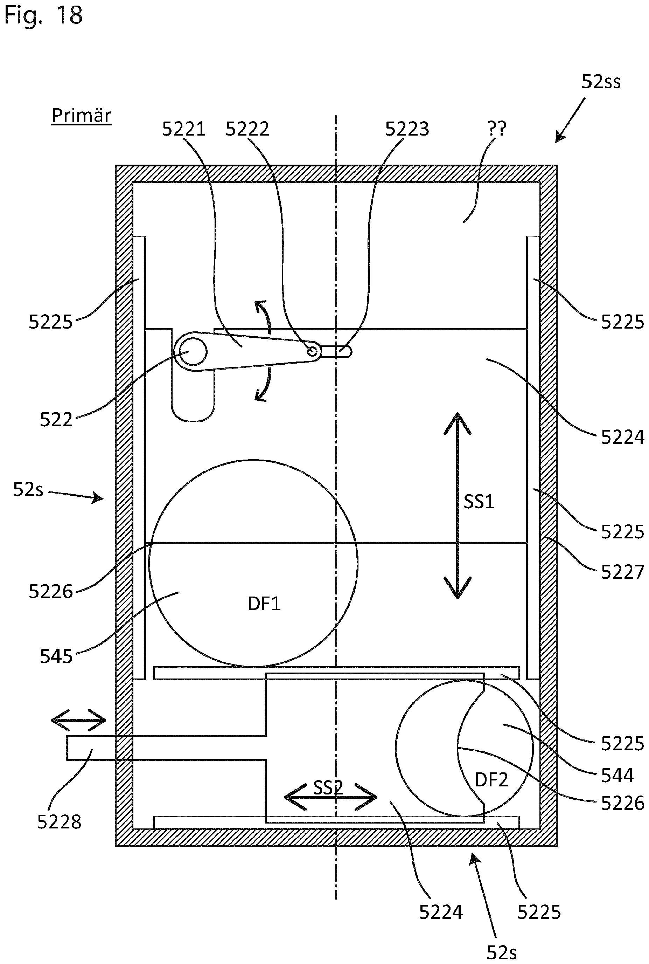

In dem Kombinations-Schieberventil 52ss der Fig. 18 sind zwei Schieberventile in einem Ventilaufbau 5227 integriert vorgesehen. Fig. 19 zeigt korrespondierend eine dreidimensionale Ansicht des Kombinations-Schieberventils der Fig. 18.

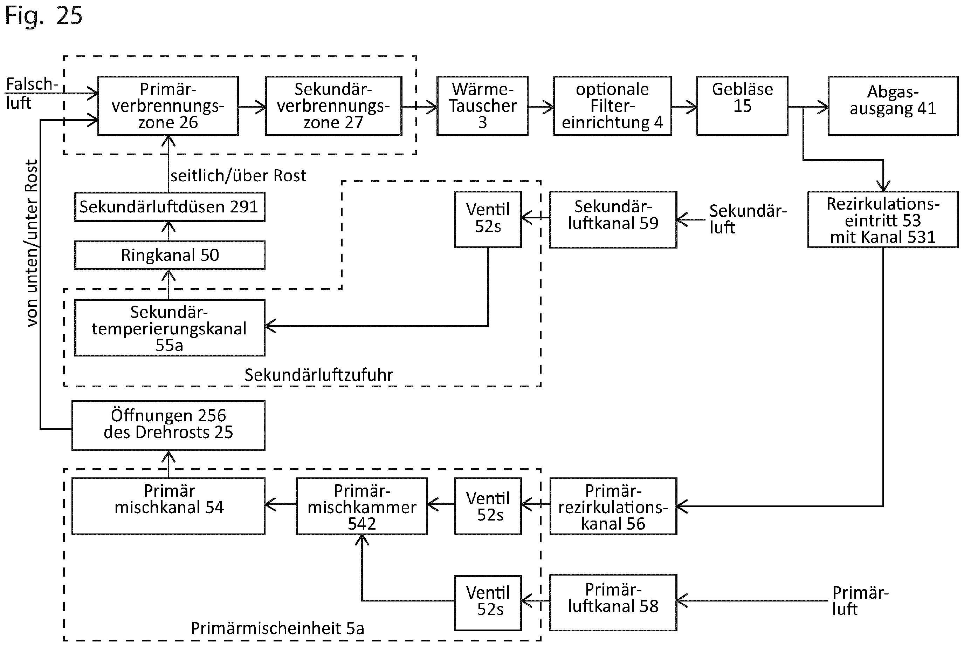

Das Kombinations-Schieberventil 52ss ist primärseitig in der Rezirkulationseinrichtung 4 vorgesehen. Das Kombinations-Schieberventil 52ss kann im Rezirkulationskreislauf beispielsweise als primärseitiges Schieberventil 52ss (vgl. Fig. 25) und als primärseitiges Ventil 52 (vgl. Fig. 15) zum Einsatz kommen.

Allerdings ist keine Primärmischkammer 542 vorgesehen, sondern es erfolgt eine Mischung der (frischen) Primärluft aus dem Primärluftkanal 58 mit der rezirkulierten Verbrennungsluft aus dem Primärrezirkulationskanal 56 im Primärmischkanal 54. Die Funktion des Primärmischkanals 54 ist dieselbe, wie schon an anderer Stelle erläutert.

Das primärseitige Kombinations-Schieberventil 52ss weist im Kern zwei einzelne Schieberventile 52s auf, welche in einem gemeinsamen Ventilaufbau 5227 integriert vorgesehen sind. Dabei werden zwei eingangsseitig getrennte Fluid- oder Medienströme ausgangsseitig zusammengeführt, vorliegend in dem/in den Primärmischkanal 54.

Insofern erfüllt das Kombinations-Schieberventil 52ss im Kern zwei Aufgaben: es erlaubt das Einstellen des Mischungsverhältnisses von Primärfrischluft mit rezirkuliertem Rauchgas, und die Einstellung des Gesamtdurchflusses aus beiden Eingängen.

Im Detail weist das Kombinations-Schieberventil 52ss ein erstes Schieberventil 52s für die Primärluft bzw. Primärfrischlauf mit einem beispielhaft größeren Querschnitt bzw. mit einer größeren Querschnittsfläche im Vergleich zu dem später erläuterten zweiten Schieberventil 52s auf, wobei das erste Schieberventil 52s einen Primärluftventileintritt 545 mit einer einstellbaren Durchtrittsfläche DF1 aufweist. Der größere Querschnitt wurde in diesem Beispiel für die Primärluft gewählt, um den Druckverlust für die Primärluft niedrig zu halten, und da üblicherweise mehr Primärluft zur Zuführung in die Brennkammer 24 benötigt wird als rezirkuliertes Rauchgas. Alternativ können die Querschnittsflächen der beiden Schieberventile 52s auch gleich groß oder anders vorgesehen sein.

Die geöffnete Querschnittsfläche DF1 des ersten Schieberventils 52s kann mittels einem verschiebbaren Schieberglied 5224 eingestellt werden. Das Schieberglied 5224 kann entlang der Richtungen des Doppelpfeils SS1 hin- und her verschoben werden. Dabei ist das Schieberglied 5224 in Führungen 5225, vorliegend beidseitige Führungen 5225, beweglich gelagert. Die Bewegung des Schieberglieds 5224 des ersten Schieberventils 52s wird mittels eines (nicht dargestellten) Ventilstellaktors 521, beispielsweise ein Elektromotor, über eine drehbar gelagerte Ventilstellachse 522 mit einem daran angebrachten Ventilstellhebel 5221 bewirkt werden, wobei der Ventilstellhebel 5221 das Schieberglied 5224 mittels eines Ventilstellhebellagers 5222, das in einer Ventilstellhebelausnehmung 5223 gleitend gelagert ist, in Fig. 18 auf- und ab bewegen. Dabei bestimmt die Stellung des Schieberglied 5224 und damit der Schiebergliedkante 5226 die für die Strömung verfügbare bzw. geöffnete Querschnittsfläche DF1.

Für das zweite Schieberventil 52s gilt analoges. Dieses Schieberventil 52s weist ein vorliegend in Fig. 18 in (beidseitigen) Führungen 5225 entlang der Richtungen des Doppelpfeils SS2 horizontal verschiebbares Schieberglied 5224 auf. Dabei öffnet oder schließt das Schieberglied 5224 den Primärreizventileintritt 544. Die geöffnete Querschnittsfläche DF2 des ersten Schieberventils 52s wird wiederum durch die Stellung des Schieberglied 5224 und damit der Schiebergliedkante 5226 des zweiten Schieberventils 52s bestimmt bzw. kann damit eingestellt werden. Angetrieben wird das Schieberglied 5224 des zweiten Schieberventils 52s über ein Ventilstellschubglied 5228 beispielsweise durch einen (nicht dargestellten) Linearantrieb, oder einen (nicht dargestellten) Elektromotor mit einem Hebel.

Das Schieberglied 5224 des zweiten Schieberventils 52s kann (im Unterschied zum Schieberglied 5224 des ersten Schieberventils 52s) eine Schiebergliedkante 5226 mit einer Hohlkehle aufweisen. Eine Hohlkehle kann vorliegend eine negative (konkave) Ausrundung der Schiebergliedkante 5226 sein. Alternativ kann die Ausnehmung auch eckig vorgesehen sein.

Sollte der Antrieb des zweiten Schieberventils 52s ausfallen, oder ein mechanischer Fehler vorliegen, ist es mittels der Hohlkehle vorteilhaft nicht möglich, dass sich das zweite Schieberventil 52s vollständig schließt. Es verbleibt in jedem Fall eine Rest-Querschnittsfläche DF2, womit Verpuffungen in der Brennkammer 24 vorgebeugt werden.

Denn sollte das zweite Schieberventil 52s vollständig schließen (was vorliegend vermieden wird), kann eine gefährliche Luftmangelsituation in der Brennkammer auftreten, die zu gefährlichen Verpuffungen führen kann. Folglich ist im Schieberglied 5224 des zweiten Schieberventils 52s eine derartige Ausnehmung vorgesehen, die bei einem vollkommen geschlossenen Schieber (bzw. im (vollkommen) geschlossenen Zustand) immer noch einen Mindest-Öffnungsquerschnitt DF2 von zumindest 10%, vorzugsweise zumindest 15%, des maximal möglichen Öffnungsquerschnitts freigibt, so dass immer ein gewisser Luftstrom gesichert aufrechterhalten werden kann, sofern Unterdruck in der Brennkammer 24 anliegt. Insofern ist vorliegend ein sicherheitstechnischer Aspekt berücksichtigt.

Die beiden Schieberglieder 5224 sind vorzugsweise plattenförmig, beispielsweise als Blech vorgesehen.

Weiters können (nicht dargestellte) Rückstellfedern vorgesehen sein, welche die Schieberglieder 5224 im Falle des Ausfalls eines Antriebs in eine vordefinierte (End-) Position bewegen.

Der gemeinsame Ventilaufbau 5227 kann beispielsweise ein gemeinsamer Rahmen für beide Schieberventile 52s sein. Dabei können die Auslässe beider Schieberventile 52s in demselben Volumen münden, beispielsweise dem Primärmischkanal 54. Die beiden Schieberventile 52s weisen strömungstechnisch getrennte Einlässe auf, d. h., die Strömungen werden bis zum jeweiligen Schieberventil 52s getrennt geführt.

Es können die Geometrien des ersten Schieberventils 52s vorzugsweise derart vorgesehen sein, dass ein zumindest annähernd linearer Zusammenhang oder zumindest ein abschnittsweise linearer Zusammenhang zwischen der geöffneten Querschnittsfläche DF1 und dem durchtretenden Volumenstrom besteht. Damit lässt sich eine Regelung mit dem Schieberventil 52 einfacher vorsehen. Das Gleiche kann für das später erläuterte zweite Schieberventil 52s gelten.

Der Arbeitsbereich des ersten Schieberventils 52s liegt vorzugsweise zwischen 15% und 50% der geöffneten Querschnittsfläche bzw. Durchtrittsquerschnittsfläche.

Der Arbeitsbereich des zweiten Schieberventils 52s liegt vorzugsweise zwischen 30% und 80% der geöffneten Querschnittsfläche bzw. Durchtrittsquerschnittsfläche.

In Fig. 19 ist zu erkennen, dass die beiden Schieberventile 52s in den (schon vorher beschriebenen) Primärmischkanal 54 münden, wo die Primärluft und das Rezi-Gas vermischt und temperiert werden, bevor das Resultat über den Primärdurchtritt unter den Rost 25 gelangt. Zudem ist in Fig. 19 eine Stellung des Schieberglieds 5224 des zweiten (unteren) Schieberventils 52s zu erkennen, bei der im vollkommen geschlossenen Zustand des Schieberglieds 5224 immer noch ein Mindest-Öffnungsquerschnitt für die Strömung verbleibt (vgl. Fig. 19, unten rechts, der linsenförmige Spalt).

Anzumerken ist, dass die Bewegungsrichtungen der Schieberglieder 5224 nicht unbedingt senkrecht zueinander angeordnet sein müssen, sondern auch in anderen Winkeln, beispielsweise parallel zueinander. Zudem können auch mehr als zwei Stellventile 52s vorgesehen sein, beispielsweise falls zwei Primärluftzuläufe vorhanden sind.

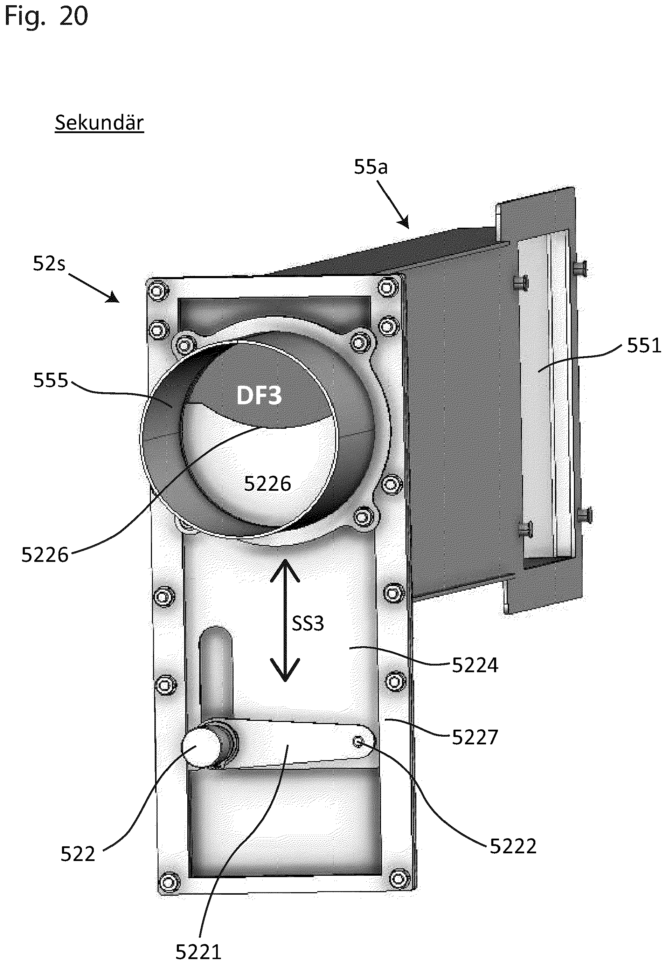

Fig. 20 zeigt eine dreidimensionale Ansicht eines einfachen Schieberventils 52s für die Sekundärrezirkulation. Dieses Schieberventil 52s kann als sekundärseitiges Schieberventil 52s (vgl. Fig. 25) zum Einsatz kommen.

Das Schieberventil 52s für die Sekundärrezirkulation der Fig. 20 weist als Einlass einen Sekundärluftventileintritt 555 auf. Die geöffnete Querschnittsfläche DF3 des Schieberventils 52s für die Sekundärrezirkulation ist mittels eines Schieberglieds 5224 einstellbar, welches beweglich in Führungen gelagert ist (vgl. Doppelpfeil SS3).

Die Bewegung des Schieberglieds 5224 des Schieberventils 52s der Fig. 20 wird mittels eines (nicht dargestellten) Ventilstellaktors 521, beispielsweise ein Elektromotor, über eine drehbar gelagerte Ventilstellachse 522 mit einem daran angebrachten Ventilstellhebel 5221 bewirkt werden, wobei der Ventilstellhebel 5221 das Schieberglied 5224 mittels eines Ventilstellhebellagers 5222, das in einer Ventilstellhebelausnehmung 5223 gleitend gelagert ist, in Fig. 20 auf- und ab bewegt.

Es ist wiederum eine Ausnehmung an einer Schiebergliedkante 5226 vorgesehen, so wie das in Bezug auf die Figuren 18 und 19 beschrieben ist, worauf verwiesen wird. Auch bei dem Schieberventil 52s der Fig. 20 soll verhindert werden, dass dieses (auch im Falle einer Störung der Steuerung etc.) vollkommen geschlossen werden kann. Insofern ist die Ausnehmung oder die Hohlkehle derart vorgesehen, dass ein Mindest-Öffnungsquerschnitt bzw. als Mindest-Öffnungsquerschnittsfläche vorgesehen ist, der zumindest 10% des maximal möglichen Öffnungsquerschnitts ist. Auch hiermit werden u. A. gefährliche Betriebszustände und beispielsweise Verpuffungen im Kessel 11 vermieden.

Der Auslass des Schieberventils 52s für die Sekundärrezirkulation mündet in dem Sekundärtemperierungskanal 55a zur Temperierung der Sekundärluft, wobei letzterer wiederum im Sekundärdurchtritt 551 mündet.

Die möglichst genaue Einstellung der relevanten Fluidmengen, beispielsweise der zugeführten Verbrennungsluftmengen, ist ein wesentliches Kriterium bei der Umsetzung eines optimierten Regelungskonzeptes im Anlagenbetrieb. Die vorstehend in Bezug auf die Figuren 18 bis 20 erläuterten Schieberventile 52s weisen insbesondere in deren Arbeitsbereichen ein schnelles und genaues Einstellverhalten, eine gute Langzeitstabilität, eine hohe Fehlerrobustheit und relativ geringe Herstellungskosten auf. Mit diesen Ventilen 52s kann deshalb ein optimiertes Regelungskonzept positiv umgesetzt werden.

Des Weiteren lässt sich insbesondere über den Hebelarm 5221 und den Ventilstellaktor 521 die Öffnungsfläche für den Luftdurchtritt genau einstellen. Eine Rückholfeder (nicht dargestellt) kann im Übrigen dafür sorgen, dass trotz des einen möglicherweise konstruktionsbedingten leichten Spiels zwischen Antriebshebel und Ventilstellaktor das Schieberglied 5224 bzw. Schieberblatt 5224 bei einer bestimmten Position der Ventilstellachse 522 immer dieselbe Position einnimmt.

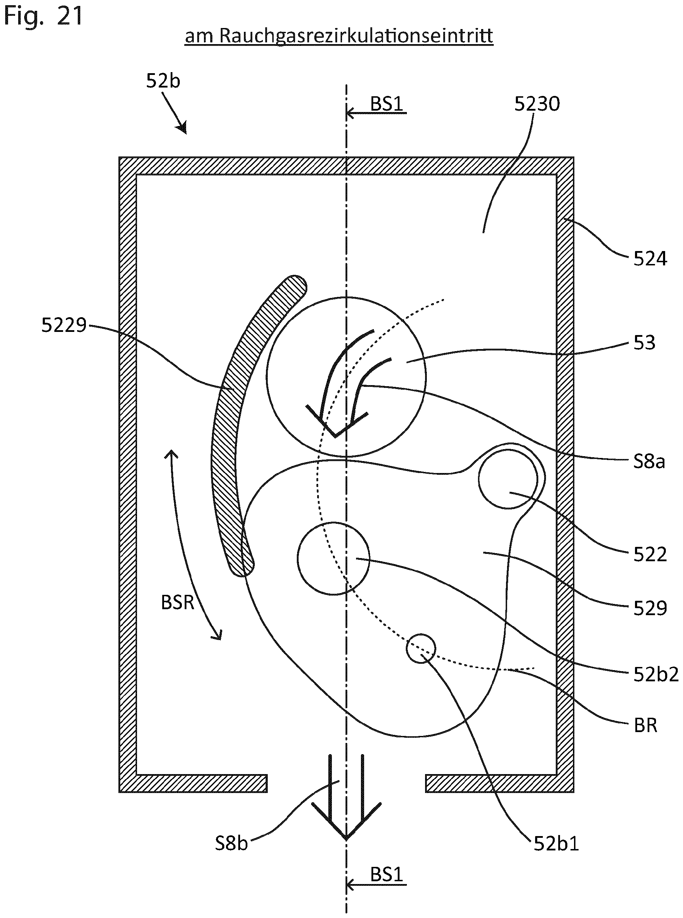

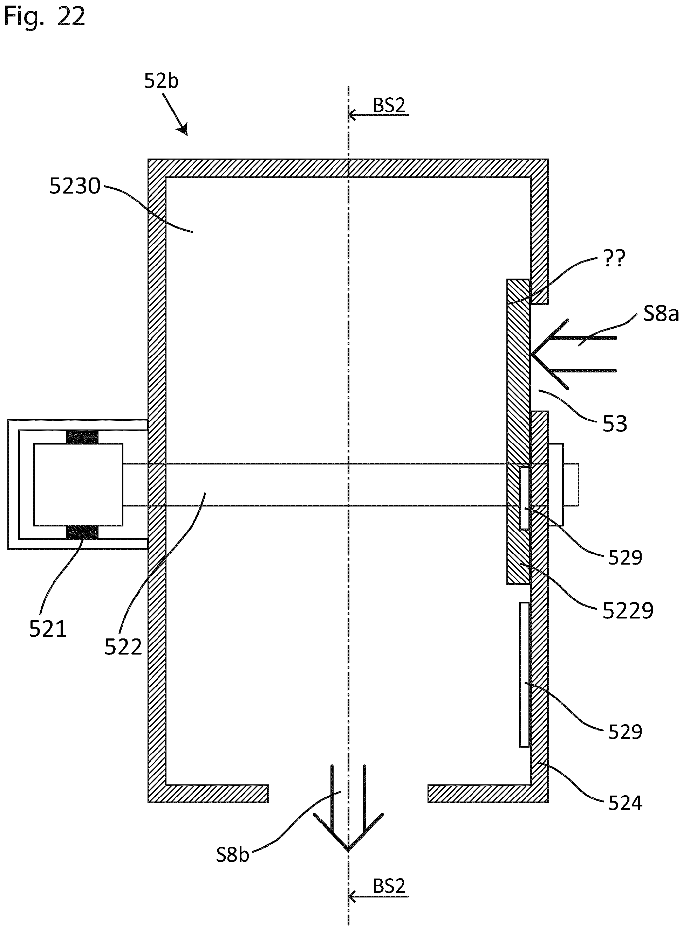

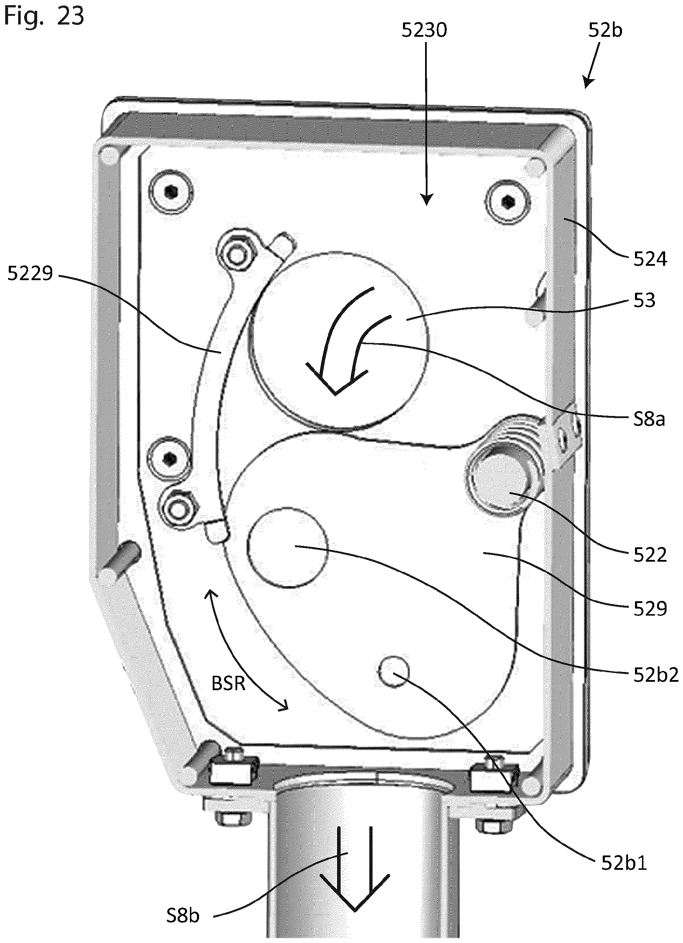

Fig. 21 zeigt eine Schnittansicht in ein Blendenventil 52b der Rezirkulationseinrichtung 5 entlang einer Schnittlinie BS2 der Fig. 22, und Fig. 22 zeigt wiederum eine Schnittansicht in das Blendenventil 52b der Fig. 22 entlang einer Schnittlinie BS1 der Fig. 21. Die korrespondierende Fig. 23 zeigt eine dreidimensionale Einsicht in das Blendenventil 52b der Figuren 21 und 22.

Das Blendenventil 52b weist ein Ventilgehäuse 524 mit einem Ventil(-innen)volumen 5230 auf, wobei das rezirkulierte Rauchgas durch das Innenvolumen 5230 strömt. Weiter weist das Blendenventil 52b eine beweglich angeordnete Ventilblende 529 auf, die über einen Ventilstellaktor 521, beispielsweise ein Elektromotor, verschoben werden kann. Dabei kann eine Ventilstellachse 522 die Schwenkachse für die Ventilblende 529 sein, wobei die Ventilblende 529 in den mit dem Doppelpfeil angegebenen Blendenschwenkrichtungen BSR (und beispielsweise/optional mit den Mittelpunkten der kreisförmigen Öffnungen auf einem gemeinsamen Teilkreisradius BR liegend) verschwenkt werden kann. Alternativ zum Verschwenken kann im Übrigen ein Blendenventil auch mit einer linear verschiebbaren Blende realisiert werden, ähnlich wie das in Bezug auf die Fig. 18 bis 20 erläutert ist.

Die Ventilblende 529 kann dabei einseitig in einer Führung 5229 geführt werden.

Die Blende 529 kann mit dem Ventilstellaktor 521 in zumindest zwei Stellungen, vorliegend sind es drei vorgegebene Stellungen, positioniert werden. Jede der Stellungen entspricht einer vorgegebenen Öffnungsquerschnittsfläche des Blendenventils 52b, die durch die Durchmesser oder durch die Öffnungsflächen der Blendenöffnungen 52b1, 52b1 und der Eintrittsöffnung (falls die Blende 529 nicht über der Eintrittsöffnung positioniert ist) vorgegeben sind.

Damit kann das Blendenventil 52b stufenweise eine Rauchgasströmung in dessen Durchfluss(-menge) steuern.

Beispielsweise kann die Öffnung 53 des Blendenventils 52b der Fig. 21 bis 23 mit dem Rezirkulationseintritt 53 in die Rezirkulationseinrichtung 5 zusammenfallen. Der Rezirkulationseintritt 52 kann einen vorgegebenen Maximaldurchmesser bzw. eine Maximalquerschnittsfläche aufweisen, welche durch die Blende 529 verkleinert werden kann. Insofern sind mit dem Blendenventil 52b drei effektive Querschnittsflächen für die Rauchgasströmung S8a einstellbar. Die derart eingestellte Rauchgasströmung verlässt das Ventilinnenvolumen 5230 durch eine weitere Öffnung, welche vorzugsweise ein Rauchgasrohr ist (vgl. den Pfeil S8b). Die Strömungspfeile S8a und S8b korrespondieren mit dem Strömungspfeil S8 der Fig. 24, allerdings ist die Strömung nun stufenweise oder schrittweise einstellbar.

Das vorstehend beschriebene Blendenventil 52b wurde speziell zur vorteilhaften Regelung der Rauchgasrezirkulation CFD-gestützt entwickelt. Dieses Blendenventil 52b wird über einen Motor angetrieben und verfügt beispielsweise über drei Positionen (es können alternativ auch zwei oder mehr als drei Positionen vorgesehen sein). Sie kann, beispielsweise direkt, am Austritt des Rauchgasventilators 15 montiert sein. Das Rauchgas selbst wird durch die Druckdifferenz zwischen dieser Position und dem Bereich unter dem Rost (dort herrscht üblicherweise Unterdruck vor) angesaugt und im späteren Verlauf in der Rezirkulationseinrichtung 5, wie obenstehend erläutert, mit der Primärluft vermischt. Um dabei eine Abkühlung des Rauchgases unter den Taupunkt und die damit verbundene Kondensation von Wasserdampf zu verhindern, kann die Rauchgasrezirkulationsleitung innerhalb der Außenhülle der Anlage und innerhalb der Außenisolierung geführt werden.

Zu den drei Positionen des Blendenventils 52b der Fig. 21 bis 23 kann beispielhaft das Folgende gelten:

Position 1: Die gesamte Querschnittsfläche der Rauchgasansaugöffnung 53 in der Rauchgasleitung wird freigegeben. Die Ventilblende 529 ist nicht über der Öffnung b53 positioniert, wie in Fig. 21 gezeigt. Diese Position kann im Zuge des Anfahrens des Kessels 11 angesteuert werden und dient dazu, die Klappe und die Leitung von möglichen Flugaschendepositionen zu reinigen (maximale Strömungsgeschwindigkeit).

Position 2: Es wird eine kleine kreisförmige Öffnung (Öffnung 52b1, Durchmesser beispielsweise ca. 8 mm) für den Durchtritt von Rauchgas aus der Rauchgasleitung in die Rauchgasrezirkulationsleitung freigegeben. Dabei wird diese Öffnung über die Rauchgasansaugöffnung 53 positioniert bzw. gedreht. Diese Öffnung 52b1 wird bei Betrieb mit feuchtem Hackgut gewählt. Es wird dabei ein Volumenstrom der Rauchgasrezirkulation eingestellt, der hoch genug ist, dass das rezirkulierte Rauchgas nicht unter den Wasserdampftaupunkt abkühlt (was zu Kondensatbildung und zu Korrosion führen würde), aber auch niedrig genug ist, dass die Brennkammer nicht zu stark abgekühlt wird.

Position 3: Es wird eine größere kreisförmige Öffnung (Öffnung 52b2, Durchmesser beispielsweise ca. 21,5 mm, d. h. größer als Öffnung 52b1) für den Durchtritt von Rauchgas aus der Rauchgasleitung in die Rauchgasrezirkulationsleitung freigegeben. Dabei wird diese Öffnung 52b2 über die Rauchgasansaugöffnung 53 positioniert bzw. gedreht. Diese Öffnung 52b2 wird bei Betrieb mit trockenem Hackgut und Pellets gewählt, da bei diesen Brennstoffen durch die höheren adiabaten Feuerraumtemperaturen (bei gleichem Verbrennungsluftüberschuss) eine stärkere Feuerraumkühlung durch rezirkuliertes Rauchgas notwendig ist.

Die Regelung erkennt anhand anderer Prozessparameter selbstständig, welche der drei vorstehend erläuterten Positionen 1 bis 3 aktiviert werden muss (siehe auch die später folgenden Erläuterungen). Insofern findet vorteilhaft eine

(Rauchgasrezirkulation einer weiteren Ausführungsform)

Fig. 24 zeigt eine herausgestellte semitransparente Schrägansicht einer Rezirkulationseinrichtung einer weiteren Ausführungsform. Diese Ausführungsform kann insbesondere die vorstehend beschriebenen Ventile, beispielsweise die Schieberventile 52s, aufweisen.

Bei dieser weiteren Ausführungsform ist bei der Sekundärluftzuführung keine Rezirkulation wie bei der Ausführungsform der Fig. 13 vorgesehen, sondern eine einfache gesteuerte oder geregelte Frischluftzuführung. Diese weitere Ausführungsform ist insofern einfacher und kostengünstiger herzustellen, und kann jedoch trotzdem viele der oben genannten Vorteile der Ausführungsform der Fig. 13 bieten. Insbesondere konnten auch mit dieser Ausführungsform, wie praktische Tests ergeben haben, auch die gesetzten Effizienzziele erreicht werden.

Übereinstimmende Bezugszeichen der Fig. 24 offenbaren im Kern die gleiche Lehre der Fig. 13, weshalb zur Vermeidung von Wiederholungen im Kern nur auf die Unterschiede zwischen den beiden Ausführungsformen eingegangen wird.

Die Drehschieberventile der Ausführungsform der Fig. 13 sind bei der weiteren Ausführungsform der Fig. 13 durch Gleitschieberventile ersetzt worden. Weiter findet bei der weiteren Ausführungsform der Fig. 24 keine Sekundärmischung von Rezi und Frischluft statt, sondern es wird lediglich die Zufuhr(menge) der Frischluft zu den Rezirkulationsdüsen 291 gesteuert oder geregelt. Dabei wurde der Sekundärmischkanal 55 als Sekundärtemperierungskanal 55a beibehalten, wobei die Funktion einer Temperierung der Frischluft erfüllt. Dabei ist der Sekundärtemperierungskanal 55a an der Wand des Kessels 11 entlang vorgesehen, womit die Frischluft, welche von dem Sekundärluftkanal 59 zugeführt wird, durch die Wärme des Kessels 11 vor der Einführung der Sekundärluft in die Brennkammer 24 vorerwärmt wird (vgl. Pfeil S13a). Entsprechend ist der Sekundärtemperierungskanal 55a mit einem rechteckigen Querschnitt vorgesehen, der eine größere (vertikale) Höhe als (horizontale) Dicke aufweist, womit sich der Sekundärtemperierungskanal 55a an die Kesselwand "anschmiegt", und die Fläche für einen Wärmeaustausch groß gehalten ist. Eine vorgewärmte Sekundärluft steigert die Verbrennungseffizienz. Zur Ausgestaltung des Sekundärtemperierungskanals 55a im Einzelnen wird weiterhin auf die Ausführungen zum Sekundärmischkanal 55 verwiesen.

Der Pfeil S15 zeigt die Sekundärluftströmung strömt durch den Sekundärdurchtritt 551 in den Ringkanal 50 um die Brennkammersteine 29 und durch die Rezirkulationsdüsen 291 in die Brennkammer 24. Damit wird nicht nur die Sekundärluft weiter vorteilhaft erwärmt, sondern werden auch die Brennkammersteine 29 vorteilhaft gekühlt, was beispielsweise die Schlackebildung an den Brennkammersteinen verringert (vgl. die vorstehenden Ausführungen zur Mindesttemperatur bei der Schlackebildung).

Die Pfeile S8 und S10 geben lediglich die Strömung des Rauchgases stromabwärts des Wärmetauschers 3 (oder der optionalen Filtereinrichtung 4) zu der Primärmischeinheit 5a an, welche bei dieser Ausführungsform einfacher und kostengünstiger konstruiert ist.

Fig. 25 zeigt ein schematisches Blockdiagramm, dass den Strömungsverlauf in den jeweiligen Einzelkomponenten einer Biomasse-Heizanlage und der Rezirkulationseinrichtung der Fig. 24 gemäß der weiteren Ausführungsform offenbart.

Gleiche Bezugszeichen der Fig. 25 offenbaren im Kern die gleiche Lehre der Fig. 15, weshalb zur Vermeidung von Wiederholungen im Kern nur auf die Unterschiede eingegangen wird.

Es fehlt an einer Mischung der Sekundärluft aus Frischluft und Rezi-Gas. Insofern sind keine Sekundärmischkammer 552 und kein ein Ventil 52 für das Rezi-Gas vorgesehen. Ebenso entfällt der Rezirkulationseintrittskanalteiler 532. Der Sekundärmischkanal 55 kann zwar mechanisch identisch zu der Ausführungsform der Fig. 15 sein, ist jedoch funktional keine Kanalstrecke zur Vermischung von Frischluft und Rezi-Gas, sondern dient nur mehr (dies ist weiterhin gleich der Ausführungsform der Fig. 15) der Vortemperierung der Frischluft vor der Einbringung in die Brennkammer 24.

Bei der weiteren Ausführungsform kann im Übrigen auch komplett auf die Sekundärluftzuführung verzichtet werden, wobei die Biomasse-Heizanlage 1 nur mit einer Primärrezirkulation vorgesehen sein kann.

(Regelung der Biomasse-Heizanlage)

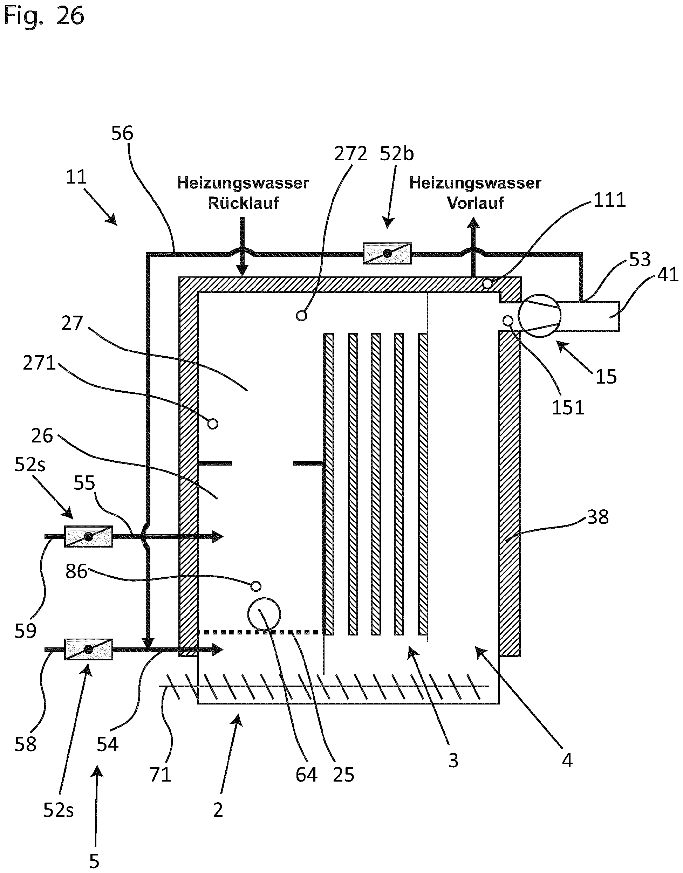

Die Fig. 26 zeigt ein Prinzipdiagramm der Biomasse-Heizanlage 1 / des Kessels 11 der Figuren 24 und 25 und teilweise auch der Biomasse-Heizanlage 1 / des Kessels 11 der Figuren 1 und 2. Gleiche Bezugszeichen der Fig. 26 wie in den anderen Figuren geben gleiche oder funktional analoge Merkmale an, weshalb auf die erneute Erläuterung aller Merkmale verzichtet wird. Bezugszeichenlinien mit Kreisen an deren Enden geben beispielhaft Stellen zur Messung eines Parameters im Kessel 11 an, was später noch im Detail erläutert wird.

Der Kessel 11 der Fig. 26 weist generell eine Brennstoffzufuhr über eine Einschubschnecke mit Öffnung 64 in die Primärbrennkammer 26, den Verbrennungsrost 25, den darüber positionierten isolierten (Primär-) Brennkammerteil 26, den strömungstechnisch anschließenden nicht isolierten (wassergekühlten = Strahlungsteil des Kessels) /Sekundär-) Brennkammerteil 27 und den Wärmetauscher 3 auf. Ein Rauchgasventilator 15 bzw. das Gebläse 15 sorgt für die Ansaugung der Verbrennungsluft und für den Abtransport der bei der Verbrennung entstehenden Rauchgase in Richtung des Kamins. Eine unter dem Rost 25 und dem Wärmetauscher 15 verlaufende Schnecke 71 sorgt für die Entaschung in eine außen liegende Aschebox, wobei der Gasraum unter dem Rost 25 und unter dem Wärmetauscher 3 durch eine geeignete Maßnahme strömungstechnisch entkoppelt, also gegeneinander abgedichtet, .

Der Kessel 11 und insbesondere der Kühlmantel 38 werden mit Heizungswasser oder Brauchwasser durchströmt. Für diese Durchströmung kann eine externe Pumpe sorgen.

Optional kann die Biomasse-Heizanlage 1 mit dem Elektrofilter 4 sowie einem Rauchgaskondensator (nicht dargestellt), der rauchgasseitig nach Austritt aus dem Rauchgasventilator 15 integriert wird und separat an den Heizwasserkreis angeschlossen wird, ausgerüstet werden.

Verbrennungsluft wird als Primär- und Sekundärluft durch den erzeugten Unterdruck im Feuerraum angesaugt. Die Primärluftzufuhr erfolgt in den Raum unter dem Rost 25 und wird über die beschriebenen Ventile geregelt. Die Sekundärluftzufuhr erfolgt über die beschriebenen Düsen in den isolierten Teil der Brennkammer und wird ebenfalls über ein Ventil geregelt. Zur Reduktion der Brennkammertemperaturen, beispielsweise bei Einsatz sehr trockener Brennstoffe, wird ein Teilstrom des Rauchgases nach dem Kessel am Austritt 53 aus dem Rauchgasventilator 15 entnommen und über die Rezirkulationseinrichtung 5 mit Vermischung mit Primärluft in die Feuerung rezirkuliert. Die Regelung des rezirkulierten Rauchgasstromes erfolgt ebenso über das beschriebene entsprechende Ventil.

Weiter sind folgende Sensoren bzw. Erfassungseinheiten in oder an der Biomasse-Heizanlage 1 vorgesehen: Ein Drucksensor 271 für die Brennkammer 24. Dieser kann insbesondere eine Unterdruckmesseinrichtung sein. Ein Temperatursensor 272 für die Brennkammer 24. Dieser kann beispielsweise ein Infrarotsensor oder ein PT100-Messfühler mit Auswerteeinheit sein. Eine Lambda-Sonde 151 (zur O2-Messung) vor dem Gebläse 15. Ein Kesseltemperatursensor 111 zur Erfassung der Temperatur des Heizungswassers im Kessel 11. Eine, vorzugsweise mechanische, Glutbett- bzw. Brennstoffbetthöhenmessung, welche die Höhe des Brennstoffbetts 28 erfasst. Bei letzterem Sensor kann entweder eine relative Höhe in [mm] über dem Rost 25 oder aber auch eine Relativangabe als Indikator für eine Brennstoffbetthöhe (beispielsweise ein Winkel bei einer Messklappe) erfasst werden.

In anderen Worten können für die Regelung die folgenden Sensoren eingesetzt werden:

- ein Kesseltemperatursensor (vorzugsweise nahe dem Austritt des Kesselvorlaufes installiert);
- ein Brennkammerunterdrucksensor, beispielsweise gemessen nach Sekundärlufteindüsung;
- eine Lambdasonde (O2-Gehaltsmessung), beispielsweise gemessen nach Sekundärlufteindüsung oder am Rauchgasaustritt aus dem Kessel;
- eine Brennstoffbetthöhenmessung , gemessen beispielsweise mit einer Klappe, deren Position von einem auf der Achse montierten Winkelgeber bestimmt wird.
- ein Brennkammertemperatursensor, beispielsweise gemessen im Strahlungsteil vor Eintritt in den Rauchrohrwärmetauscher.

Nachstehend wird zunächst die Regelung im Allgemeinen beschrieben.

Die Regelung verfolgt im kontinuierlichen Anlagenbetrieb im Wesentlichen drei Zielsetzungen und ist somit in drei Hauptbereiche unterteilt. Zusätzlich zu diesen im Folgenden geschilderten Hauptbereichen kann das Regelungskonzept Routinen zum An- und Abfahren (bzw. zum An- und Ausschalten) des Kessels 11 sowie Routinen zur Fehlerbehandlung (siehe später) beinhalten. Die Regelung kann in drei parallel ablaufenden Prozessen realisiert sein.-

Weiters kann es Schnittstellen zu den Regelungsroutinen optionaler Zusatzausstattungen wie dem optionalen elektrostatischen Filter und einem Rauchgaskondensator geben.

1) Unterdruckregelung:

Es sollte vorzugsweise ein ausreichend hoher Brennkammerunterdruck aufrechterhalten werden, damit (i) die Primär- und die Sekundärverbrennungsluft von außen und das rezirkulierte Rauchgas aus der Rezirkulationseinrichtung 5 angesaugt werden können und damit (ii) kein Überdruck entsteht, bei dem Rauchgase über die Zuluftöffnungen und etwaige Undichtheiten in den Aufstellungsraum entweichen können.

2) Ausbrandregelung oder O2-Regelung:

Um eine schadstoffarme Verbrennung zu gewährleisten, sollte der Kessel 11 bei einem gewissen Luftüberschuss betrieben werden. Das sogenannte Verbrennungsluftverhältnis (= zugeführte Luftmenge dividiert durch die für die Verbrennung des Brennstoffes unter stöchiometrischen Bedingungen minimal benötigte Luftmenge) sollte somit größer als 1 sein. Es sollte umgekehrt idealerweise aber auch möglichst niedrig gehalten werden, da mit steigendem Luftüberschuss der feuerungstechnische Wirkungsgrad des Kessels absinkt.

Üblicherweise werden Biomessekessel bei Verbrennungsluftverhältnissen zwischen 1,5 und 2,3 betrieben (entspricht Sauerstoffgehalten im trockenen Rauchgas zwischen 7 und 12 Vol%). Durch das besonders effiziente, mit CFD-Simulationen optimierte, und vorstehend beschriebene Brennkammer- bzw. Feuerraum- und Verbrennungslufteindüsungskonzept, können mit der Biomasse-Heizanlage 1 deutlich niedrigere Verbrennungsluftverhältnisse erzielt werden, die typischerweise zwischen 1,3 und 1,75 (bzw. 5 und 9 Vol% O2 im trockenen Rauchgas) und die vorzugsweise zwischen 1,3 und 1,49 liegen. D. h. der Kessel 11 kann mit einem Lambda zwischen 1,3 und 1,75, vorzugsweise mit einem Lambda von 1,3 bis 1,49 betrieben werden.

3) Leistungsregelung:

Die Aufgabe der Leistungsregelung kann es sein, die Stellglieder (z. B. die Ventile) so anzupassen, dass die im Kessel 11 erzeugte Wärmemenge der vom Abnehmer angeforderten Wärmemenge entspricht. Dazu wird ein Sollwert für die Kesseltemperatur (=Vorlauftemperatur) definiert (beispielsweise 85°C). Steigt die Wärmeabnahme durch die Verbraucher, so sinkt bei gleichbleibender Kesselleistung die Vorlauftemperatur, sinkt die Wärmeanforderung, so steigt die Vorlauftemperatur. Es wird somit die Kesselleistung so angepasst, dass diese Soll-Vorlauftemperatur möglichst konstant gehalten werden kann. Dies geschieht über Anpassung der Brennstoffzufuhr sowie über Anpassung der in das Brennstoffbett aufgegebenen Primärverbrennungsluft. Die Einstellwerte für diese Parameter sind jedoch stark von der Brennstoffqualität (u. A. Stückigkeit, Wassergehalt, Heizwert, Energiedichte) abhängig. Die nachfolgend erläuterte Regelung der Biomasse-Heizanlage 1 führt eine Anpassung an den Brennstoff selbstständig, das heißt ohne Eingriff durch den Betreiber bzw. vollautomatisch, durch.

Dabei können optional auch Voreinstellungen für den Anlagenbetrieb vorgegeben sein, wie folgt: der Brennkammerunterdruck gemessen mit dem Druckmessumformer im nicht isolierten Bereich der Brennkammer, die Ventilstellungen, die Geschwindigkeit der Brennstoffzufuhr.

Die Regelung beinhaltet eine Vielzahl von einzelnen Berechnungen oder Verfahrensschritten, welche nachstehend erläutert werden:

- Berechnung der aktuellen Leistungsanforderung:

Es kann kontinuierlich die aktuelle Leistungsanforderung der Regelung berechnet werden. Dies geschieht auf Basis der aktuellen Abweichung der Vorlauftemperatur zur Ist-Vorlauftemperatur über einen entsprechenden Algorithmus.

- Unterdruckregelung:

In Abhängigkeit der errechneten angeforderten Kesselleistung (beispielsweise in % der maximalen Leistung) wird auf Basis der Vorgabewerte für den Brennkammerunterdruck bei maximaler und minimaler Leistung der Sollwert für den Brennkammerunterdruck über einen linearen Abgleich zwischen Leistung und Unterdruck berechnet.

Die Drehzahl des Rauchgasventilators 15 wird stufenlos über einen (beispielsweise PID-) Regler so angepasst, dass der gemessene Unterdruck in der Brennkammer dem Sollwert entspricht. Da der Unterdruck sich durch für Biomasse typische Schwankungen im Verbrennungsprozess ständig ändert, schwingt der Istwert des Unterdrucks in geringem Ausmaß um den Sollwert. Dies stört aber nicht.

- O2-Regelung:

In Abhängigkeit der errechneten angeforderten Kesselleistung (in % der maximalen Leistung) wird auf Basis der Vorgabewerte für den O2-Gehalt im Rauchgas bei maximaler und minimaler Leistung der Sollwert über einen linearen Abgleich zwischen Leistung und O2-Gehalt berechnet.

Die Öffnung bzw. der Öffnungsgrad des Sekundärluftventils wird über einen (vorzugsweise PID-)Regler so angepasst, dass der gemessene Sauerstoffgehalt im Rauchgas dem Sollwert entspricht. Da sich die Rauchgaszusammensetzung durch für Biomasse typische Schwankungen im Verbrennungsprozess ständig ändert, schwingt der Istwert des O2-Wertes in geringem Ausmaß um den Sollwert. Auch dies stört nicht.

- Leistungsregelung:

Am im Kessel positionierten Temperaturfühler bzw. -sensor soll theoretisch der vorgegebene Sollwert für die Vorlauftemperatur (Kesseltemperatur) erreicht und eingehalten werden. Anhand der errechneten Leistungsanforderung (siehe oben) wird die Öffnung bzw. der Öffnungsgrad des Primärluftventils angepasst. Das heißt, dass das Primärluftventil bei steigender Leistungsanforderung weiter geöffnet und bei sinkender Leistungsanforderung weiter geschlossen wird. Dies kann beispielsweise schrittweise um jeweils 1% in definierten Zeitschritten (beispielsweise 120 Sekunden) erfolgen, um eine gleitende Anpassung zu ermöglichen (Integralkomponente). Erkennt der Leistungsregler über den Gradienten der Kesseltemperatur über die Zeit eine abrupte Leistungsänderung, so wird die Anpassung des Primärluftventils in Abhängigkeit zum Gradienten verstärkt.

- Brennstoffflexible Leistungsregelung:

Wird die Feuerungsleistung erhöht, so wird durch den höheren Brennkammerunterdruck und die höhere Öffnung des Primärluftventils mehr Verbrennungsluft in den Rostbereich eingebracht, was zu einem schnelleren Abbrand des Brennstoffbettes führt. Dadurch sinkt bei konstantem Brennstoffeinschub die gemessene Glutbett- bzw. Brennstoffbetthöhe ab. Die Geschwindigkeit dieses Höhenverlustes hängt auch von der Schüttdichte, der Stückigkeit und vom Wassergehalt des Brennstoffes ab.

In konventionellen Regelungsstrategien wird auf eine Laständerung mit einer Änderung des Brennstoffeinschubs über die Drehzahl bzw. die Taktung der Brennstoffeinschubschnecke reagiert, wobei die Anpassung üblicherweise linear zwischen den Einstellwerten für die maximale und die minimale Leistung passiert. Dadurch kann nachteilhaft nicht ausreichend genau auf Änderungen der Brennstoffqualität (Schüttdichte, Wassergehalt) reagiert werden.

Bei der vorliegenden Offenbarung hingegen erfolgt eine brennstoffabhängige Anpassung des Brennstoffeinschubs auf die Brennstoffqualität und die Leistungsanforderung. Die Taktung des Brennstoffeinschubs wird dabei so geändert, dass die von dem Brennstoffbettniveausensor gemessene Brennstoffbetthöhe in einem vorgegebenen Band bzw. einem vorgegebenen Höhenbereich verbleibt.

Die Anpassung der Brennstoffeinschubtaktung kann dabei schrittweise in definierten Zeitintervallen (z. B.: 120 Sekunden) erfolgen. Dabei können in erster Linie die Pausenzeiten des Brennstoffeinschubs verlängert oder verkürzt werden. Überschreitet die Zykluszeit (= Summe aus Betriebszeit und Pausenzeit des Brennstoffeinschubs) im Schwachlastbetrieb einen bestimmten Wert, so wird auch die Betriebszeit des Einschubs zurückgenommen. Dadurch ergibt sich für dieselbe Laufzeit der Schnecke pro Minute (= derselbe eingebrachte Brennstoffmassenstrom) eine aliquot verkürzte Pausenzeit. So wird vermieden, dass zwischen zwei Einschüben zu hohe Pausenzeiten entstehen, die die Reaktionsfähigkeit der Regelung negativ beeinflussen würden.

Änderungen bei der Lastanforderung und damit verbundenen Änderungen der Primärluftzufuhr wirken sich erst zeitlich (um einige Minuten) verzögert in Form eines Absinkens oder Ansteigens der Brennstoffbetthöhe aus. Deshalb wird die Brennstoffeinschubtaktung vorausblickend geändert, wenn der Gradient der Kesseltemperaturänderung über die Zeit (d. h., als Indikator dafür, wie stark ausgeprägt ein Ansteigen oder Abfallen der Lastanforderung ist) ein gewisses Niveau erreicht. In diesem Fall erfolgt auch eine prozentuell stärkere Änderung des Brennstoffeinschubs (konkret der Pausenzeit).

- Brennstoffabhängige Maximallastanpassung:

In Stand-der-Technik Regelungen müssen die Einstellungen der Stellglieder für die minimale und die maximale Leistung für unterschiedliche Brennstoffqualitäten manuell durch den Benutzer (Auswahl eines Brennstoffes) vorgegeben werden. Würde das nicht geschehen, dann kann zum Beispiel der Fall eintreten, dass die Verbrennung eines Brennstoffs mit niedrigem Wassergehalt mit den Einstellungen, die für einen Brennstoff mit hohem Wassergehalt gelten, geregelt wird. Dabei würde ein höherer Brennstoffumsatz und somit eine zu hohe Leistung erzielt werden. Dies resultiert in zu hohen thermischen Feuerraumbelastungen, die die Standzeit der Anlage verringern (Materialbelastung erhöhen) und erhöhte Emissionen bedingen können.

Bei der vorliegenden Erfindung erfolgt die Vorgabe für die Stellung des Primärluftventils und den Feuerraumunterdruck bei Maximalleistung für einen Hackgutbrennstoff üblicher Qualität (Auslegungsbrennstoff), das heißt, mit einem Wassergehalt im oberen Drittel des erlaubten Brennstoffspektrums. Kommt es zum Einsatz eines energetisch höherwertigen Brennstoffes (trockener Brennstoff oder Brennstoff mit höherer Schütt- und Energiedichte), so wird die erzielbare Kesselleistung automatisch auf das Niveau der Maximalleistung, die mit dem Auslegungsbrennstoff erreicht werden kann, limitiert.

Dies erfolgt durch Definition einer maximalen Öffnungsposition für das Sekundärluftventil (B), z. B. 75%, bei der mit dem Auslegungsbrennstoff der mit der Sonde gemessenen Sauerstoffwert bei Nennlastbetrieb dem Vorgabewert bzw. dem voreingestellten Wert entspricht. Steigt die Kesselleistung durch Einsatz eines höherwertigen Brennstoffs, wie zum Beispiel trockenes Hackgut oder Pellets an, so werden mit derselben Primärluftmenge mehr brennbare Gase aus dem Brennstoffbett freigesetzt. Durch den damit steigenden Sekundärluftbedarf muss der das Sekundärluftventil (B) weiter öffnen, um den Sollwert für den Sauerstoffgehalt im Rauchgas einzuhalten. Wird dabei der definierte Maximalwert der Ventilöffnung überschritten, so wird die Primärluftventilstellung bzw. -position schrittweise (um 1%) in bestimmten zeitlichen Abständen (z. B. 2 Minuten) und damit die Leistung schrittweise so weit reduziert, bis die maximale Sekundärluftklappenstellung wieder unterschritten und so eine Leistung im Bereich der Nennleistung bei Betrieb mit dem Auslegungsbrennstoff erzielt wird. Die Zurücknahme der Primärluftventilposition darf dabei nur dann erfolgen, wenn der Sauerstoffgehalt des Rauchgases unter dem Sollwert liegt, das heißt, dass das Sekundärluftventil zum Ausregeln des Sauerstoffgehaltes noch weiter öffnen müsste.

Verschlechtert sich die Brennstoffqualität im weiteren Verlauf des Betriebes wieder, so kommt es zu einem Leistungsabfall, der durch ein Abfallen der Kesseltemperatur gekennzeichnet ist, und es sinkt bei maximaler Lastanforderung durch den Leistungsregler die Öffnung des Sekundärluftventils, da aufgrund der sinkenden Leistung auch weniger Sekundärluft benötigt wird. In diesem Fall wird, so lange der Sauerstoffgehalt im Rauchgas nicht unter dem Sollwert liegt, das Primärluftventil wieder schrittweise geöffnet, bis entweder der hinterlegte maximale Stellwert für das Primärluftventil bei Nennlastbetrieb mit dem Auslegungsbrennstoff erreicht wird, oder der Sollwert für die Vorlauftemperatur erreicht wird, oder der Maximalwert für die Sekundärluftventilöffnung überschritten wird.

(Anfahren des Kessels 11)

In einem ersten Schritt prüft die Regelung, ob es sich um eine "kaltes" Anfahren (Brennkammertemperatur liegt unter einem definierten Schwellenwert; z. B. 100°C) oder ein "warmes" Anfahren (zum Beispiel nach einer Rostreinigung) handelt und wählt auf dieser Basis Voreinstellungen für die Einschubtaktung und die Primärluftzufuhr aus.

Vor dem eigentlichen Startvorgang werden die mechanische Kesselreinigung (über Tubulatoren), die Entaschung und die optionale Elektrofilterabreinigung für eine vordefinierte Zeit (z. B. 30 Sekunden) betrieben. In einem ersten Schritt "Spülen" wird die Anlage durch Öffnen der Primärluft- und Sekundärluftventile mit Luft gespült. Dann werden die Luftventile bzw. -schieber geschlossen und die Rauchgasrezirkulationsleitung wird gespült (Blende auf Position 1, siehe oben).

Dann wird Brennstoff eingeschoben (Zustand: "Füllen"), bis eine vordefinierte Brennstoffbetthöhe mit der Niveauklappe gemessen wird (z. B.: Kaltstart: 40°, Warmstart: 60°).

Danach erfolgt die der Zustand "Zünden", d. h., die Zündphase. Die Primärluft- und Sekundärluftventile werden dabei auf vordefinierte Werte (beispielsweise 60% und 15%) eingestellt und es wird ein vordefinierter Unterdruck in der Brennkammer (beispielsweise 75 Pa) eingeregelt. Ein Zündelement, das beispielsweise in einem vom Primärluftkanal abzweigenden kleinen Seitenkanal montiert ist, das heiße Primärluft direkt in das Brennstoffbett neben der Einschuböffnung strömen lässt, wird aktiviert und der Brennstoff beginnt zu zünden.

Wenn die Brennkammertemperatur um 100°C angestiegen ist und gleichzeitig der Sauerstoffgehalt im Rauchgas unter einem definierten Schwellenwert liegt (beispielsweise 17 Vol%) wird die Zündphase beendet und es wird die Phase "Stabilisieren" aktiviert (dauert die Zündphase länger als 10 Minuten, so gilt das als Indiz dafür, dass Pellets eingesetzt werden, womit vorliegend die Art des Initialbrennstoffs erkannt werden kann).

Das Primärluftventil und der Sollwert für den Brennkammerunterdruck werden in diesem Zustand auf vordefinierte Werte (z. B. 40% und beispielsweise 80 Pa Unterdruck) gestellt und der O2-Regler wird aktiviert, wobei ein ebenfalls vordefinierter O2-Sollwert (z. B. 7 Vol%) eingestellt wird. Die Brennstoffbetthöhe wird durch Anpassung des Brennstoffeinschubes konstant gehalten, wie vorstehend erläutert.

Wenn die Brennkammertemperatur und gleichzeitig der Sauerstoffgehalt im Rauchgas definierte Schwellwerte über- bzw. unterschritten haben (z.B. 300°C, 7 %), wird die Leistungsanforderung von 60% ausgehend um 2% pro Minute auf 100% angehoben. Die Sollwerte für die Füllstandklappe und den Unterdruck werden entsprechend der Leistungsanhebung ebenfalls angepasst. Wenn im Zuge der Zündphase Pellets als Brennstoff erkannt wurden, wird die Rauchgasrezirkulationsblende in die Position Öffnung 2 gefahren. Wenn der Lastregler 100% erreicht hat, wird der Kessel in den Status "Regelung" übernommen, und nach den beschriebenen Regelungssystematiken geregelt.

Wird im Zuge des Hochfahrens der Leistungsrampe bereits die Soll-Vorlauftemperatur erreicht, wird der Kessel 11 in den Status bzw. Zustand "Regelung" übergeben.

Wird im Zuge des Hochfahrens der Leistungsrampe bereits anhand der Sekundärluftventilstellung die Notwendigkeit einer Maximalleistungslimitierung erkannt, so wird diese entsprechend parallel zum Anfahren des Kessels 11 eingeleitet.

(Abfahren des Kessels)

Das Abfahren des Kessels 11 kann beispielhaft mit einem der folgenden Punkte ausgelöst werden:

- Benutzer betätigt einen entsprechenden Ausschaltknopf.
- Eine Fehlermeldung macht das Abfahren des Kessels notwendig.
- Es wird ein Zwischenabbrand für eine Teilreinigung oder eine Universalreinigung des Rostes 25 benötigt.

Bei allen Szenarien wird in einem ersten Schritt die Primärluft schrittweise angepasst, indem die Position des Primärluftventils schrittweise auf einen definierten Wert gefahren wird (z. B. 40%). Der Brennkammerunterdruck wird schrittweise auf den Wert für 100% Last gestellt und der Brennstoffeinschub wird auf einen definierten Wert zurückgenommen (z. B. 50%) und der Stellwert für das Sekundärluftventil wird eingefroren. Der Rost 25 beginnt, sich durch diese Maßnahme am, dem (Brennstoff-) Einschub gegenüberliegenden Teil, frei zu brennen. Die Brennkammertemperatur sinkt.

Sollte ein Brennstoff mit besonders hoher Energiedichte eingesetzt werden, kann es passieren, dass mit den gewählten Einstellungen sich ein quasikontinuierlicher Teillastbetrieb einstellt, was über ein Absinken des Gradienten der Brennkammertemperatur über die Zeit erkannt werden kann. In diesem Fall wird der Brennstoffeinschub nochmals reduziert.

Wenn die Brennkammertemperatur einen definierten Wert (beispielsweise 350°C) unterschritten hat, wird die Brennstoffzufuhr komplett abgeschaltet. Alle anderen Parameter bleiben unverändert bis eine weitere Grenztemperatur (ca. 220°C) unterschritten wird. Nach Unterschreiten dieser Grenztemperatur öffnen die Primär- und Sekundärluftventile vollständig und der Rauchgasventilator 15 wird mit einem voreingestellten Wert (z. B. 50%) betrieben.

Wenn die Brennkammertemperatur einen definierten Wert (z. B. 150°C) unterschritten hat, gilt der Abfahrvorgang bzw. das Ausschalten des Kessels 11 als abgeschlossen, die Rostabreinigung kann einmal aktiviert werden und der Kessel 11 wird abgeschaltet.

(Brennstofferkennung)

Eine Brennstofferkennung ist insbesondere im Zuge des Anfahrens des Kessels 11 möglich:

Der Kessel 11 wird mit denselben Basis-Einstellungen (beispielsweise aus der letzten Betriebsphase vor einer Betriebsunterbrechung) wieder angefahren. Im Zuge des Zündvorganges wird anhand der Zeit, die für die Zündung des Brennstoffes benötigt wird, erkannt, ob Pellets (beispielsweise Dauer der Zündungsphase: > 10 Minuten) oder Hackgut (beispielsweise Dauer der Zündungsphase: < 10 Minuten) verbrannt werden.

Insofern wird vorliegend zur Brennstofferkennung zunächst ermittelt, wie lange es ab dem Beginn des Zündvorgangs dauert, bis der Brennstoff gezündet hat (beispielsweise durch Temperaturmessung), und dann wird diese Zeit mit einem kesselspezifischen voreingestellten Zeitschwellenwert verglichen, um zu bestimmen, welcher Brennstoff verfeuert wird. Ergibt der Vergleich, dass die Zeit zum Zünden kleiner als der voreingestellte Zeitschwellenwert ist, dann wird ein erster vordefinierter Brennstoff erkannt; und ergibt der Vergleich, dass die Zeit zum Zünden größer oder gleich als der voreingestellte Zeitschwellenwert ist, dann wird ein zweiter vordefinierter Brennstoff erkannt.

Die Art des Brennstoffs kann anhand der folgenden Überlegungen festgestellt oder erfasst werden: Da Pellets aufgrund der höheren Energiedichte eine deutlich geringere Brennstoffeinschubfrequenz benötigen, wird der entsprechende Startwert für den Brennstoffeinschub auf einen für Pellets voreingestellten Wert angepasst. Außerdem wird, sobald der Brennstoff Pellets erkannt wurde, die Rauchgasrezirkulation am Ende des Anfahrvorganges für den Dauerbetrieb auf erhöhte Leistung (Öffnung 52b2 oder ohne Blende) gestellt. Insofern kann der Brennstoff mit einem vorgegebenen Schwellenwert betreffend der Zündphase ermittelt werden, da die Brennstoffe unterschiedliche Zündeigenschaften aufweisen.

Ebenso ist eine flexible selbstständige Anpassung der Regelung auf einen Brennstoffsortimentwechsel während des Betriebes möglich. Über die vorstehend erläuterten Mechanismen kann die Regelung auch auf Änderungen der Brennstoffqualität entsprechend reagieren. Durch die Variation des Brennstoffeinschubs in Abhängigkeit der Änderungen der Brennstoffbetthöhe können zum Beispiel Änderungen beim Brennstoffwassergehalt und der Stückigkeit abgefangen werden. Wird zum Beispiel auf einen Brennstoff mit geringerem Wassergehalt im Betrieb umgestellt, so erfolgt die Anpassung der Einstellungen auf die Maximalleistung.

Ebenso ist eine flexible selbstständige Anpassung der Rauchgasrezirkulation 5 möglich. Als vorgegebene Einstellung kann für den Betrieb eine Rauchgasrezirkulation über die kleine Öffnung (Öffnung 52b1) vorgesehen sein. Im Zuge eines Anfahrvorganges kann die Feuerung anhand der Zündzeit erkennen, ob Pellets oder Hackgut verfeuert werden, wie vorstehend erläutert. Werden Pellets als Brennstoff identifiziert, wird nach erfolgtem Anfahren die große Öffnung (Öffnung 52b2) aktiviert.

Wird trockenes Hackgut verbrannt, so wird die große Öffnung (Öffnung 52b2) der Rauchgasrezirkulationsblende dann aktiviert, wenn eine definierte Grenztemperatur in der Brennkammer, die mit dem Temperaturfühler (V) gemessen wird, überschritten wird (z. B.: 700°C). Wird eine vorbestimmte Grenztemperatur (z. B.: 650°C) unterschritten, wird wieder die kleine Öffnung (Öffnung 52b1) aktiviert.

Ebenso ist eine Erkennung von Brennstoffen mit unzulässig schlechter Brennstoffqualität (beispielsweise ein Brennstoff mit zu hohem Wassergehalt) möglich. Wird Brennstoff mit einer unzulässig schlechten Qualität, wie zum Beispiel sehr nasses Hackgut (Wassergehalt von mehr als z. B. 30 Gew% der Frischsubstanz) eingesetzt, so erkennt dies die Regelung und diese kann einen entsprechenden Alarm an den Betreiber ausgeben, der von diesem am Display quittiert werden muss. Alle Alarme können gespeichert werden und sind so auch später noch nachvollziehbar.

Wie bereits erläutert wurde, steigt bei Einsatz eines Brennstoffes mit einem geringeren Wassergehalt als der Standardbrennstoff bei gleichbleibender Primärluftmenge der Bedarf an Sekundärluft an, was zu einem Zurückregeln der Primärluftmenge bei maximaler Leistungsanforderung führt. Dieser Betrieb zeichnet sich durch ein Verhältnis der (Öffnungs-) Stellungen der Sekundärluft- zu Primärluftventile aus, die größer als ein vorgegebener Wert sind. Dieses Verhältnis der Öffnungsgrade kann beispielsweise über 1,2 liegen.

Mit zunehmendem Brennstoffwassergehalt steigt der Primärluftbedarf an, da die Primärluft auch für die Trocknung des Brennstoffes vor seiner thermischen Zersetzung sorgt. Ein zunehmender Teil an Primärluft durchströmt somit das Brennstoffbett, ohne bei den Ausgasungs- und Verbrennungsreaktionen im Bett aktiv zu werden. Da die O2-Regelung aber einen konstanten Sollwert für den Sauerstoffgehalt im Rauchgas vorgibt, muss die Sekundärluftaufgabe zurückgeregelt werden, um diesen Sollwert halten zu können. Das Verhältnis der Antriebsstellungen des Sekundärluftventils zum Primärluftventil sinkt somit ab. Wenn Brennstoff mit einem unzulässig hohen Wassergehalt eingesetzt wird, unterschreitet das Verhältnis von Sekundärluftventilöffnung bzw. -grad zu Primärluftventilöffnung bzw. -grad bei maximaler Leistungsanforderung einen kritischen Wert (beispielsweise 1,2), und es wird eine Warnung an die Betreiber ausgegeben.

Der jeweilige Öffnungsgrad kann beispielsweise aus dem prozentualen Öffnungsgrad des jeweiligen Ventils ermittelt werden.

(Sicherheitsroutinen)

In die Betriebsroutinen der Biomasse-Heizanlage 1 und/oder auch in die vorstehend erläuterte Regelung können verschiedene Sicherheitsroutinen integriert sein, die im Fall von Fehlern (beispielsweise Fehlfunktionen, unvorhersehbaren externen Einflüssen oder Fehlzustände), Schäden an der Biomasse-Heizanlage und/oder am zu beheizenden Objekt verhindern sollen.

Sollte eine der nachstehenden Sicherheitsroutinen einen Fehler erkennen, so können entsprechende Fehler- oder Warnungsmeldungen an den Betreiber ausgegeben werden.

Die nachstehenden Spiegelstriche listen einzelne Fehler auf, die mit einer entsprechenden Sicherheitsroutine erkannt werden kann. Oftmals gibt die jeweilige Sicherheitsroutine auch eine passende Reaktion auf einen Fehler vor.

- Ausfall der Wärmeabnahme

Die Regelung erkennt über einen ungewöhnlich hohen Gradienten des Vorlauftemperaturanstiegs über die Zeit einen rapiden Rückgang der Wärmeabnahme und stellt sofort die Brennstoff- und Primärluftzufuhr auf null. Alle Regelkreise mit Ausnahme der Lastregelung bleiben aktiv.

Bei diesem Zustand (z. B.: Brennstoffeinschub und Primärluft stopp) wartet die Regelung ab, bis die Leistung wieder unter die Leistungsanforderung sinkt (die Vorlauftemperatur unter die Solltemperatur absinkt) und startet dann wieder den geregelten Betrieb.

- Ausfall des Rauchgasventilators

Wenn der Brennkammerunterdruck stark abfällt, werden sofort die Brennstoff- und Primärluftzufuhr auf null gestellt.

- Ausfall Sekundärluft

Die Regelung erkennt über ein Unterschreiten der vordefinierten Schwelle für den minimalen $O_2$-Gehalt im Rauchgas den Ausfall der Sekundärluft (z. B. Schieber schließt aufgrund einer Fehlfunktion) und stellt sofort die Brennstoff- und Primärluftzufuhr auf null.

- Ausfall Primärluft

Diese Sicherheitsroutine erkennt durch den Vergleich der Ist-Position des Primärluftventilantriebs mit einer erfassten Soll-Position des Primärluftventils, dass der Primärluftschieber fehlerhaft ist (beispielsweise ist die Antriebswelle gebrochen oder verklemmt), falls die Soll-Position von der Ist-Position um mehr als einen vorgegebenen Primärluftventildifferenzwert abweicht.

Sollte dies der Fall sein, wird die Brennstoffzufuhr abgestellt. Der $O_2$-Regler bleibt weiter aktiv. Die Brennkammertemperatur fällt in der Folge ab und nach Unterschreiten eines definierten Schwellwertes (z.B. 280°C) wird der Kessel abgefahren bzw. ausgeschaltet.

- Sauerstoffunterversorgung

Durch sehr schnelle Laständerungen aber auch durch starke Inhomogenität des Brennstoffs oder durch abruptes Wechseln der eingesetzten Brennstoffqualität kann es dazu kommen, dass kurzfristig die zur Verfügung stehende Sekundärluft nicht mehr dazu ausreicht, den Sollwert für den Sauerstoffgehalt im Brennstoff zu erreichen. Wird der Sollwert um einen definierten Wert (z. B.: 2,5 Vol%) unterschritten, kommt es zu einer Unterbrechung der Brennstoffzufuhr (sog. Lambda-Stopp). Die Brennstoffzufuhr bleibt so lange unterbrochen, bis der Sauerstoffgehalt im Rauchgas den Sollwert wieder überschreitet.

Kann der Sauerstoffgehalt über eine längere Zeit (z. B.: 1 Minute) nicht wieder den Sollwert erreichen, wird der Kessel abgefahren und es wird eine Fehlermeldung ausgegeben.

- Überschreitung der maximalen Brennstoffbetthöhe

Durch sehr schnelle Laständerungen aber beispielsweise auch durch starke Inhomogenität des Brennstoffs oder durch abruptes Wechseln der eingesetzten Brennstoffqualität kann es dazu kommen, dass eine definierte maximale Brennstoffbetthöhe überschritten wird.

Wird der Sollwert um einen definierten Betrag bzw. Wert (z. B.: 9°) überschritten, kommt es zu einer Unterbrechung der Brennstoffzufuhr (sog. Brennstoff-Stopp). Die Brennstoffzufuhr bleibt so lange unterbrochen, bis die Betthöhe um einen definierten Betrag (z. B. 5°) unter den Sollwert gefallen ist.

- Unterbrechung der Brennstoffzufuhr

Wird die Brennstoffzufuhr unterbrochen (z. B. ist der Brennstoffbunker leer, aus welchem der Brennstoff entnommen wird) so sinkt aufgrund von Brennstoffunterversorgung die Brennkammertemperatur.

Zur Erkennung dessen wird die Brennkammertemperatur sensorisch erfasst.

Wird von dem erfassten Temperaturwert ein kritischer Wert (z. B. 280°C) unterschritten, wird der Kessel abgefahren bzw. ausgeschaltet und es wird eine entsprechende Meldung ausgegeben.

- Sensorfehler und Hardware-Fehler

Alle relevanten Sensoren und Antriebe werden permanent überwacht (über Stellungsrückmeldungen, zulässige Messbereiche, etc.). Wird eine Fehlfunktion erkannt, wird der Kessel abgefahren und es wird eine entsprechende Fehlermeldung ausgegeben.

(Weitere Ausführungsformen)

Die Erfindung lässt neben den erläuterten Ausführungsformen und Aspekten weitere Gestaltungsgrundsätze zu. So können einzelne Merkmale der verschiedenen Ausführungsformen und Aspekte auch beliebig miteinander kombiniert werden, solange dies für den Fachmann als ausführbar ersichtlich ist.

Vorliegend wird die Rezirkulationseinrichtung 5 mit einer Primärrezirkulation und einer Sekundärrezirkulation beschrieben. Die Rezirkulationseinrichtung 5 kann jedoch in deren Basiskonfiguration auch nur eine Primärrezirkulation und keine Sekundärrezirkulation aufweisen. Bei dieser Basiskonfiguration der Rezirkulationseinrichtung können entsprechend die für die Sekundärrezirkulation erforderlichen Komponenten vollständig entfallen, beispielsweise können der Rezirkulationseintrittskanalteiler 532, der Sekundärrezirkulationskanal 57 und eine zugehörige Sekundärmischeinheit 5b, welche später erläutert wird, sowie die Rezirkulationsdüsen 291 entfallen.

Es kann wiederum alternativ auch nur eine Primärrezirkulation derart vorgesehen sein, dass zwar die Sekundärmischeinheit 5b und die zugehörigen Kanäle entfallen, und das Gemisch der Primärrezirkulation jedoch nicht nur unter den Drehrost 25 zugeführt wird, sondern dieses auch (beispielsweise über einen weiteren Kanal) zu den in dieser Variante vorgesehenen Rezirkulationsdüsen 291 zugeführt wird. Diese Variante ist mechanisch einfacher und damit kostengünstiger, und weist jedoch trotzdem die Rezirkulationsdüsen 291 zur Drallbildung der Strömung in der Brennkammer 24 auf.

Am Eingang der Rauchgasrezirkulationseinrichtung 5 können ein Luftmengensensor, eine Unterdruckdose, ein Temperatursensor, ein Abgassensor und/oder ein Lambda-Sensor vorgesehen sein.

Weiter können anstatt von nur drei Drehrostelementen 252, 253 und 254 auch zwei, vier oder mehr Drehrostelemente vorgesehen sein. Bei beispielsweise fünf Drehrostelementen könnten mit der gleichen Symmetrie und Funktionalität angeordnet sein, wie bei den vorgestellten drei Drehrostelementen. Zudem können die Drehrostelemente auch unterschiedlich zueinander geformt oder ausgebildet sein. Mehr Drehrostelemente haben den Vorteil, dass die Brecherfunktion verstärkt wird.

Zu den angegebenen Maßen ist anzumerken, dass auch abweichend von diesen andere Maße bzw. Maßkombinationen vorgesehen werden können.

Anstelle der konvexen Seiten der Drehrostelemente 252 und 254 können auch konkave Seiten dieser vorgesehen sein, wobei die Seiten des Drehrostelements 253 in Folge komplementär konvex geformt sein können. Dies ist funktional annähernd gleichwertig.

Als Brennstoffe der Biomasse-Heizanlage können auch andere Brennstoffe als Hackgut oder Pellets verwendet werden.

Die Brennkammersteine 29 können auch ohne die Rezirkulationsdüsen 291 vorgesehen sein. Dies kann insbesondere für den Fall gelten, bei welchem keine Sekundärrezirkulation vorgesehen ist.

Die Rotationsströmung bzw. Wirbelströmung in der Brennkammer 24 kann rechtsdrehend oder linksdrehend vorgesehen sein.

Die Brennkammerdecke 204 kann auch abschnittsweise, beispielsweise stufenförmig, geneigt vorgesehen sein.

Die Sekundär(re)zirkulation kann auch nur mit Sekundärluft bzw. Frischluft beströmt werden, und insofern nicht das Rauchgas rezirkulieren, sondern lediglich Frischluft zuführen.

Die Sekundärluftdüsen 291 sind nicht auf rein zylindrische Bohrungen in den Brennkammersteinen 291 beschränkt. Diese können auch als kegelstumpfförmige Öffnungen oder taillierte Öffnungen ausgebildet sein.

Die angegebenen Maße und Größenangaben sind lediglich beispielhaft zu verstehen, und können abgewandelt werden.

Vorliegend wird die Rezirkulationseinrichtung 5 bei der Ausführungsform der Fig. 12 mit einer Primärrezirkulation und einer Sekundärrezirkulation beschrieben. Die Rezirkulationseinrichtung 5 kann jedoch in deren Basiskonfiguration auch nur eine Primärrezirkulation und keine Sekundärrezirkulation aufweisen. Bei dieser Basiskonfiguration der Rezirkulationseinrichtung können entsprechend die für die Sekundärrezirkulation erforderlichen Komponenten vollständig entfallen, beispielsweise können der Rezirkulationseintrittskanalteiler 532, der Sekundärrezirkulationskanal 57 und eine zugehörige Sekundärmischeinheit 5b, welche erläutert wird, sowie die Rezirkulationsdüsen 291 entfallen.

Es kann wiederum alternativ auch nur eine Primärrezirkulation derart vorgesehen sein, dass zwar die Sekundärmischeinheit 5b und die zugehörigen Kanäle entfallen, und das Gemisch der Primärrezirkulation jedoch nicht nur unter den Drehrost 25 zugeführt wird, sondern dieses auch (beispielsweise über einen weiteren Kanal) zu den in dieser Variante vorgesehenen Rezirkulationsdüsen 291 zugeführt wird. Diese Variante ist mechanisch einfacher und damit kostengünstiger, und weist jedoch trotzdem die Rezirkulationsdüsen 291 zur Wirbelstrom- bzw. Drallbildung der Strömung in der Brennkammer 24 auf.

Am Eingang der Rauchgasrezirkulationseinrichtung 5 können ein Luftmengensensor, eine Unterdruckdose, ein Temperatursensor, ein Abgassensor und/oder ein Lambda-Sensor vorgesehen sein.

Bei der Übergangsschnecke 73 kann der Gegenlauf auch an der anderen Seite der der Ascheaustragungsschnecke 71 (spiegelsymmetrisch) vorgesehen sein.

Die verschiedenen hierin offenbarten Ventile und Ventilarten können beliebig miteinander kombiniert werden. Beispielsweise kann in einem Kessel 1 ein Drehschieberventil mit einem Linearschieberventil 55s zum Einsatz kommen.

Das Blendenventil 55b ist optional und kann auch nicht eingesetzt werden.

Die Sicherheitsroutinen sind ebenso optional.

(Datenverarbeitungsvorrichtung und computerlesbares Medium, aufweisend eine Regelung oder eine Routine für die Biomasse-Heizanlage 1)

Die in dieser Anmeldung offenbarten Regelungen, Regelungskonzepte oder Anwendungen (z. B. Programmmodule) können Routinen, Programme, Komponenten, Datenstrukturen usw. aufweisen oder in diesen realisiert werden, die bestimmte Aufgaben durchführen.

Es können die hierin offenbarten Regelungen und Regelungskonzepte als Computerprogramm realisiert werden, welches auf einem computerlesbaren Medium gespeichert ist. Dies gilt insbesondere für die beanspruchten und offenbarten Verfahren.

Darüber hinaus werden Fachleute auf diesem Gebiet der Technik erkennen, dass die offenbarten regelungstechnischen Gesamt-, Teil- oder Einzeloperationen (beispielsweise Vergleiche, Abfrage von Sensorparametern, Ansteuerung von Aktoren) mit unterschiedlichen Systemkonfigurationen in die Praxis umgesetzt werden können; dies schließt diverse Datenverarbeitungsvorrichtungen mit ein, wie beispielsweise Einzelprozessor- oder Mehrprozessorsysteme, "embedded-systems", Automatisierungstechnik-Rechner, Minicomputer, Personalcomputer, handgehaltene Datenverarbeitungsvorrichtungen, und dergleichen ein, welches bzw. welche jeweils operativ mit einer Biomasse-Heizanlage und/oder einem Gebäudemanagementsystem gekoppelt sein kann bzw. können.

Eine Datenverarbeitungsvorrichtung kann typischerweise verschiedene computerlesbare Medien aufweisen. Bei den computerlesbaren Medien kann es sich um beliebige verfügbare Medien handeln, auf die mit dem Computer zugegriffen werden kann und die flüchtige und nicht flüchtige Medien, wechselbare und nicht wechselbare Medien umfassen.

Beispielhaft und nicht einschränkend können computerlesbare Medien Computerspeichermedien und auch Kommunikationsmedien umfassen. Computerspeichermedien umfassen flüchtige und nicht flüchtige, wechselbare und nicht wechselbare Medien, die durch ein beliebiges Verfahren oder eine beliebige Technologie zur Speicherung von Informationen wie beispielsweise computerlesbare Anweisungen, Datenstrukturen, Programmmodule oder andere Daten implementiert sind. Computerspeichermedien (z. B. ein oder mehrere Datenspeicher) können, ohne jedoch hierauf beschränkt zu sein, RAM, ROM, EEPROM, Flash-Speicher oder andere Speichertechnologien oder ein beliebiges anderes Medium umfassen, das verwendet werden kann, um die gewünschten Informationen zu speichern und auf die mit einem Computer zugegriffen werden kann.

Es versteht sich, dass hier beschriebene Aspekte durch Hardware, Software, Firmware oder eine beliebige Kombination davon implementiert sein können. Bei Implementierung in einer Software können Funktionen als eine oder mehrere Anweisung(en) oder Code auf einem computerlesbaren Medium gespeichert sein oder über ein computerlesbares Medium übertragen werden.

Verschiedene veranschaulichende Logiken, Logikblöcke, Module und Schaltungen, die in Verbindung mit den hier offenbarten Aspekten beschrieben werden, können mit einem Universalprozessor, einem digitalen Signalprozessor (DSP), einer anwendungsspezifischen integrierten Schaltung (Application-Specific Integrated Circuit, ASIC), einer feldprogrammierbaren Gatteranordnung (Field-Programmable Gate Array, FPGA) oder einem anderen programmierbaren Logikbaustein, einem diskreten Gatter oder einer Transistorlogik, diskreten Hardwarekomponenten oder einer Kombination davon implementiert sein oder ausgeführt werden, die dafür ausgelegt ist bzw. sind, die hier beschriebenen Funktionen auszuführen. Bei einem Universalprozessor kann es sich um einen Mikroprozessor handeln, aber alternativ kann es sich bei dem Prozessor auch um einen herkömmlichen Prozessor, Controller, Mikrocontroller oder eine Zustandsmaschine handeln. Ein Prozessor kann auch als eine Kombination von Verarbeitungsvorrichtungen implementiert sein, beispielsweise als eine Kombination aus einem DSP und einem Mikroprozessor, mehreren Mikroprozessoren, einem oder mehreren Mikroprozessor(en) in Verbindung mit einem DSP-Kern oder eine beliebige andere derartige Konfiguration. Zusätzlich kann wenigstens ein Prozessor ein oder mehrere Modul(e) umfassen, das/die betrieben wird/werden, um eine oder mehrere der hier beschriebenen Handlungen und/oder Aktionen durchzuführen.

Bei einer Software-Implementierung können die hier beschriebenen Techniken mit Modulen implementiert sein (z. B. Prozeduren, Funktionen und so weiter), die die hier beschriebenen Funktionen ausführen. Software-Codes können in Speichereinheiten gespeichert sein und von Prozessoren ausgeführt werden. Eine Speichereinheit kann prozessorintern oder prozessorextern implementiert sein; in diesem Fall kann die Speichereinheit durch verschiedene Mittel nach dem Stand der Technik kommunikativ an den Prozessor gekoppelt sein. Ferner kann wenigstens ein Prozessor ein oder mehrere Modul(e) aufweisen, das/die betrieben werden, um die hier beschriebenen Funktionen auszuführen.

Insofern sind hierin auch die beschriebenen Regelungsverfahren als Software und auch Datenträger mit der Software beinhaltend die beschriebenen Regelungsverfahren offenbart.

Die hierin offenbarten Ausführungsformen wurden zur Beschreibung und zum Verständnis der offenbarten technischen Sachverhalte bereitgestellt und sollen den Umfang der vorliegenden Offenbarung nicht einschränken. Daher ist dies so auszulegen, dass der Umfang der vorliegenden Offenbarung jede Änderung oder andere verschiedene Ausführungsformen beinhaltet, die auf dem technischen Geist der vorliegenden Offenbarung basieren.

(Bezugszeichenliste)

| | |
|---|---|
| 1 | Biomasse-Heizanlage |
| 11 | Kessel |
| 12 | Kesselfuß |
| 13 | Kesselgehäuse |
| 14 | Wasserzirkulationseinrichtung |
| 15 | Gebläse |
| 16 | Außenverkleidung |

| | |
|---|---|
| 111 | Kesseltemperatursensor |
| 151 | Lambda-Sonde (O2-Messung) |

| | |
|---|---|
| 2 | Brenneinrichtung |
| 21 | erste Wartungsöffnung für die Brenneinrichtung |
| 22 | Drehmechanikhalterung |
| 23 | Drehmechanik |
| 24 | Brennkammer |
| 25 | Drehrost |
| 26 | Primärverbrennungszone der Brennkammer |
| 27 | Sekundärverbrennungszone bzw. Strahlungsteil der Brennkammer |
| 28 | Brennstoffbett |
| 29 | Brennkammersteine |
| A1 | erste Horizontalschnittlinie |
| A2 | erste Vertikalschnittlinie |

| | |
|---|---|
| 201 | Zündeinrichtung |
| 202 | Brennkammerschräge |
| 203 | Brennkammerdüse |
| 204 | Brennkammerdecke |

211   Dämmmaterial bspw. Vermiculite
231   Antrieb bzw. Motor(en) der Drehmechanik
251   Bodenplatte des Drehrosts
252   Erstes Drehrostelement
253   Zweites Drehrostelement
254   Drittes Drehrostelement
255   Übergangselement
256   Öffnungen
257   Rostlippen
258   Verbrennungsfläche

260   Auflageflächen der Brennkammersteine
261   Nut
262   Vorsprung
263   Ring
264   Halterungssteine
265   Schräge der Halterungssteine

271   Drucksensor für die Brennkammer
272   Temperatursensor für die Brennkammer

291   Sekundärluft bzw. Rezirkulationsdüsen

3   Wärmetauscher
31   Wartungsöffnung für Wärmetauscher
32   Kesselrohre
33   Kesselrohreintritt
34   Wendekammereintritt
35   Wendekammer
36   Federturbulator
37   Band- oder Spiralturbulator
38   Wärmetauschmedium

331   Isolation am Kesselrohreintritt

4   Filtereinrichtung
41   Abgasausgang
42   Elektrodenversorgungsleitung
43   Elektrodenhalterung
44   Filtereintritt
45   Elektrode
46   Elektrodenisolation
47   Filteraustritt
48   Käfig
49   Rauchgaskondensator

411   Rauchgaszuleitung zum Rauchgaskondensator

412   Rauchgasausgang aus dem Rauchgaskondensator
481   Käfighalterung
491   erster Fluidanschluss
491   zweiter Fluidanschluss
493   Wärmetauscherrohr
4931   Rohrhalteelement
4932   Rohrbodenelement
4933   Schlaufen/Umkehrstellen
4934   erste Zwischenräume der Wärmetauscherrohre zueinander
4935   zweite Zwischenräume der Wärmetauscherrohre zu der Außenwand des Rauchgaskondensators

| | |
|---|---|
| 4936 | Durchlässe |
| 495 | Kopfelement |
| 4951 | Kopfelementströmungsführung |
| 496 | Kondensataustritt |
| 4961 | Kondensatsammeltrichter |
| 497 | Flansch |
| 498 | Seitenfläche mit Wartungsöffnung |
| 499 | Halterungseinrichtung für den Rauchgaskondensator |

| | |
|---|---|
| 5 | Rezirkulationseinrichtung |
| 50 | Ringkanal um Brennkammersteine |
| 52 | Luftventil |
| 52s | Schieberventil |
| 52b | Blendenventil (optional) |
| 52b1, 52b2 | Blendenöffnungen |
| 52ss | Kombinations-Schieberventil |
| 53 | Rezirkulationseintritt |
| 54 | Primärmischkanal |
| 55 | Sekundärmischkanal |
| 55a | Sekundärtemperierungskanal |
| 56 | Primärrezirkulationskanal |

| | |
|---|---|
| 57 | Sekundärrezirkulationskanal |
| 58 | Primärluftkanal |
| 59 | Sekundärluftkanal |

| | |
|---|---|
| 5a | Primärmischeinheit |
| 5b | Sekundärmischeinheit |

| | |
|---|---|
| 521 | Ventilstellaktor |
| 522 | Ventilstellachsen |
| 523 | Ventilflügel |
| 524 | Ventilgehäuse |
| 525 | Ventilvorkammer |
| 526 | Ventildurchtrittsöffnung |
| 527 | Ventilkörper |
| 528 | Ventilfläche |
| 529 | Ventilblende |
| 531 | Rezirkulationseintrittskanal |
| 532 | Rezirkulationseintrittskanalteiler |

| | |
|---|---|
| 541 | Primärdurchtritt |
| 542 | Primärmischkammer |
| 543 | Primärmischkammeraustritt |
| 544 | Primärreziventileintritt |
| 545 | Primärluftventileintritt |
| 546 | Primärmischkammergehäuse |

| | |
|---|---|
| 551 | Sekundärdurchtritt |
| 552 | Sekundärmischkammer |
| 553 | Sekundärmischkammeraustritt |
| 554 | Sekundärreziventileintritt |
| 555 | Sekundärluftventileintritt |
| 556 | Sekundärmischkammergehäuse |

| | |
|---|---|
| 581 | Primärlufteintritt |
| 582 | Primärluftsensor |
| 591 | Sekundärlufteintritt |

592 Sekundärluftsensor

5221 Ventilstellhebel
5222 Ventilstellhebellager
5223 Ventilstellhebelausnehmung
5224 Schieberglied
5225 Schiebergliedführung
5226 Schiebergliedkante
5227 Ventilaufbau
5228 Ventilstellschubglied
5229 Blendenführung
5230 Ventilvolumen
DF1 Durchtrittsfläche 1 bzw. geöffnete Querschnittsfläche 1
DF2 Durchtrittsfläche 2 bzw. geöffnete Querschnittsfläche 2
DF3 Durchtrittsfläche 3 bzw. geöffnete Querschnittsfläche 3

6 Brennstoffzufuhr
61 Zellradschleuse
62 Achse der Brennstoffzufuhr
63 Übersetzungsmechanik
64 Brennstoffzufuhrkanal
65 Brennstoffzufuhröffnung
66 Antriebsmotor
67 Brennstoff-Förderschnecke

7 Ascheabfuhr
71 Ascheaustragungsschnecke

711 Schneckenachse
712 Zentrierungsscheibe
713 Wärmetauscherabschnitt
714 Brennerabschnitt

72 Motor der Ascheabfuhr mit Mechanik
73 Übergangsschnecke
731 rechter Unterabschnitt - nach links steigende Schnecke
732 linker Unterabschnitt -nach rechts steigende Schnecke
74 Aschebehälter
75 Übergangschneckengehäuse
751 Öffnung des Übergangsschneckengehäuses
752 Begrenzungsblech
753 Hauptkörperabschnitt des Gehäuses
754 Befestigungs- und Trennelement
755 Trichterelement

81 Lagerachsen
82 Drehachse der Brennstoff-Niveauklappe
83 Brennstoff-Niveauklappe
831 Hauptfläche
832 Mittenachse
833 Oberflächenparallele
834 Öffnungen

84 Lagerkerbe
85 Sensorflansch
86 Glutbetthöhenmessmechanik

9 Reinigungseinrichtung

| 91 | Reinigungsantrieb |
| 92 | Reinigungswellen |

| 93 | Wellenhalterung |
| 94 | Fortsatz |
| 95 | Turbulatorhalterungen |
| 951 | Drehlageraufnahme |
| 952 | Fortsätze |
| 953 | Durchlässe |
| 954 | Ausnehmungen |
| 955 | Drehlagergestänge |
| 96 | zweiarmiger Schlaghebel |
| 97 | Anschlagkopf |
| E | Einschubrichtung des Brennstoffs |
| S* | Strömungspfeile |
| BSR | Blendenstellrichtungen |
| BS1 | Schnittlinie |
| BS2 | Schnittlinie |
| SS1, SS2, SS2 | Schubrichtungen bzw. Verschiebungsrichtungen |

**Patentansprüche**

1. Biomasse-Heizanlage (1) zur brennstoffflexiblen Verfeuerung von biogenen Brennstoffen, beispielsweise Pellets und/oder Hackgut, aufweisend:

   einen Kessel (11) mit einer Brenneinrichtung (2);
   einen Wärmetauscher (3) mit einem Eintritt (33) und einem Austritt;
   wobei die Brenneinrichtung (2) eine Brennkammer (24) mit einer Primärverbrennungszone (26) und mit einer stromabwärts dazu vorgesehenen Sekundärverbrennungszone (27) aufweist;
   wobei die Sekundärverbrennungszone (27) der Brennkammer (24) strömungstechnisch mit dem Eintritt (33) des Wärmetauschers (3) verbunden ist;
   eine Rezirkulationseinrichtung (5) zum Rezirkulieren eines Teils des bei der Verfeuerung des Brennstoffs in der Brenneinrichtung (2) erzeugten Rauchgases;
   wobei die Biomasse-Heizanlage (1) derart eingerichtet ist, dass die Rezirkulationseinrichtung (5) die Rezirkulation des Rauchgases entsprechend des Brennstoffs einstellt.

2. Biomasse-Heizanlage (1) gemäß Anspruch 1, wobei die Rezirkulationseinrichtung (5) das Folgende aufweist:

   ein Kombinations-Schieberventil (52ss) mit zumindest zwei Schieberventilen (52s) mit jeweils einem verschiebbaren Schieberglied (5224), mit welchem die jeweilig geöffnete Querschnittsfläche (DF1, DF2) eingestellt werden kann; und
   einen Primärmischkanal (54), der stromabwärts zum Kombinations-Schieberventil (52ss) vorgesehen ist;
   wobei die Rezirkulationseinrichtung (5) derart eingerichtet ist, dass
   ein Mischungsverhältnis von Primärfrischluft mit rezirkuliertem Rauchgas mittels der jeweilig geöffneten Querschnittsfläche (DF1, DF2) der zumindest zwei Schieberventile(52s) des Kombinations-Schieberventils (52ss) eingestellt werden kann; wobei
   die Mischung aus Primärfrischluft mit rezirkuliertem Rauchgas im Primärmischkanal (54) temperiert und gemischt werden kann.

3. Biomasse-Heizanlage (1) gemäß Anspruch 2, wobei:

   dasjenige Schieberventil (52s) des Kombinations-Schieberventils (52ss), mit welchem das rezirkulierte Rauchgas eingestellt wird, ein bewegliches Schieberglied (5224) mit einer Ausnehmung derart aufweist, dass dieses Schieberventil (52s) eine Mindest-Öffnungsquerschnittsfläche aufweist, die zumindest 10% der maximal möglichen Öffnungsquerschnittsfläche aufweist.

4. Biomasse-Heizanlage (1) gemäß einem der vorausgehenden Ansprüche, wobei:

das Kombinations-Schieberventil (52ss) zwei strömungstechnisch getrennte Einlässe (544, 545) aufweist.

5. Biomasse-Heizanlage (1) gemäß einem der vorausgehenden Ansprüche, wobei die Rezirkulationseinrichtung (5) ferner das Folgende aufweist:

einen Rezirkulationseintritt (53), der stromabwärts zu dem Austritt des Wärmetauschers (3) vorgesehen und strömungstechnisch mit diesem verbunden ist; und

ein Blendenventil (52b) mit einer verstellbaren Ventilblende (529), welches stromabwärts zum Rezirkulationseintritt (3) vorgesehen ist, wobei die Ventilblende (529) des Blendenventils (52b) zumindest zwei Blendenöffnungen (52b1, 52b2) mit jeweils unterschiedlicher Öffnungsfläche aufweist;

wobei die Biomasse-Heizanlage (1) und das Blendenventil (52b) derart eingerichtet sind, dass der Volumenstrom des Rauchgases durch das Blendenventil (52b) mittels Verstellens der Ventilblende (529) in Abhängigkeit zum Brennstoff eingestellt werden kann.

6. Biomasse-Heizanlage (1) gemäß Anspruch 5, wobei

eine der Blendenöffnungen (52b1, 52b2) der Ventilblende (529) eine erste vordefinierte Querschnittsfläche aufweist, und

eine andere der Blendenöffnungen (52b1, 52b2) der Ventilblende (529) eine zweite vordefinierte Querschnittsfläche aufweist, und

wobei die erste Querschnittsfläche weniger als die Hälfte der zweiten Querschnittsfläche beträgt.

7. Biomasse-Heizanlage (1) gemäß Anspruch 5 oder 6, wobei die Biomasse-Heizanlage derart eingerichtet ist, dass die Ventilblende (529) des Blendenventils (52b) bei einem Brennstoff mit einem Wassergehalt von mehr als 20 Gew% der Frischsubstanz auf die Kleinste der Blendenöffnungen (52b1, 52b2) der Ventilblende (529) eingestellt wird.

8. Biomasse-Heizanlage (1) gemäß einem der vorausgehenden Ansprüche, weiter aufweisend:

einen Drehrost (25), auf welchem der Brennstoff verfeuert werden kann;

einen Temperatursensor (272) zur Erfassung der Temperatur in der Brennkammer (24);

wobei ein Drehvorgang des Drehrosts (25) zum Abreinigen des Drehrosts (25) bei einem Abfahrvorgang der Biomasse-Heizanlage (1) durchgeführt wird, falls die erfasste Temperatur der Brennkammer (24) unter einen vordefinierten Schwellenwert fällt.

9. Biomasse-Heizanlage (1) gemäß einem der vorausgehenden Ansprüche, wobei die Biomasse-Heizanlage (1) derart eingerichtet ist, dass der Kessel (11) mit einem Verbrennungsluftverhältnis, das der zugeführten Primärluftmenge dividiert durch die für die Verbrennung des Brennstoffes unter stöchiometrischen Bedingungen minimal benötigte Luftmenge entspricht, von 1,2 bis 1,75, vorzugsweise von 1,3 bis 1,49, betrieben werden kann.

10. Biomasse-Heizanlage (1) gemäß einem der vorausgehenden Ansprüche, wobei die Biomasse-Heizanlage (1) mit der Rezirkulationseinrichtung (5) derart eingerichtet ist, dass diese typischerweise mit einem Verbrennungsluftverhältnis Lambda zwischen 1,3 und 1,75 betrieben werden kann.

11. Biomasse-Heizanlage (1) gemäß einem der vorausgehenden Ansprüche, aufweisend:

einen Unterdrucksensor (271) für die Brennkammer (24), und

einen Temperatursensor (272) für die Brennkammer (24), und

einen Kesseltemperatursensor am Auslauf des Kessels (11) zur Erfassung der Temperatur eines Heizungswassers des Kessels (11), und

eine Brennstoffbetthöhenmesseinrichtung zur Messung der Höhe des Brennstoffbetts über der Oberfläche des Rosts (25).

12. Biomasse-Heizanlage (1) gemäß einem der vorausgehenden Ansprüche , wobei die Rezirkulationseinrichtung (5) weiter das Folgende aufweist:

einen Sekundärluftkanal (59) für die Zufuhr von Sekundärluft;

einen Sekundärtemperierungskanal (55a), wobei der Sekundärtemperierungskanal (55a) stromabwärts zu dem Sekundärluftkanal (59) vorgesehen und mit diesem strömungstechnisch verbunden ist; und zumindest ein Schieberventil (52s), das zwischen Sekundärtemperierungskanal (55a) und Sekundärluftkanal (59) zum Einstellen des Volumenstroms vorgesehen ist; und wobei das Schieberventil (52s) für die Sekundärluft ein bewegliches Schieberglied (5224) mit einer Ausnehmung derart aufweist, dass dieses Schieberventil (52s) eine Mindest-Öffnungsquerschnittsfläche aufweist, die zumindest 10% der maximal möglichen Öffnungsquerschnittsfläche aufweist.

13. Verfahren zur brennstoffflexiblen Verfeuerung von biogenen Brennstoffen mit einer Biomasse-Heizanlage (1), die Biomasse-Heizanlage (1) aufweisend:

einen Kessel (11) mit einer Brenneinrichtung (2);
einen Wärmetauscher (3) mit einem Eintritt (33) und einem Austritt;
wobei die Brenneinrichtung (2) eine Brennkammer (24) mit einer Primärverbrennungszone (26) und mit einer stromabwärts dazu vorgesehenen Sekundärverbrennungszone (27) aufweist;
wobei die Sekundärverbrennungszone (27) der Brennkammer (24) strömungstechnisch mit dem Eintritt (33) des Wärmetauschers (3) verbunden ist;
eine Rezirkulationseinrichtung (5) zum Rezirkulieren eines Teils des bei der Verfeuerung des Brennstoffs in der Brenneinrichtung (2) erzeugten Rauchgases;
das Verfahren aufweisend:
Erfassen des Brennstoffs;
Einstellen der Rezirkulation des Rauchgases in der Rezirkulationseinrichtung (5) entsprechend des Brennstoffs.

14. Verfahren zur brennstoffflexiblen Verfeuerung von biogenen Brennstoffen gemäß Anspruch 13, wobei:

das Einstellen der Rezirkulation des Rauchgases in der Rezirkulationseinrichtung (5) das Einstellen eines Mischungsverhältnisses von Primärfrischluft mit rezirkuliertem Rauchgas mittels einer jeweilig geöffneten Querschnittsfläche (DF1, DF2) von zumindest zwei Schieberventilen(52s) eines Kombinations-Schieberventils (52ss) umfasst.

15. Verfahren zur brennstoffflexiblen Verfeuerung von biogenen Brennstoffen mit einer Biomasse-Heizanlage (1) nach einem der Ansprüche 1 bis 13, das Verfahren aufweisend:

Einstellen der Rezirkulation des Rauchgases in der Rezirkulationseinrichtung (5) entsprechend des Brennstoffs; wobei
ein Mischungsverhältnis von dem rezirkuliertem Rauchgas mit einer Primärluft und der Durchfluss des Rauchgases und der Durchfluss der Primärluft entsprechend sensorisch erfasster Parameter der Biomasse-Heizanlage (1) geregelt werden.

Fig. 1

# Fig. 2

# Fig. 3

Fig. 4

zur Wärme-
tauscheinrichtung 3

Fig. 5

Fig. 6

Fig. 7

## Fig. 8

# Fig. 9

Fig. 10

Fig. 11

Fig. 12

EP 4 056 895 A1

Fig. 13

Fig. 14

EP 4 056 895 A1

# Fig. 15

EP 4 056 895 A1

Falsch-luft → Primär-verbrennungs-zone 26 → Sekundär-verbrennungs-zone 27 → Wärme-Tauscher 3 → optionale Filter-einrichtung 4 → Gebläse 15 → Abgas-ausgang 41

seitlich

Sekundärluftdüsen 291

Ringkanal 50

von unten

Ventil 52 ← Sekundär-luftkanal 59 ← Sekundär-luft

Rezirkulations-eintritt 53 mit Kanal 531

Sekundär-mischkanal 55 ← Sekundär-mischkammer 552 ← Ventil 52 ← Sekundär-rezirkulations-kanal 57 ← Rezirkulations-eintritts-kanalteiler 532

Sekundärmischeinheit 5b

Öffnungen 256 des Drehrosts 25

Primär mischkanal 54 ← Primär-mischkammer 542 ← Ventil 52 ← Primär-rezirkulations-kanal 56

Ventil 52 ← Primär-luftkanal 58 ← Primär-luft

Primärmischeinheit 5a

## Fig. 16

Primär

oben

unten

Fig. 17

Fig. 18

Fig. 19

Primär

5221

52ss

oben

5225

5227

522

541

5224

5225

SS1

S

52s

unter den
Rost

SS2

5228

5224

54

52s

unten

Fig. 20

Sekundär

55a

52s

551

555

DF3

5226

5226

SS3

5224

5227

522

5222

5221

Fig. 21

am Rauchgasrezirkulationseintritt

Fig. 22

**Fig. 23**

Fig. 24

Fig. 25

Abgas-ausgang 41

Rezirkulations-eintritt 53 mit Kanal 531

Gebläse 15

optionale Filter-einrichtung 4

Wärme-Tauscher 3

Sekundär-luft

Sekundär-luftkanal 59

Sekundär-verbrennungs-zone 27

Ventil 52s

Primär-rezirkulations-kanal 56

Primär-luft

Primär-luftkanal 58

Ventil 52s

Ventil 52s

Primär-verbrennungs-zone 26

seitlich/über Rost

Sekundärluftdüsen 291

Ringkanal 50

Sekundär-temperierungskanal 55a

Sekundärluftzufuhr

Öffnungen 256 des Drehrosts 25

Primär-mischkammer 542

Primär mischkanal 54

Primärmischeinheit 5a

Falsch-luft

von unten/unter Rost

## Fig. 26

Heizungswasser
Rücklauf

Heizungswasser
Vorlauf

**Europäisches Patentamt**
**European Patent Office**
**Office européen des brevets**

# EUROPÄISCHER RECHERCHENBERICHT

**Nummer der Anmeldung**

EP 21 16 1799

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | EP 3 789 671 A1 (SL TECHNIK GMBH [AT]) 10. März 2021 (2021-03-10) * Spalte 14, Absatz 70 - Spalte 43, Absatz 251 * * Spalte 54, Absatz 327 - Spalte 55, Absatz 334 * * Abbildungen 1-4, 8-17 * ----- | 1-5,9, 10,13-15 | INV. F23B60/02 F23B80/02 F23H13/06 F23G5/24 F23J1/02 F23J15/06 F24B1/02 F24H8/00 F24H9/20 |
| X | WO 2019/145854 A1 (BELLINTANI CLAUDIO [IT]; SORRENTINO GIUSEPPE [IT]) 1. August 2019 (2019-08-01) * Seite 3, Zeile 28 - Seite 19, Zeile 2 * * Abbildung 1 * ----- | 1,13,15 | |
| X | EP 2 770 255 A2 (MAGGALE ANTON [AT]; RUSS EGON [AT]) 27. August 2014 (2014-08-27) * Spalte 1, Absatz 7 - Spalte 6, Absatz 41 * * Abbildungen 1-4 * ----- | 1,9-11, 13,15 | |

**RECHERCHIERTE SACHGEBIETE (IPC)**

F23B
F23G
F23H
F23J
F23M
F24C
B01D
F24B
F24H

Der vorliegende Recherchenbericht wurde für alle Patentansprüche erstellt

| Recherchenort | Abschlußdatum der Recherche | Prüfer |
|---|---|---|
| München | 8. Juli 2021 | Rudolf, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 1799

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2021

| Im Recherchenbericht angeführtes Patentdokument | Datum der Veröffentlichung | Mitglied(er) der Patentfamilie | Datum der Veröffentlichung |
|---|---|---|---|
| EP 3789671 A1 | 10-03-2021 | EP 3789670 A1 | 10-03-2021 |
| | | EP 3789671 A1 | 10-03-2021 |
| | | EP 3789685 A1 | 10-03-2021 |
| | | EP 3792551 A1 | 17-03-2021 |
| | | EP 3792552 A1 | 17-03-2021 |
| | | WO 2021043894 A1 | 11-03-2021 |
| | | WO 2021043895 A1 | 11-03-2021 |
| | | WO 2021043898 A1 | 11-03-2021 |
| | | WO 2021043903 A1 | 11-03-2021 |
| WO 2019145854 A1 | 01-08-2019 | KEINE | |
| EP 2770255 A2 | 27-08-2014 | AT 15458 U1 | 15-09-2017 |
| | | DK 2770255 T3 | 09-03-2020 |
| | | EP 2770255 A2 | 27-08-2014 |
| | | HU E048630 T2 | 28-08-2020 |
| | | PL 2770255 T3 | 18-05-2020 |

EPO FORM P0461

Für nähere Einzelheiten zu diesem Anhang : siehe Amtsblatt des Europäischen Patentamts, Nr.12/82